# EUROPÄISCHE PATENTANMELDUNG

(11) **EP 2 605 301 A2**
(43) Veröffentlichungstag der Anmeldung: **19.06.2013**
(21) Anmeldenummer: 13001235.4
(22) Anmeldetag: 14.01.2010
(51) Int. Cl.: H01M 2/02, H01M 2/10, H01M 2/20, H01M 2/22, H01M 2/24, H01M 2/34, H01M 10/04, H01M 10/50, B60L 11/18, H01M 10/02, H01M 10/42, H01M 10/052

(54) **Elektrochemische Energiespeichervorrichtung**

(30) Priorität: 19.01.2009 DE 102009005124
(62) Teilanmeldung aus: 10700500.1
(71) Anmelder: Li-Tec Battery GmbH, 01917 Kamenz (DE)
(72) Erfinder: Meintschel, Jens, 02994 Bernsdorf (DE); Brasse, Claudia, 40667 Meerbusch (DE); Schmidt, Torsten, 06188 Landsberg (DE); Hohenthanner, Claus-Rupert, 63457 Hanau (DE)
(74) Vertreter: Wallinger, Michael

(57) **Zusammenfassung**

Elektroenergie-Speichervorrichtung, welche eine Mehrzahl von Speicherzellen (2) flacher Form aufweist, wobei mehrere Speicherzellen (2) in einer Stapelrichtung zu einem Zellblock (1) gestapelt sind und durch eine Spannvorrichtung zwischen zwei Andruckplatten (18, 20) zusammengehalten werden, und wobei die Speicherzellen (2) innerhalb des Zellblocks (1) parallel und/oder in Reihe miteinander verschaltet sind und wobei jede Speicherzelle (2) in ihrem Randbereich (6) zwischen zwei Rahmenelementen (12, 14, 16) gehalten wird, wobei die Elektroenergie-Speichervorrichtung eine Zentriereinrichtung (34, 36, 38, 116, 121, 140), welche die relative Lage der Speicherzellen (2) und der Rahmenelemente (12, 14, 16) quer zur Stapelrichtung (S) festlegt, und eine Verpolungsschutzeinrichtung (95, 118, 120a, 120b, 138, 140a, 140b), welche eine Einbaurichtung der Speicherzellen (2) kodiert, aufweist, dadurch gekennzeichnet, dass die Verpolungsschutzeinrichtung (95, 118, 120a, 120b, 138, 140a, 140b) derart verwirklich ist, dass die Zentriereinrichtung (34, 36, 38, 116, 121, 140) unsymmetrisch ausgebildet ist.

## Beschreibung

Die vorliegende Erfindung betrifft eine elektrochemische Energiespeichervorrichtung nach dem Oberbegriff des Anspruchs 1.

Es sind Batterien (Primärspeicher) und Akkumulatoren (Sekundärspeicher) zur Speicherung elektrischer Energie bekannt, die aus einer oder mehreren Speicherzellen aufgebaut sind, in denen bei Anlegen eines Ladestroms elektrische Energie in einer elektrochemischen Ladereaktion zwischen einer Kathode und einer Anode in bzw. zwischen einem Elektrolyten in chemische Energie umgewandelt und somit gespeichert wird und in denen bei Anlegen eines elektrischen Verbrauchers chemische Energie in einer elektrochemischen Entladereaktion in elektrische Energie umwandelt wird. Dabei werden Primärspeicher in der Regel nur ein Mal aufgeladen und sind nach Entladung zu entsorgen, während Sekundärspeicher mehrere (von einigen 100 bis über 10.000 Zyklen) von Aufladung und Entladung erlauben. Es ist dabei anzumerken, dass auch Akkumulatoren bisweilen als Batterien bezeichnet werden, wie etwa Fahrzeugbatterien, die bekanntlich häufige Ladezyklen erleben.

In den letzten Jahren gewinnen Primär- und Sekundärspeicher auf der Basis von Lithiumverbindungen an Bedeutung. Diese weisen eine hohe Energiedichte und thermische Stabilität auf, liefern eine konstante Spannung bei geringer Selbstentladung und sind frei von dem sogenannten Memory-Effekt.

Es ist bekannt, Energiespeicher und insbesondere Lithium-Batterien und -Akkumulatoren in der Form dünner Platten herzustellen. Zum Funktionsprinzip einer Lithium-lonen-Zelle wird beispielhaft auf dieses Skript verwiesen.

Um die in der Praxis, etwa bei Automobilbatterien angestrebten Spannungen und Kapazitäten zu erzielen, ist es erforderlich, mehrere Zellen zu einem Stapel anzuordnen und ihre Stromableiter auf geeignete Weise zusammenzuschalten. Die Verschaltung der Einzelzellen erfolgt üblicherweise auf einer (in der Regel als "oben" definierten) Schmalseite der Zellen, aus der die Stromableiter abragen. In der WO 2008/128764 A1, der WO 2008/128769 A1, WO 2008/128770 A1 und der WO 2008/128771 A1 sind derartige Verschaltungsanordnungen gezeigt, wie es in Fig. 60 beispielhaft wiedergegeben ist. Bei einer solchen Anordnung sind die Stromableiter jeweils einzeln mit einem Stromableiter einer anderen Zelle zu verbinden. Dies Arbeit ist in der Regel nur von Hand ausführbar. Die Stromableiter und ihre Verbindungen liegen an der Oberseite frei. Bei der Anordnung der Einzelzellen in dem Stapel ist genau auf die polrichtige Lage derselben zueinander zu achten.

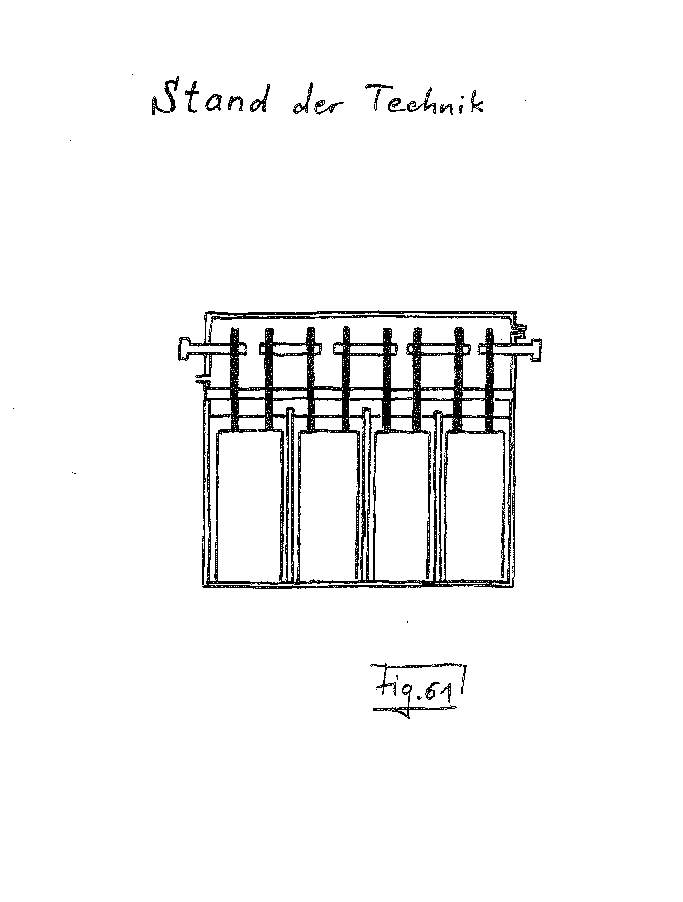

In der JP 07-282841 A ist eine ähnliche Anordnung gezeigt, bei der die Einzelzellen in ein Gehäuse eingesetzt sind, wie es in Fig. 61 wiedergegeben ist. Hier stehen die Einzelzellen lose in einzelnen Abteilungen eines Gehäuses, und die oben herausragenden Kontakte sind mittels Bolzen miteinander verbunden. Die ganze Anordnung ist dann mit einem Deckel von oben verschlossen.

Aus einer noch unveröffentlichten Entwicklung ist es bekannt, mehrere dünne, quaderförmige galvanische Zellen so zu einem oder mehreren Stapeln zusammenzufassen, dass ihre Seiten größter Ausdehnung einander zugewandt sind oder berühren, und so in einer Halteeinrichtung eingegossen sind. Eine solche Anordnung ist nicht mehr demontierbar.

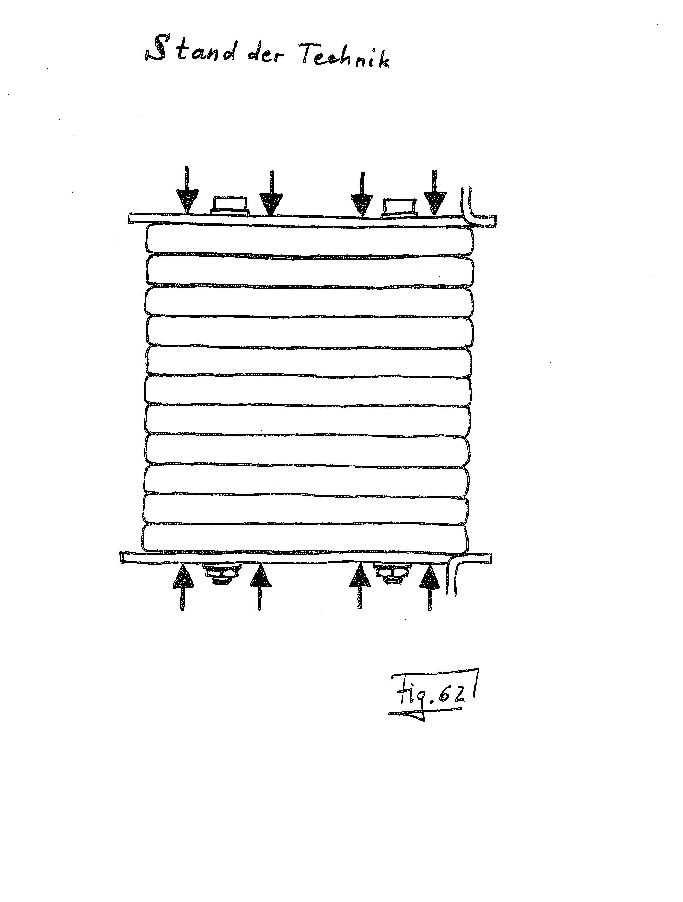

Es ist den Erfindern auch eine druckschriftlich nicht näher belegte Anordnung bekannt, bei der mehrere flache Zellen zwischen zwei Druckplatten gestapelt sind, wobei der Stapel durch Zugstäbe (Schraubbolzen bzw. Zylinderschrauben), die sich zwischen den Druckplatten erstrecken, zusammengehalten werden. Eine solche Anordnung ist schematisch in Fig. 62 gezeigt. Hierbei wird nicht unerheblicher Druck auf den im inneren Bereich liegenden aktiven Teil der Speicherzellen ausgeübt. Ferner bildet der Zellblock einen massiven Körper mit hoher Wärmekapazität und wenigen Wärmeabstrahlflächen.

Eine von der Anmelderin der vorliegenden Anmeldung am gleichen Tag eingereichte Patentanmeldung, die intern unter dem Aktenzeichen 105907 geführt wird, beschreibt den Aufbau von Flachzellen mit von gegenüberliegenden Schmalseiten seitlich abragenden, flächigen Stromableitern, deren Erstreckung entlang der jeweiligen Schmalseite größer als die Hälfte der Länge dieser Schmalseite ist. Diese Zellen sind an den Stromableitern kontaktierbar und gleichzeitig lagestabil montierbar. Der Offenbarungsgehalt dieser Patentanmeldung wird hiermit insoweit durch Bezugnahme eingeschlossen, ohne dass die Anwendung der vorliegenden Erfindung auf die dort beschriebenen Einzelheiten beschränkt ist.

Es besteht der Wunsch nach einer elektrochemischen Energiespeichervorrichtung, die einen Stapel von flachen Speicherzellen aufweist, welche die Nachteile des Stands der Technik vermeidet. Darüber hinaus besteht grundsätzlich und insbesondere bei Fahrzeugen der Wunsch nach weiteren Raumeinsparungen, also nach einer Verkleinerung der Gesamtbatterieanordnung. Ferner ist im Hinblick auf den erhöhten Speicherbedarf insbesondere bei elektrischen oder hybrid betriebenen Fahrzeugen eine Anpassung an das bestehende Platzangebot und die geometrischen Verhältnisse gewünscht sowie eine Anpassbarkeit an vielfältige Spannungs- und Kapazitätsanforderungen.

Es ist daher eine Aufgabe der vorliegenden Erfindung, eine elektrochemische Energiespeichervorrichtung vorstehend genannter Art zu schaffen, die kompakt und robust, leicht und sicher zu montieren ist, deren Einzelzellen geringer mechanischer Belastung ausgesetzt sind und deren Temperatur einfach zu regulieren ist, und die verschiedenen Anforderungen flexibel angepasst werden kann. Die Aufgabe wird durch die Merkmale der unabhängigen Patentansprüche gelöst. Vorteilhafte Weiterbildungen der Erfindung bilden den Gegenstand der Unteransprüche.

Eine Elektroenergie-Speichervorrichtung nach einem Gesichtspunkt der Erfindung weist eine Mehrzahl von Speicherzellen flacher Form auf, wobei mehrere Speicherzellen in einer Stapelrichtung zu einem Zellblock gestapelt sind und durch eine Spannvorrichtung zwischen zwei Andruckplatten zusammengehalten werden, und wobei die Speicherzellen innerhalb des Zellblocks parallel und/oder in Reihe miteinander verschaltet sind. Jede Speicherzelle wird in ihrem Randbereich zwischen zwei Rahmenelementen gehalten.

Auf diese Weise wird eine definierte Druckzone erhalten, in welcher die Zellen gehalten werden.

Vorzugsweise weist jede Speicherzelle einen aktiven Teil auf, in welchem eine zur Aufnahme und Abgabe elektrischer Energie mittels einer elektrochemischen Reaktion ausgelegte und angepasste Struktur angeordnet ist, und umgibt der Randbereich den aktiven Teil. So wird der Spanndruck und hierdurch mögliche Beeinträchtigungen der Funktion von dem aktiven Teil ferngehalten.

Vorzugsweise weist jede Speicherzelle flächige Kontaktabschnitte auf, die in dem Randbereich von zwei gegenüberliegenden Schmalseiten der Speicherzelle quer zur Stapelrichtung abragen. Auf diese Weise sind die Kontaktabschnitte vergleichsweise robust aufgebaut und können zum Halten der Zelle ausgenutzt werden.

Die Erfindung ist besonders vorteilhaft auf elektrochemische Zellen, wie etwa galvanische Sekundärzellen anwendbar. Vorzugsweise ist dabei der aktive Teil von einer Folie, die im Randbereich, insbesondere wenigstens an zwei gegenüberliegenden Schmalseiten der Speicherzelle, wenigstens eine Naht aufweist, dicht umschlossen, wobei der von der Folie umschlossene Bereich vorzugsweise evakuiert ist.

Vorzugsweise sind die Kontaktabschnitte jeweils Teil von Stromableitern, die durch die Nähte an den zwei gegenüberliegenden Schmalseiten hindurch reichen und im Inneren mit dem aktiven Teil in Verbindung stehen. Da die Kontaktabschnitte mit dem aktiven Teil, der den schwersten Teil einer Zelle ausmacht, verbunden sind, kann eine mechanische Belastung und die Wahrscheinlichkeit von Beschädigungen einer Umhüllung gering gehalten werden.

Dies wird vorteilhaft dadurch erreicht, dass die Kontaktabschnitte Druckflächen für den durch die Spanneinrichtung über die Rahmenelemente aufgebrachten Druck bilden.

Der aktive Teil weist in der Regel eine größere Dicke als der Randbereich auf. Wenn die Rahmenelemente eine Dicke derart aufweisen, dass zwischen den aktiven Teilen benachbarter Speicherzellen ein freier Raum vorhanden ist, kann dieser freie Raum für eine Temperierung mit einem Wärmeträger verwendet werden.

Wenn z.B. die Rahmenelemente jeweils wenigstens eine Öffnung quer zur Stapelrichtung aufweisen, die den freien Raum zwischen benachbarten Speicherzellen mit einem Außenraum verbindet, kann ein Wärmeträger durch diese Öffnungen strömen bzw. zirkulieren und einen Kühlkreislauf verwirklichen. Besonders wirkungsvoll wird dies erreicht, indem mehrere Öffnungen in quer zur Stapelrichtung gegenüberliegenden Abschnitten der Rahmenelemente angeordnet sind. Insbesondere kann durch den Raum zwischen zwei Speicherzellen ein Kühlmedium strömen, wobei das Kühlmedium insbesondere durch die Öffnungen in den Rahmenelementen ein- und austritt.

Das Kühlmedium ist zur Verbesserung der Sicherheit vorzugsweise nicht brennbar oder schwer entflammbar. So kann z.B. Luft, deionisiertes Wasser oder Öl oder dergleichen als Kühlmedium verwendet werden.

Ein besonders wirksamer Wärmeübergang ergibt sich, wenn das Kühlmedium beim Durchströmen des Raums zwischen zwei Speicherzellen einen Phasenübergang erfährt.

Bevorzugt sind die Andruckplatten rahmenförmig ausgebildet. So kann bei geringstem Gewicht der Druck der Spanneinrichtung gleichmäßig über die Rahmenelemente in den Zellstapel eingebracht werden.

Eine geeignete Spanneinrichtung weist mehrere, insbesondere vier oder sechs, Zugstäbe. Diese können sich in besonders platzsparender Weise durch in Stapelrichtung verlaufende Bohrungen in den Andruckplatten, den Rahmenelementen und den Randbereichen der Speicherzellen erstrecken.

Wenn sich die Zugstäbe durch in Stapelrichtung verlaufende Bohrungen in den Kontaktabschnitten der Speicherzellen erstrecken, kann der Druck besonders effektiv auf die Kontaktabschnitte der Speicherzellen ausgeübt werden. In diesem Fall ist es insbesondere vorteilhaft, wenn die elektrische Verbindung der Speicherzellen mittels Kraftschluss über die Spannvorrichtung erfolgt.

Insbesondere ist dort, wo eine elektrische Verbindung zwischen Kontaktabschnitten benachbarter Speicherzellen herzustellen ist, ein Kontaktverbindungselement aus einem elektrisch leitenden Material angeordnet, welches mittels des über die Spanneinrichtung ausgeübten Spanndrucks in Stapelrichtung an beide Kontaktabschnitte angedrückt wird. Das Kontaktverbindungselement kann aus einem Metall oder einer Metall-Legierung, vorzugsweise Kupfer, Messing, Bronze bestehen und besonders bevorzugt vergoldet oder versilbert sein, um den Übergangswiderstand zwischen Kontakten zu verringern.

Eine kompakte Bauform und einfache Montage ergibt sich, wenn das Kontaktverbindungselement in ein Rahmenelement integriert ist. Das ist insbesondere der Fall, wenn das Kontaktverbindungselement eine Mehrzahl von zylindrischen Körpern ist, die in die Durchgangsbohrungen in dem Rahmenelement eingesetzt sind.

Wenn die Rahmenelemente zwischen Bereichen, in welchen Kontaktverbindungselemente eingesetzt sind, eine verringerte Dicke aufweisen, ergibt sich eine Konzentration des Anpressdrucks auf die Stirnflächen der Kontaktverbindungselemente und eine besonders effektive Kontaktierung. Zudem können die Bereiche verringerter Dicke Öffnungen für eine Zirkulation des Wärmeträgers bilden.

Das Kontaktverbindungselement kann etwa eine Mehrzahl von Hülsen sein, durch welche hindurch jeweils einer der Zugstäbe verläuft. Alternativ kann das Kontaktverbindungselement eine längliche Grundform von im Wesentlichen rechteckigem Querschnitt aufweisen, wobei das Kontaktverbindungselement in eine Aussparung in dem Rahmenelement zwischen den zu verbindenden Kontaktabschnitten der zwei Speicherzellen im Wesentlichen deren Verlauf folgend eingesetzt ist, und wobei parallele Außenflächen des Kontaktverbindungselements die Kontaktabschnitte der Speicherzellen kontaktieren.

Im letzteren Fall kann das Kontaktverbindungselement Verdickungen in Stapelrichtung aufweisen, deren äußere Endflächen die Kontaktabschnitte der Speicherzellen kontaktieren. Hierdurch ergibt sich wiederum ein hoher Anpress- und Kontaktierungsdruck und die bereits erwähnten Öffnungen für eine Zirkulation des Wärmeträgers.

Wenn das Kontaktverbindungselement wenigstens sich eine in Längsrichtung erstreckende Kühlrippe aufweist, die in das Innere der Vorrichtung weist, kann eine wirksame Wärmeübertragung von den Stromableitern an das Wärmemedium erfolgen.

Vorteilhafterweise sind dort sind, wo keine elektrische Verbindung zwischen zwei Kontaktabschnitten herzustellen ist, zwischen den Kontaktabschnitten Abstandselemente aus elektrisch isolierendem Material in Aussparungen in den Rahmenelementen eingesetzt, die vorzugsweise im Wesentlichen die Form des Kontaktverbindungselements aufweist.

Das Kontaktverbindungselement weist vorzugsweise wenigstens zwei Durchgangsbohrungen auf, durch welche hindurch jeweils einer der Zugstäbe verläuft. Dabei sind die Zugstäbe zur Vermeidung eines Kurzschlusses vorzugsweise gegenüber dem Kontaktverbindungselement und dem Kontaktabschnitt elektrisch isoliert. Dies kann etwa dadurch bewerkstelligt werden, dass die Zugstäbe eine elektrisch isolierende Beschichtung an den Schaftflächen aufweisen, oder dass die Zugstäbe jeweils Hülsen aus elektrisch isolierendem Material tragen.

Eine Ausführungsform zeichnet sich dadurch aus, dass in einem freien Raum zwischen benachbarten Speicherzellen Federelemente angeordnet sind, welche die Speicherzellen in Stapelrichtung elastisch gegeneinander abstützen. Die die Federelemente können z.B. flächige Schaumstoffelemente, die auf einer oder beiden Flachseiten der Speicherzellen fest angebracht sind. Eine solche Anordnung reduziert Schwingen der Zellen im Einsatz und dadurch hevorgerufene mechanische Belastungen auf die Stellen, an welchen die Zellen gehalten werden.

Um unerwünschte Kontakte zwischen stromführenden Teilen zu vermeiden, ist es erforderlich, die Bauteile bei der Montage in radialer Richtung exakt zueinander zu positionieren. Dies wird durch eine Zentriereinrichtung erleichtert, die die relative Lage der Speicherzellen und der Rahmenelemente quer zur Stapelrichtung festlegt. Die Zentriereinrichtung kann in Stirnflächen der Rahmenelemente angeordnete Vorsprünge umfassen, die in passende Vertiefungen im Randbereich der Speicherzellen eingreifen. Die Vorsprünge können Stifte, Noppen, Nasen oder dergleichen sein, wobei die Vertiefungen in den Kontaktbereichen oder in den nicht leitenden Abschnitten der Randbereiche angeordnet sein können. Die Vertiefungen können Durchgangsbohrungen oder Ausstanzungen sein.

In alternativen Bauformen kann die Zentriereinrichtung Prägung im Randbereich der Speicherzellen umfassen, die in ein passendes Relief der Rahmenelemente greifen. Die Zentriereinrichtung kann auch derart verwirklicht sein, dass die Zugstäbe auf Passung durch Bohrungen im Randbereich der Speicherzellen mit Ausnahme der Kontaktbereiche verlaufen, dass sich die Speicherzellen, insbesondere mit dem dickeren aktiven Abschnitt, quer zur Stapelrichtung gegen die Rahmenelemente abstützen, oder dass zwischen den Rahmenelementen und den Speicherzellen ein elastisches Element, insbesondere Schaumstoff, zwischengeschaltet ist, welches vorzugsweise direkt auf die Rahmenelemente gespritzt ist, um ein Verrutschen während des Zusammenbaus zu vermeiden.

Ferner ist es wichtig, dass die Speicherzellen stets in der Richtigen Polrichtung eingebaut werden. Um hier Fehler zu vermeiden, kann eine Verpolungsschutzeinrichtung vorgesehen sein, welche eine Einbaurichtung der Speicherzellen kodiert.

Die Verpolungsschutzeinrichtung kann derart verwirklich ist, dass die Zentriereinrichtung unsymmetrisch ausgebildet ist. So können etwa die Vorsprünge und Vertiefungen bzw. die Prägungen und Gegenreliefs auf der Seite eines Kontaktabschnitts in größerem Abstand angeordnet oder in anderer Form oder Größe ausgebildet sein als auf der Seite des anderen Kontaktabschnitts. So können die Bauelemente der Zentrierungseinrichtungt zugleich die Aufgabe des Verpolungschutzes übernehmen, und es sind keine zusätzlichen Maßnahmen oder Bauelemente hierfür vorzusehen.

Die Verpolungsschutzeinrichtung kann alternativ derart verwirklicht sein, dass die Federelemente auf beiden Flachseiten der Speicherzellen und je nach gewünschter Polrichtung mehrerer Speicherzellen zueinander auf der ein und dem selben Kontaktabschnitt zugeordneten Hälfte der Flachseiten oder auf unterschiedlichen Kontaktabschnitten zugeordneten Hälften der Flachseiten angeordnet sind. So können die Federelemente zugleich die Aufgabe des Verpolungschutzes übernehmen, und es sind keine zusätzlichen Maßnahmen oder Bauelemente hierfür vorzusehen.

In einer weiteren Ausführungsform können die Rahmenelemente wenigstens einen an jeweils gleicher Stelle angeordneten, randseitigen Einschnitt aufweisen, wobei die Einschnitte mehrerer Rahmenelemente im zusammengebauten Zustand einen nach außen offenen Kanal von im Wesentlichen U-förmigem Querschnitt bilden, der sich in Stapelrichtung erstreckt. Ein solcher Kanal kann vorteilhaft und platzsparend zur Führung von Leitungen verwendet werden. Über Bohrungen, die jeweils am Grund des Einschnitts senkrecht zur Erstreckungsrichtung des Kanals eine Bohrung eingebracht sind, können Anschlusselemente etwa für Fühler oder Thermoelemente oder Steuerelemente angebracht und angeschlossen werden. Dabei ist es vorteilhaft, wenn der Kanal über eine in wenigstens einer der Andruckplatten angeordnete Durchbohrung oder Ausstanzung oder Einkerbungen stirnseitig zugänglich ist.

Die Speicherzellen können entweder in Reihe geschaltet sein, oder es kann wenigstens ein Teil der Speicherzellen parallel geschaltet sein. Insbesondere können mehrere parallel geschaltete Speicherzellen jeweils eine Gruppe bilden und mehrere aus einer jeweils gleichen Anzahl von Speicherzellen bestehende Gruppen in Reihe geschaltet sind. Durch geeignete Kombination und Anzahl von Speicherzellen und Gruppen derselben ist im Rahmen des zur Verfügung stehenden Raums nahezu jede beliebige Spannung und Kapazität als vielfaches der Zellenspannung und -kapazität darstellbar.

Die Andruckplatten können aus einem elektrisch leitenden Material bestehen und über ein vorstehend genannten Kontaktverbindungselement mit einem Kontaktabschnitt einer Speicherzelle elektrisch verbunden sein. So können die Andruckplatten als elektrische Pole dienen. Wenn des Weiteren die Andruckplatten Anschlusselemente aufweisen, die zum Verbinden mit einer Anschlussleitung oder einem Gegenstück eingerichtet sind, ist eine Weiterverschaltung der Zellblöcke besonders einfach. So können z.B. die Anschlusselemente Laschen, vorzugsweise mit Durchgangsbohrungen versehen oder Stehbolzen tragend, sein, die seitlich quer zur Stapelrichtung oder stirnseitig in Stapelrichtung abragen. Zur Vermeidung von Kurzschlüssen ist es in diesem Fall vorteilhaft, wenn die Zugstäbe gegenüber den Andruckplatten elektrisch isoliert sind.

In einer alternativen Ausführungsform kann es vorgesehen sein, dass die Zugstäbe gegenüber einer der Andruckplatten elektrisch isoliert sind, während sie mit der anderen Andruckplatte elektrisch leitend verbunden sind und wenigstens auf der Seite der isolierten Andruckplatte Anschlusselemente aufweisen, die vorzugsweise mit den Zugstäben mit verschraubt oder integral ausgebildet sind. So können die Zugstäbe, die, gegen die anderen Bauelemente ohnehin isoliert, durch den Zellblock hindurch geführt sind, als einer der Pole dienen, sodass auf ein und der selben Stirnseite eines Zellblocks beide Pole vorliegen. Dies kann die Verschaltung und den Anschluss der Zellblöcke vereinfachen.

Dabei ist es vorteilhaft, wenn die Zugstäbe auf wenigstens einer Seite Anschlusselemente aufweisen, die vorzugsweise mit den Zugstäben mit verschraubt oder integral ausgebildet sind.

Die Anschlusselemente der Zugstäbe auf der wenigstens einen Seite können zum zwecke eines Potentialausgleichs untereinander elektrisch verbunden sein.

Eine besonders einfache und selbstzentrierende Konstruktion ergibt sich, wenn die Zugstäbe in eine der Andruckplatte direkt eingeschraubt sind.

Vorzugsweise definiert die Gesamtheit der Rahmenelemente und Andruckplatten eine im Wesentlichen prismatische Kontur, welche die darin angeordneten Speicherzellen vollständig umschließt. Es ergibt sich so ein geschlossener Körper, der einfach zu handhaben ist. Auch ergeben sich Vorteile hinsichtlich der Möglichkeiten, einen Kühlkreislauf mit einem Wärmeträger auszubilden.

Ferner ist es vorteilhaft, wenn die beiden Rahmenelemente an den stirnseitigen Enden eines Zellblocks Querverstrebungen reduzierter Dicke aufweisen, welche den durch das jeweilige Rahmenelement freigelassenen Raum überspannen Hierdurch ergibt sich eine Versteifung dieses endseitigen Rahmenelements und darüber hinaus eine definierte freiliegende Oberfläche der jeweils endseitigen Speicherzelle.

Die Elektroenergie-Speichervorrichtung weist vorzugsweise eine Steuereinheit zur Überwachung und Balancing der Speicherzellen auf. Diese ist besonders bevorzugt auf dem Zellblock, vorzugsweise an einer der vorstehend beschriebenen Querverstrebungen, angebracht.

Für die Führung von Leitungen, die mit der Steuereinheit sind, kann vorteilhaft der durch die vorstehend beschriebenen Einschnitte gebildete Kanal verwendet werden.

Eine vorteilhafte Modularität und Flexibilität ergibt sich, wenn mehrere Zellblöcke in Reihe und/oder parallel miteinander verbunden sind.

Wenn zudem die Zellblöcke eine unterschiedliche Anzahl von Speicherzellen aufweisen, kann der zur Verfügung stehende Einbauraum besonders effektiv ausgenutzt werden. Zu diesem Zweck ist es vorteilhaft, wenn die Anzahl von Speicherzellen in den Zellblöcken anhand der Geometrie eines verfügbaren Einbauraums ausgewählt ist. Die Zellblöcke können in jeweiligen Stapelrichtungen hintereinander und/oder bezüglich der jeweiligen Stapelrichtungen nebeneinander und/oder übereinander und/oder mit einem insbesondere rechten Winkel der jeweiligen Stapelrichtungen zueinander angeordnet sein und über ihre Anschlusselemente miteinander verschaltet sein.

Ein Gehäuse kann die Gesamtanordnung aufnehmen. Dabei können die vorstehend beschriebenen Anschlusselemente zumindest zum Teil vorteilhaft zur Befestigung der Zellblöcke an dem Gehäuse genutzt werden.

Eine Elektroenergie-Speichervorrichtung eines weiteren Gesichtspunkts der Erfindung weist eine Mehrzahl von Speicherzellen flacher Form auf, wobei mehrere Speicherzellen in einer Stapelrichtung zu einem Zellblock gestapelt sind und durch eine Spannvorrichtung zusammengehalten werden, und wobei die Speicherzellen innerhalb des Zellblocks parallel und/oder in Reihe miteinander verschaltet sind. Bei dieser Elektroenergie-Speichervorrichtung weist jede Speicherzelle in ihrem Randbereich Stromableiter auf, und erfolgt eine elektrische Kontaktierung zwischen Stromableitern aufeinanderfolgender Speicherzellen mittels Kraftschluss über die Spannvorrichtung.

Hierzu ist vorzugsweise zwischen Stromableitern in Stapelrichtung ein Druck übertragendes Bauelement angeordnet, welches entweder aus einem elektrisch leitenden Material oder aus einem elektrisch isolierenden Material besteht, und auf welches die Kraft der Spannvorrichtung wirkt.

Insbesondere werden die Speicherzellen durch die Druck übertragenden Bauelemente gehalten.

Die in den Ansprüchen genannten und weitere Merkmale, Aufgaben und Vorteile der vorliegenden Erfindung werden aus der nachstehenden Beschreibung bevorzugter Ausführungsformen deutlicher ersichtlich werden, die unter Bezugnahme auf die beigefügten Zeichnungen angefertigt wurde.

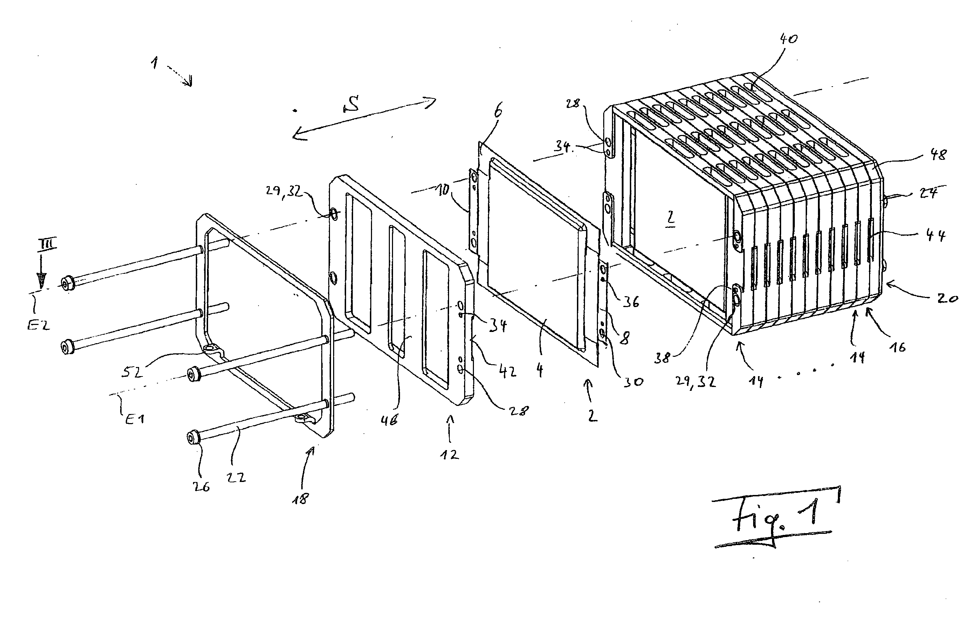

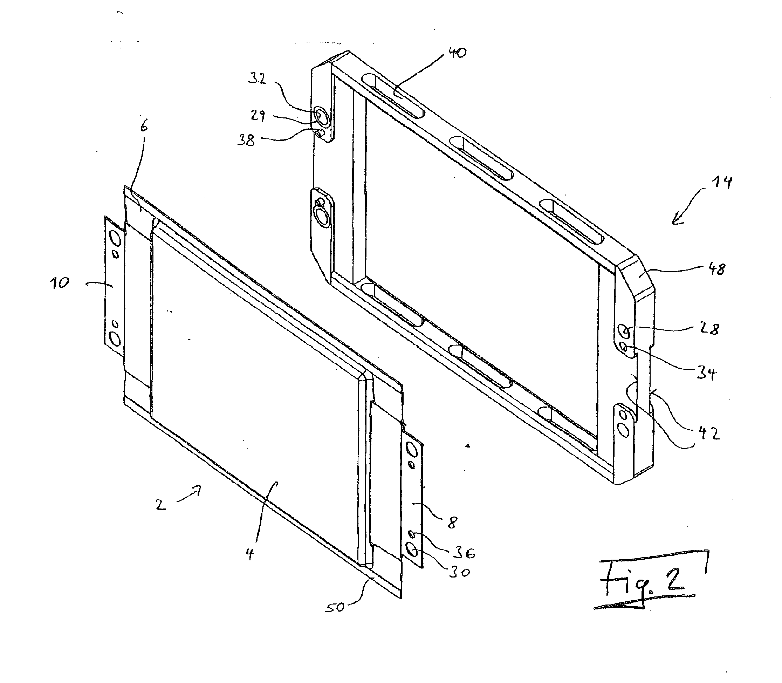

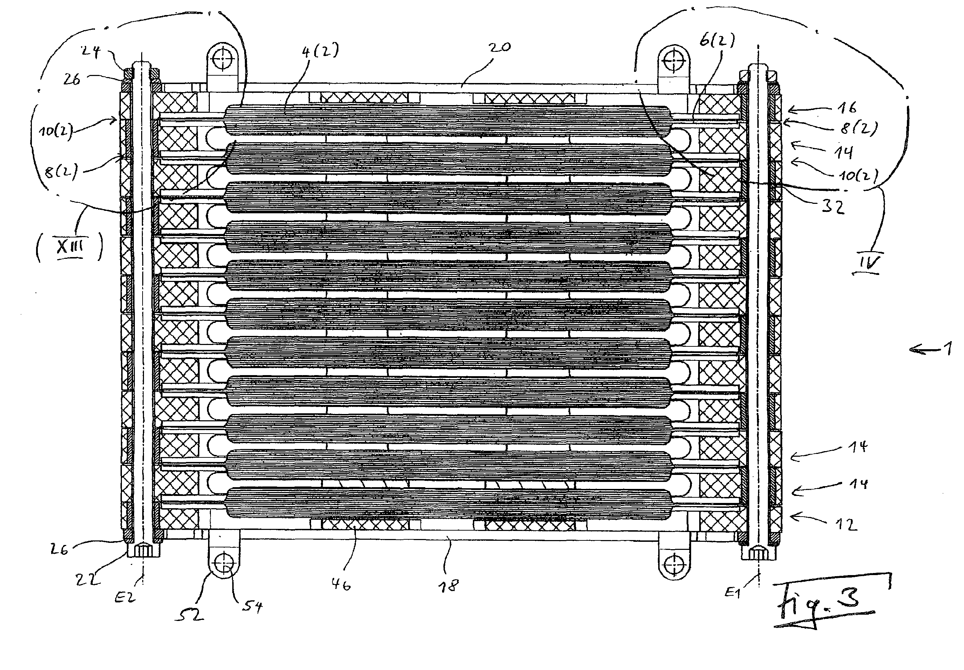

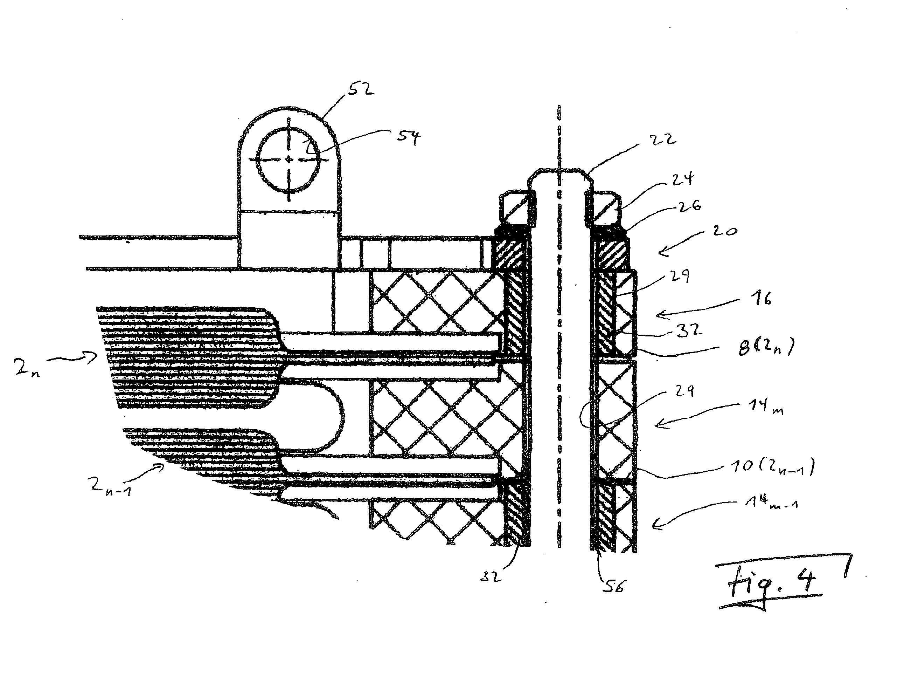

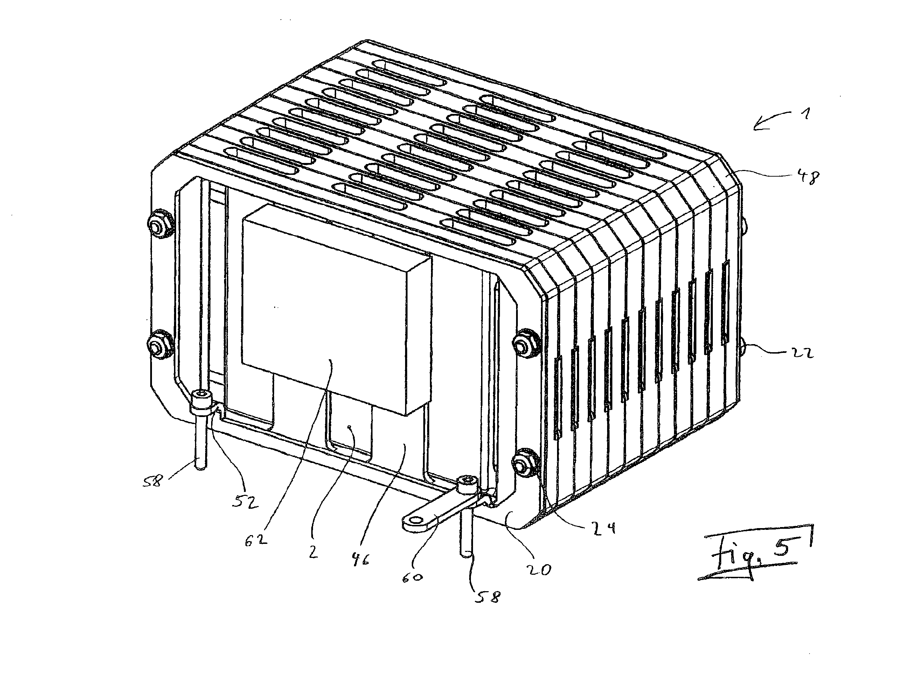

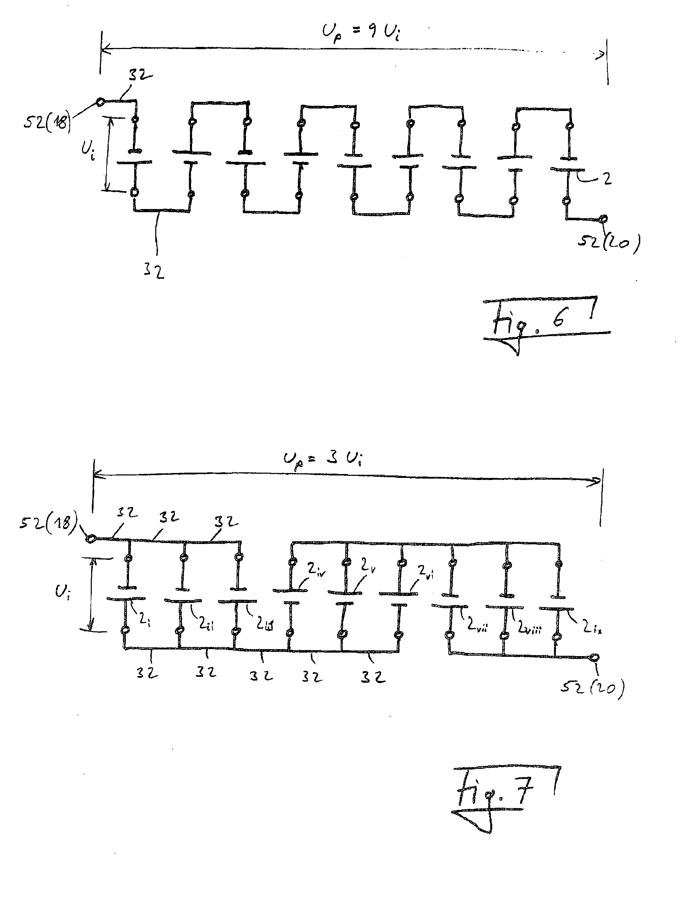

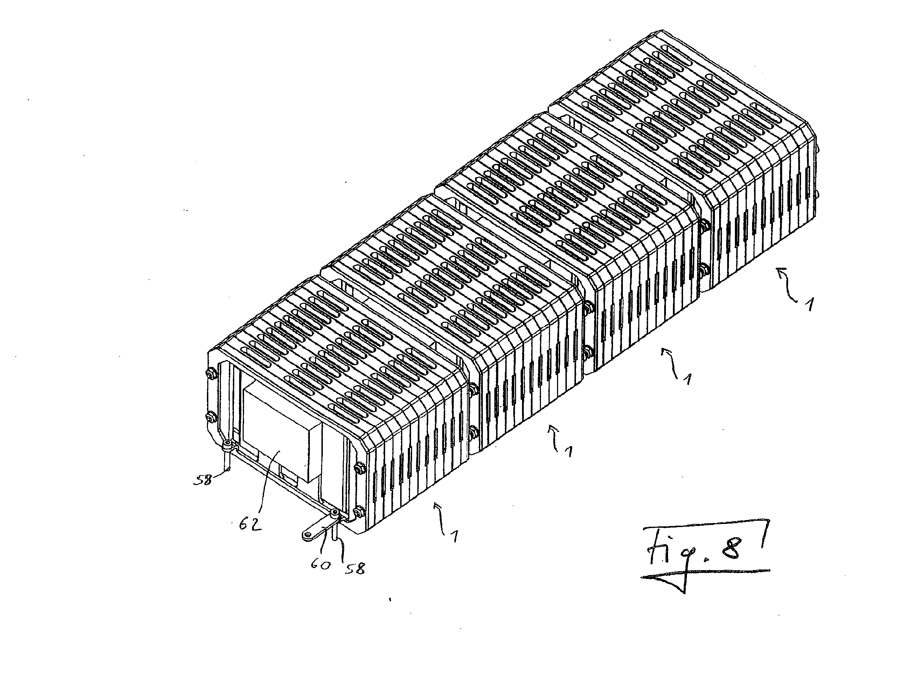

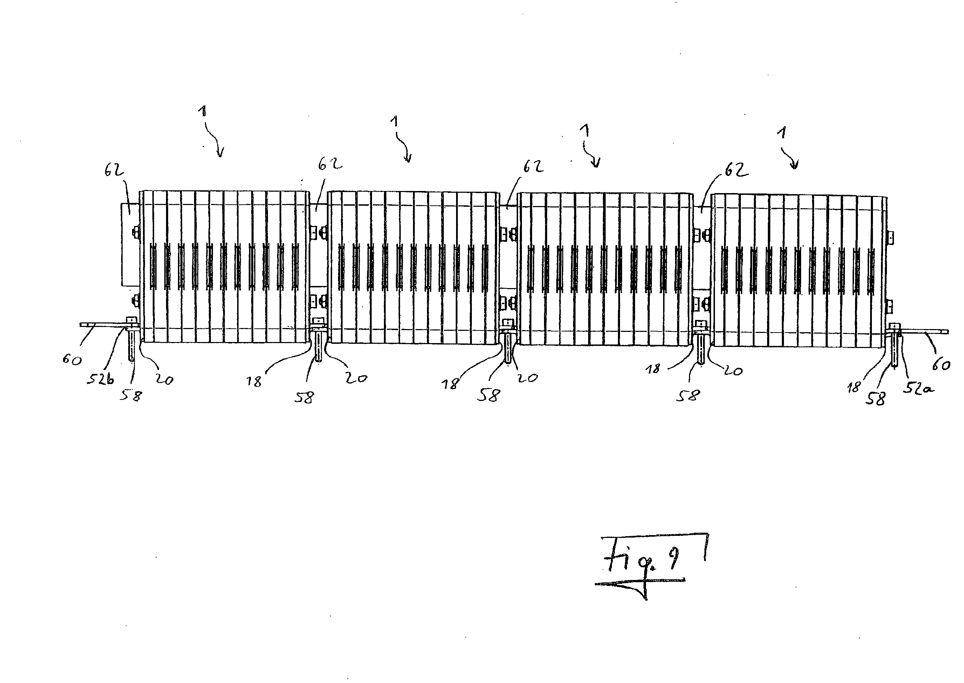

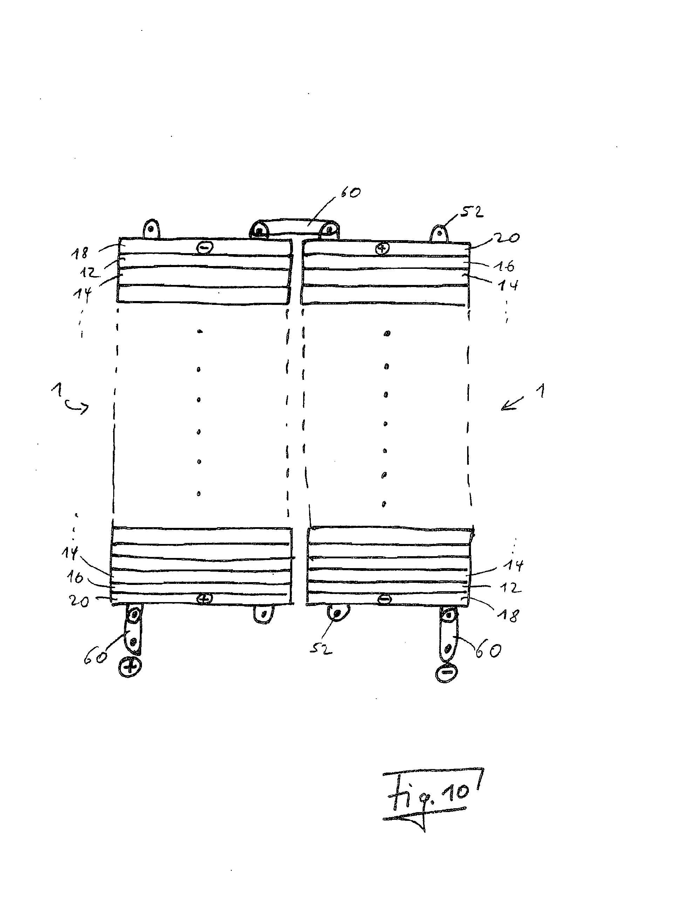

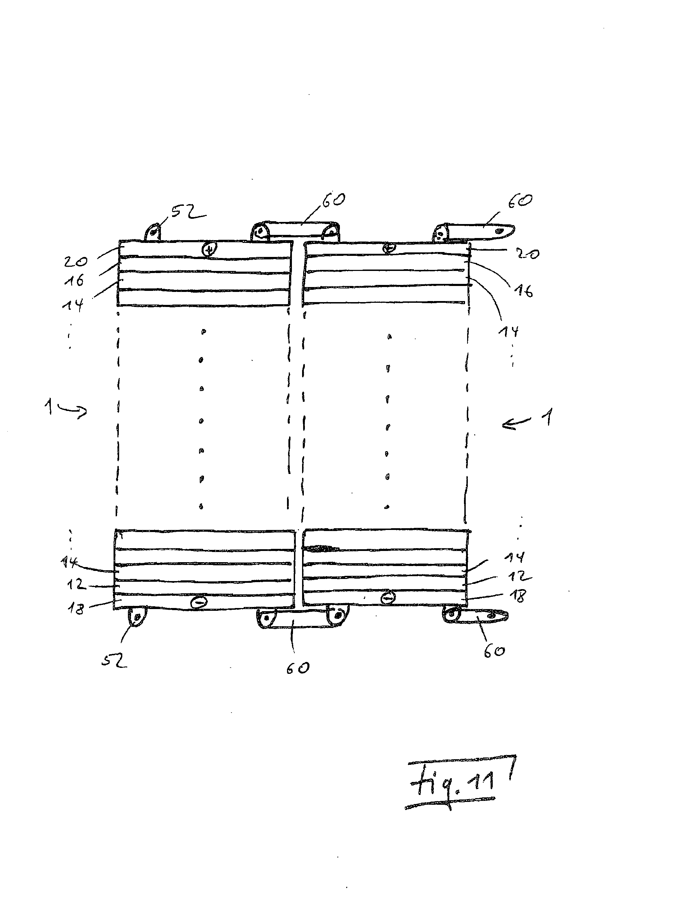

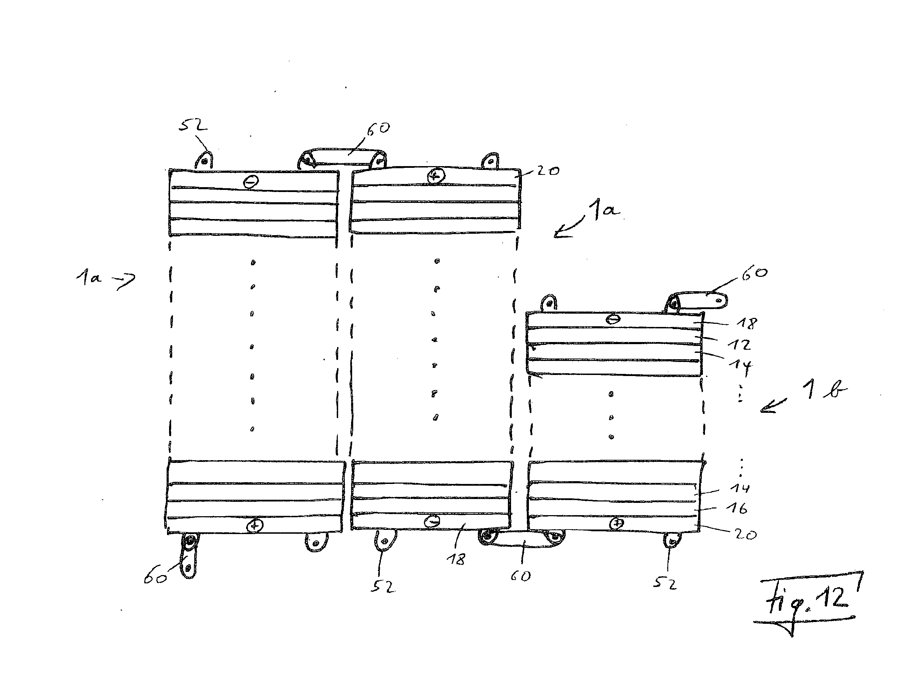

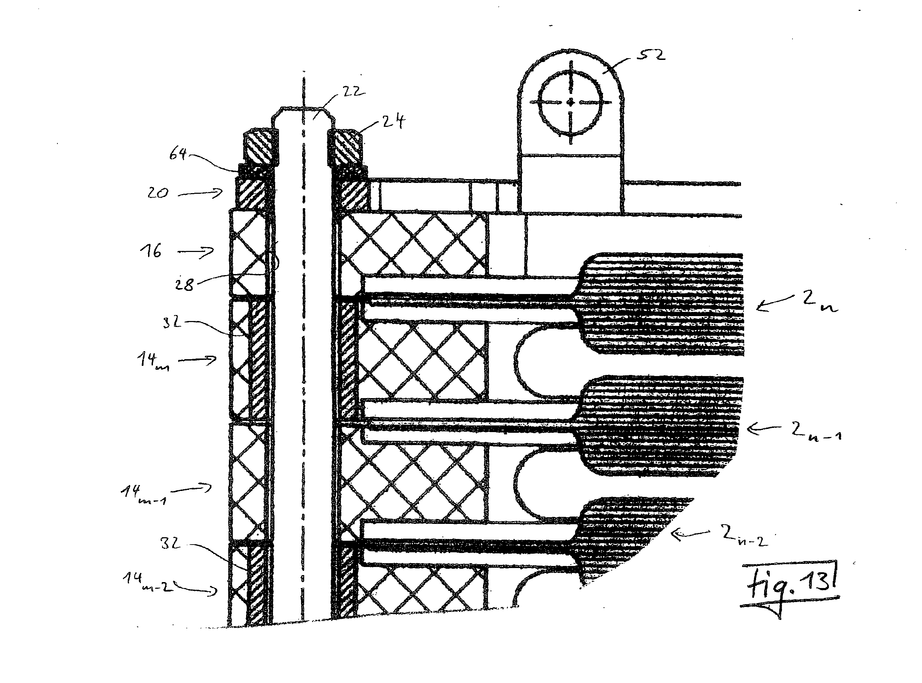

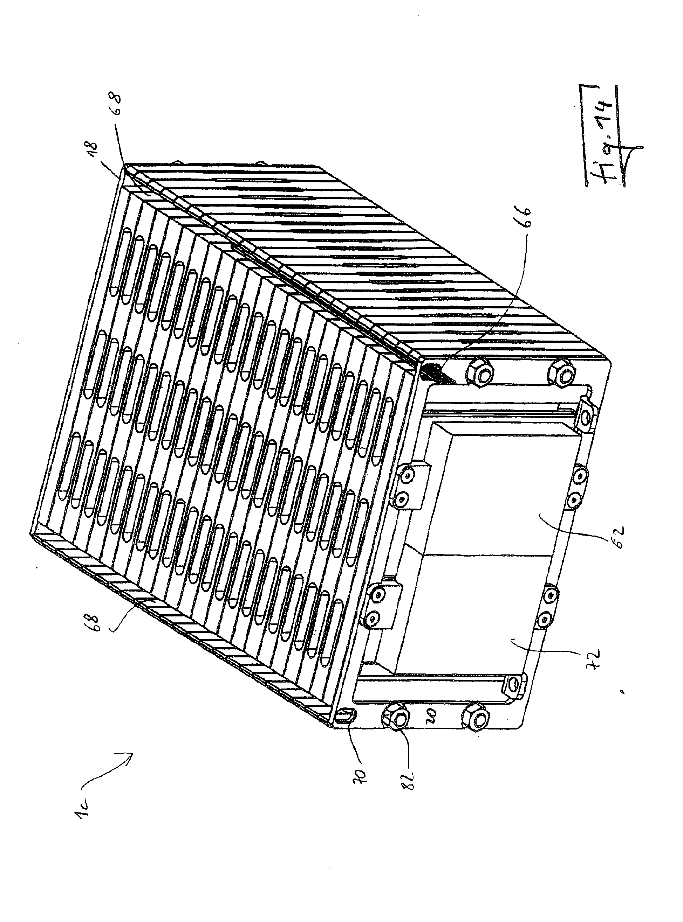

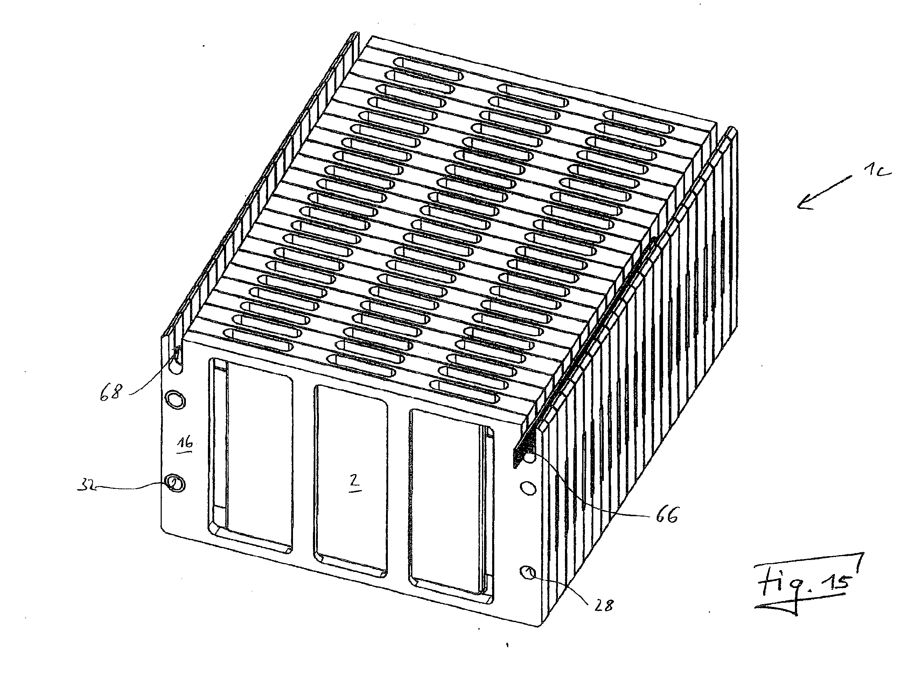

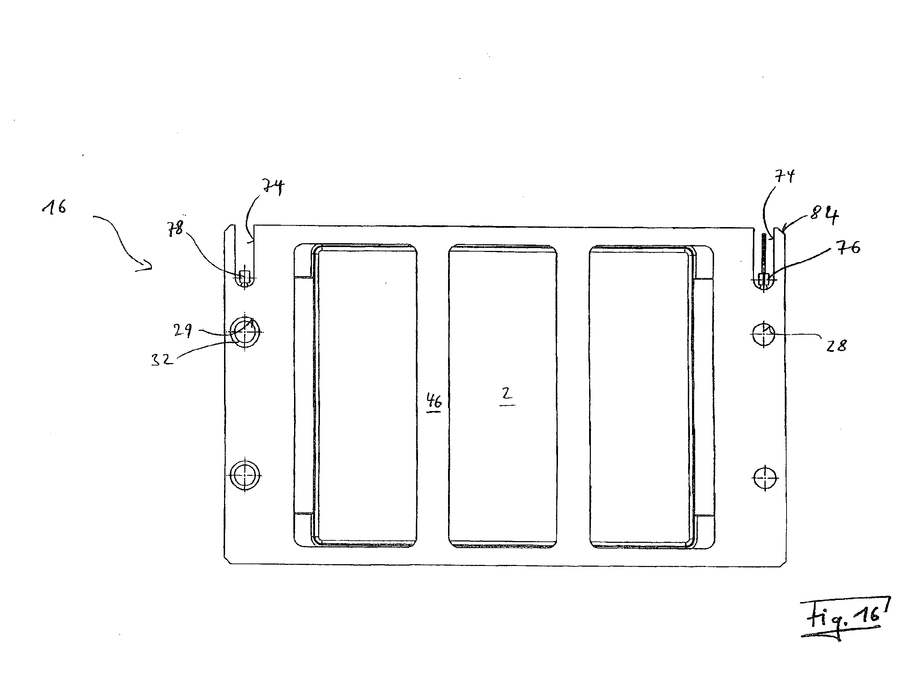

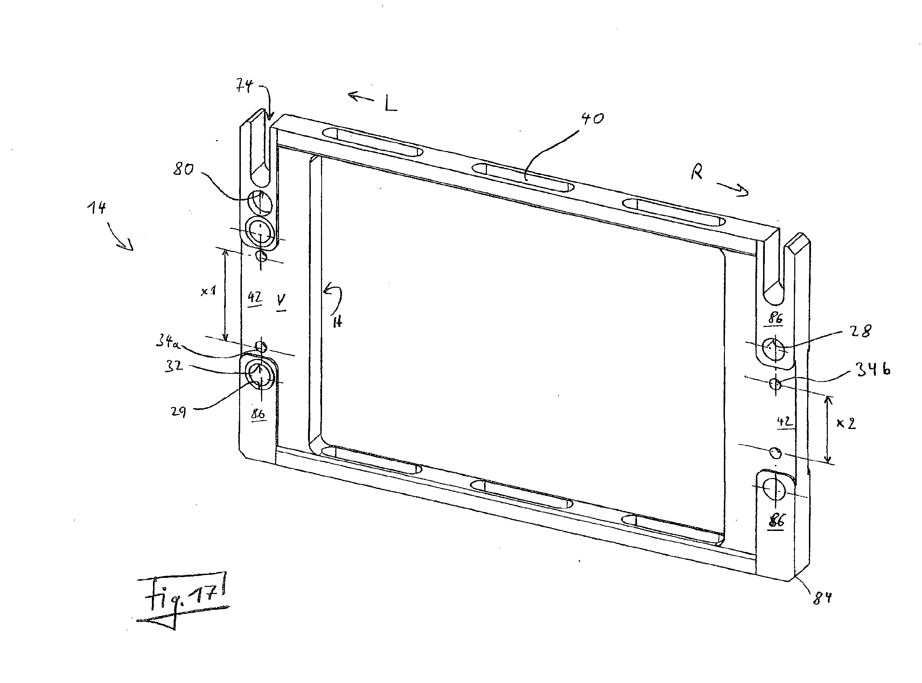

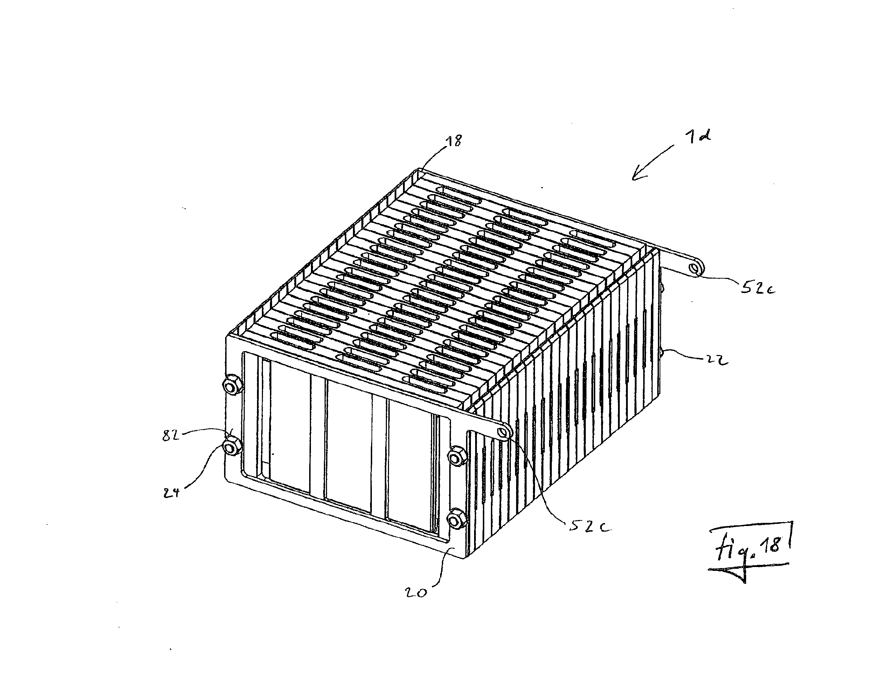

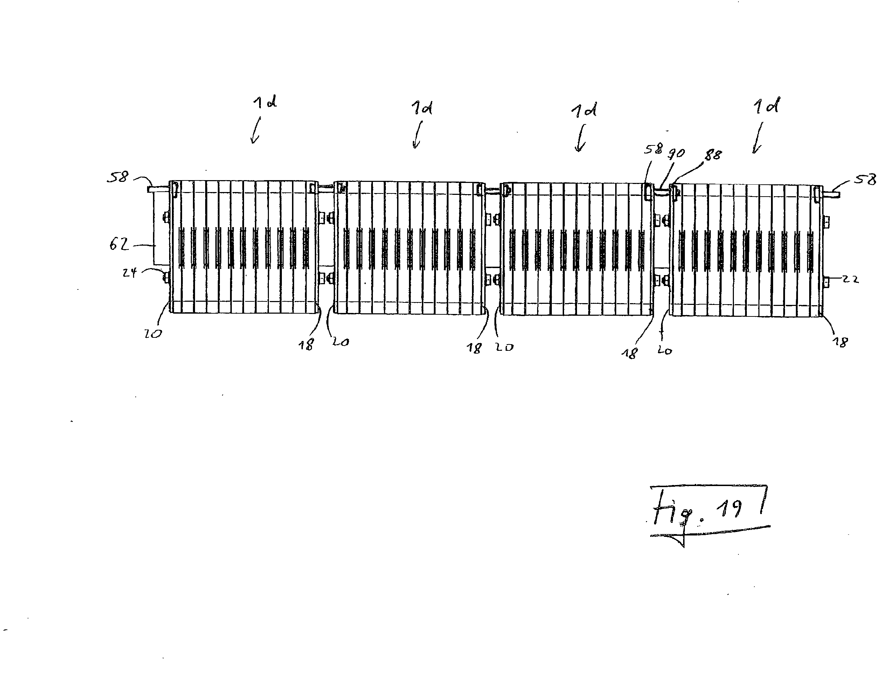

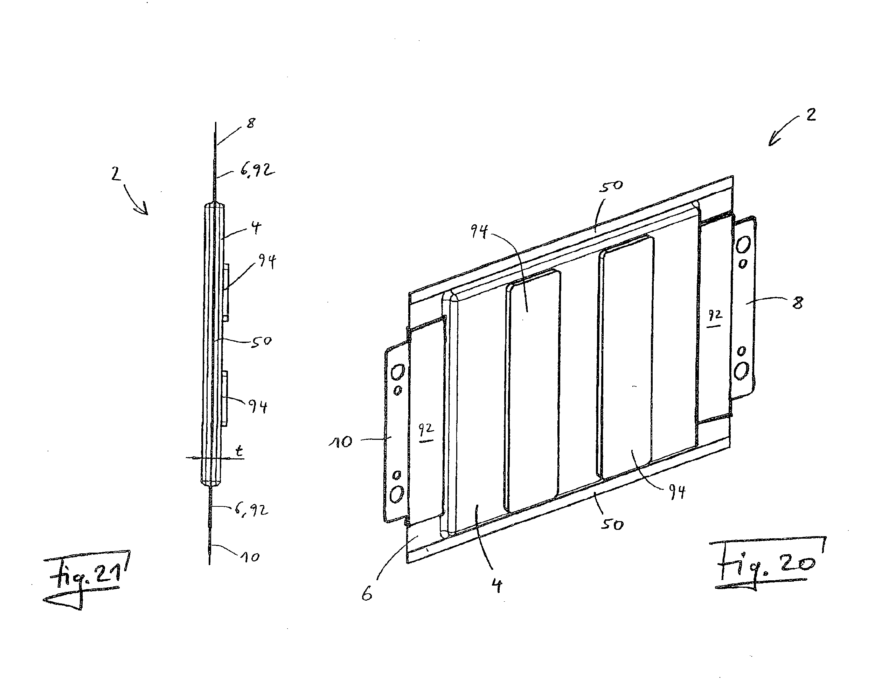

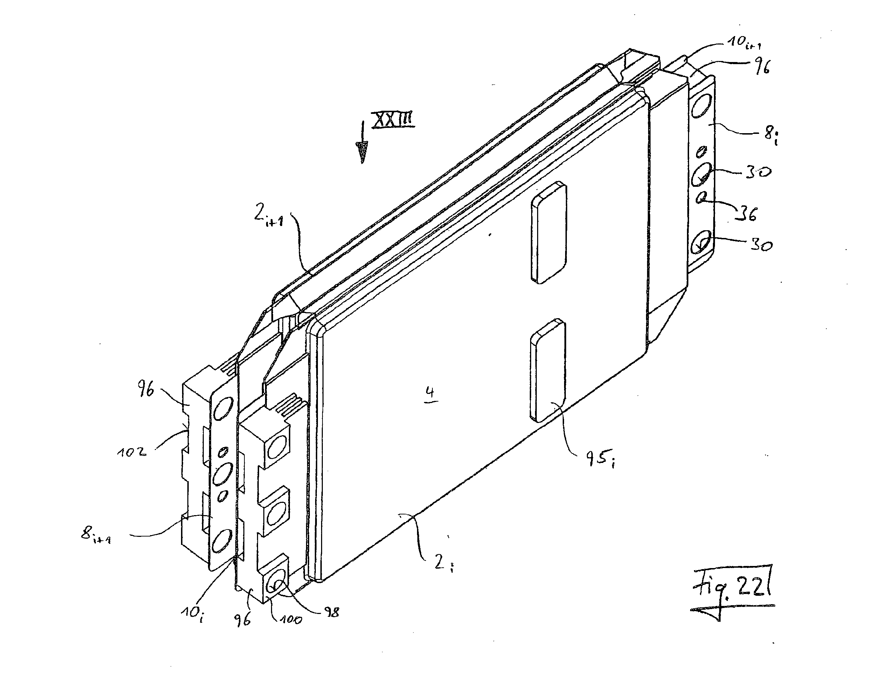

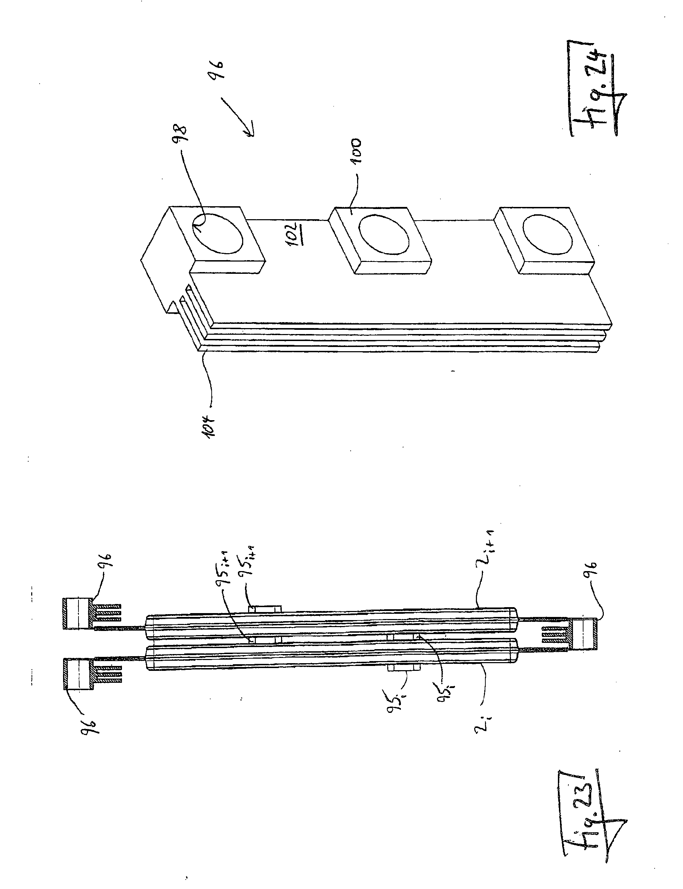

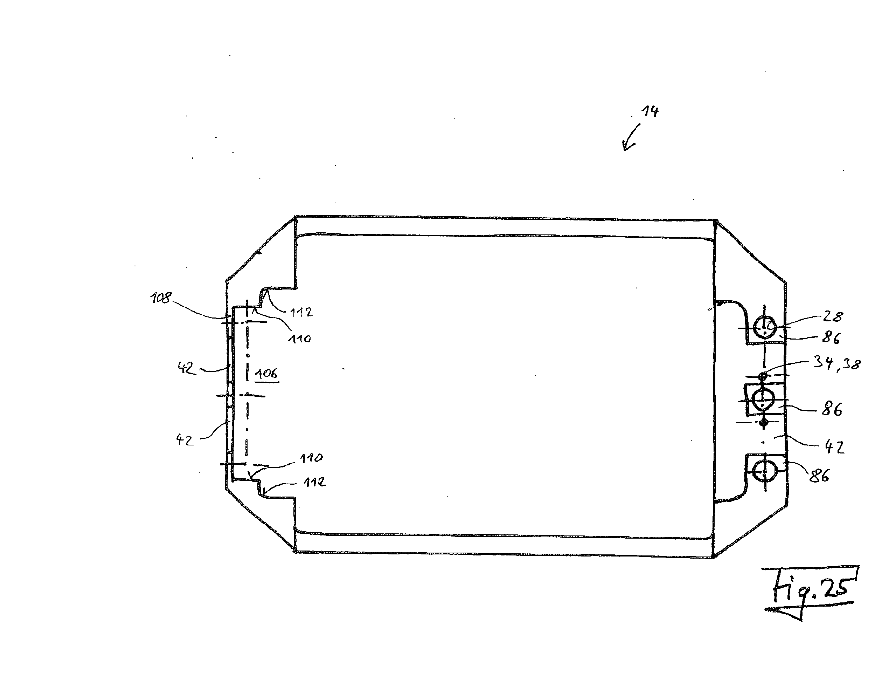

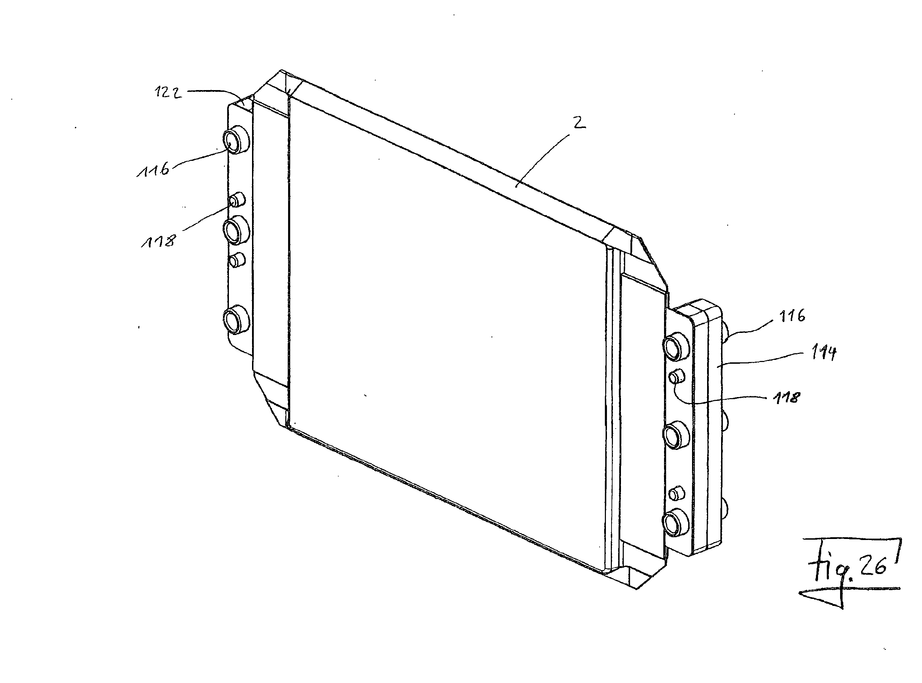

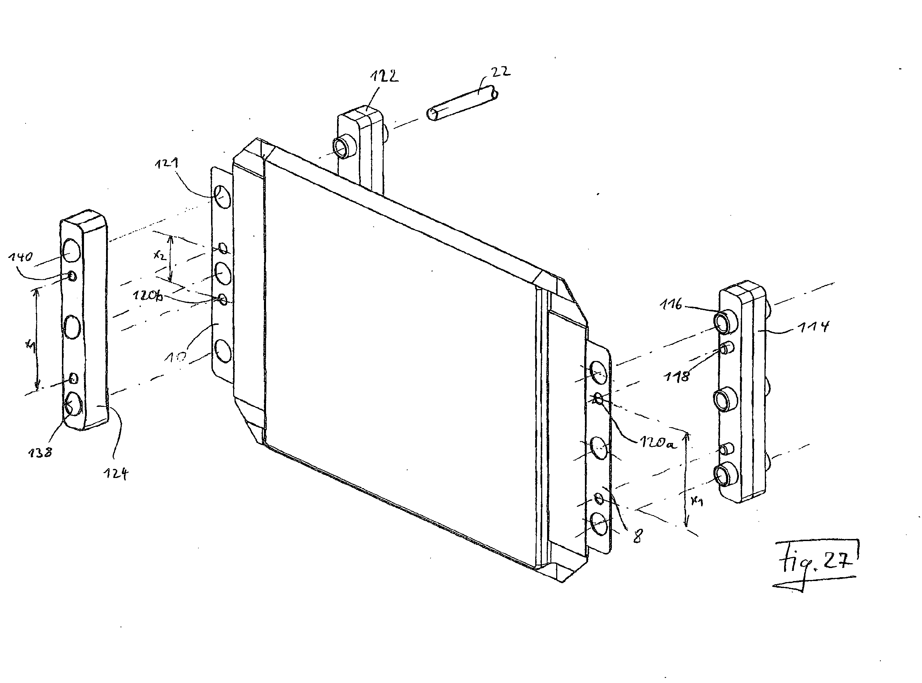

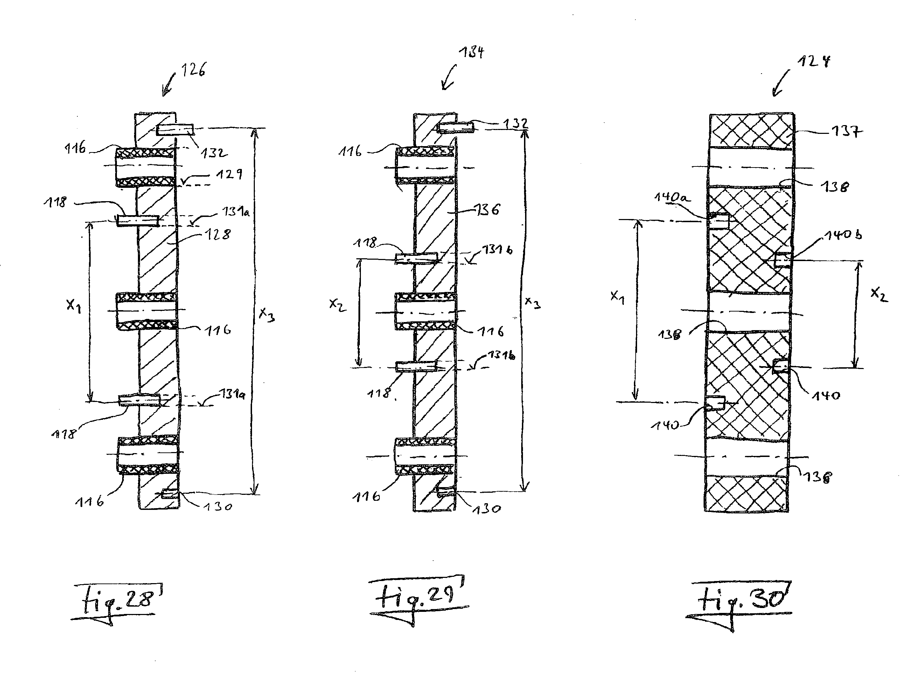

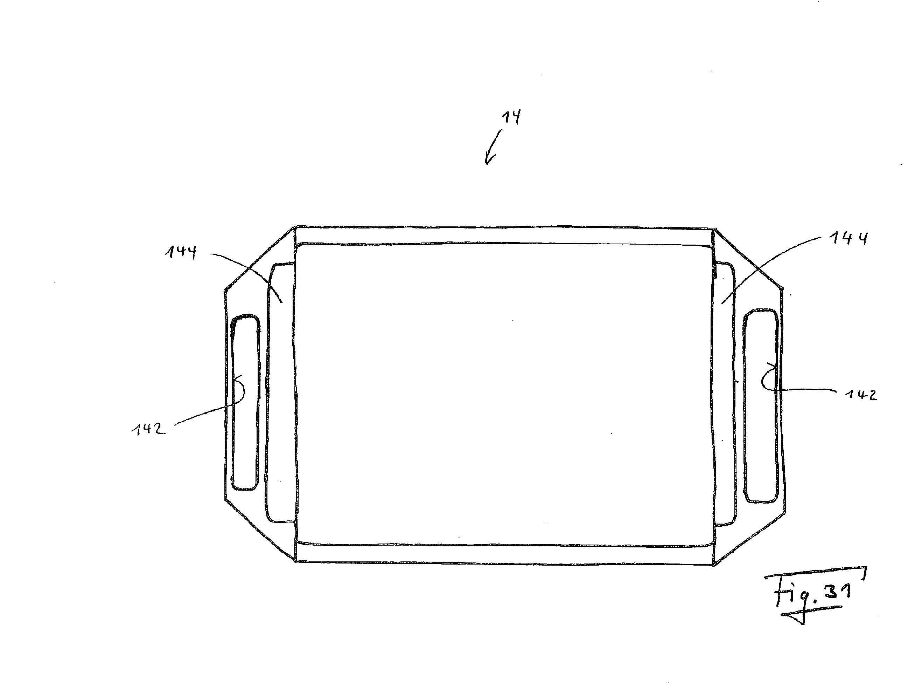

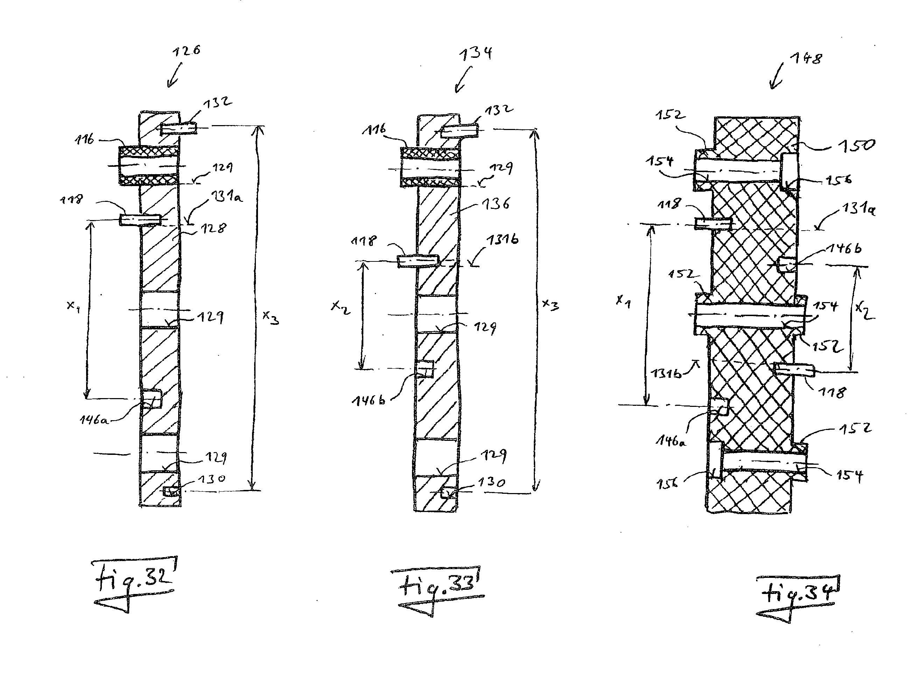

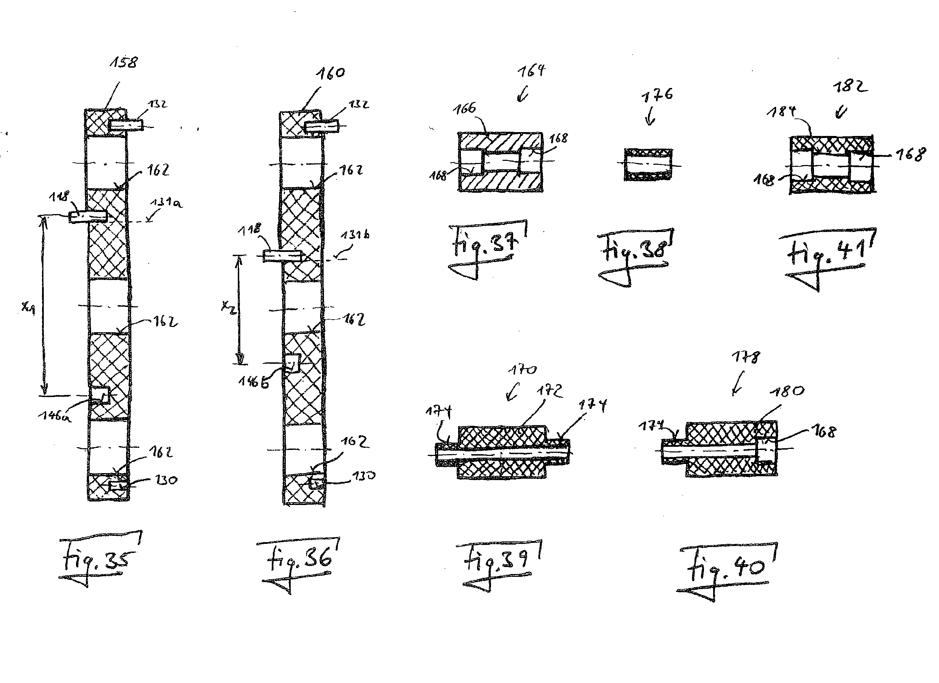

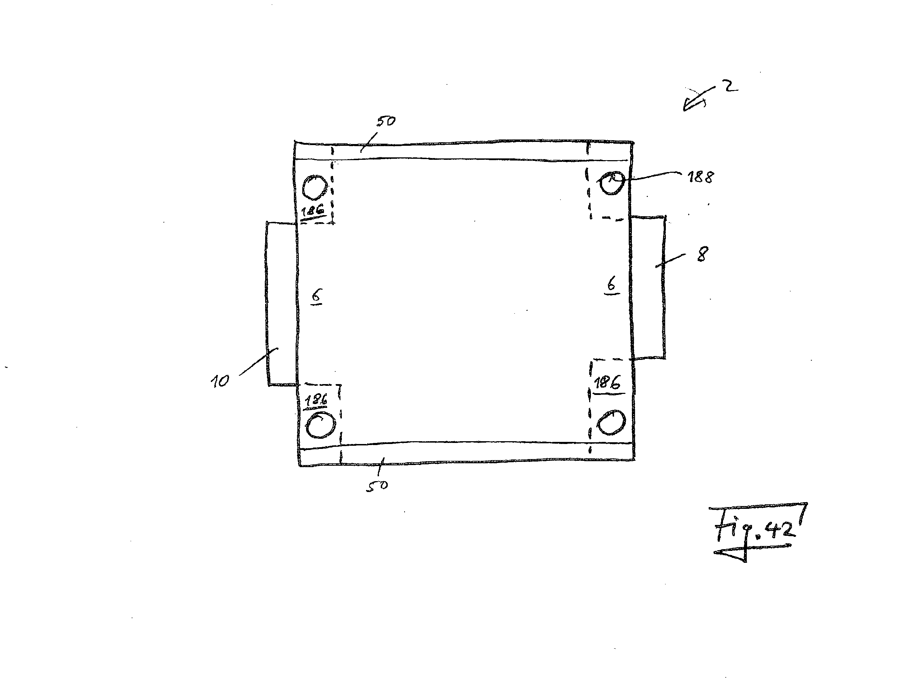

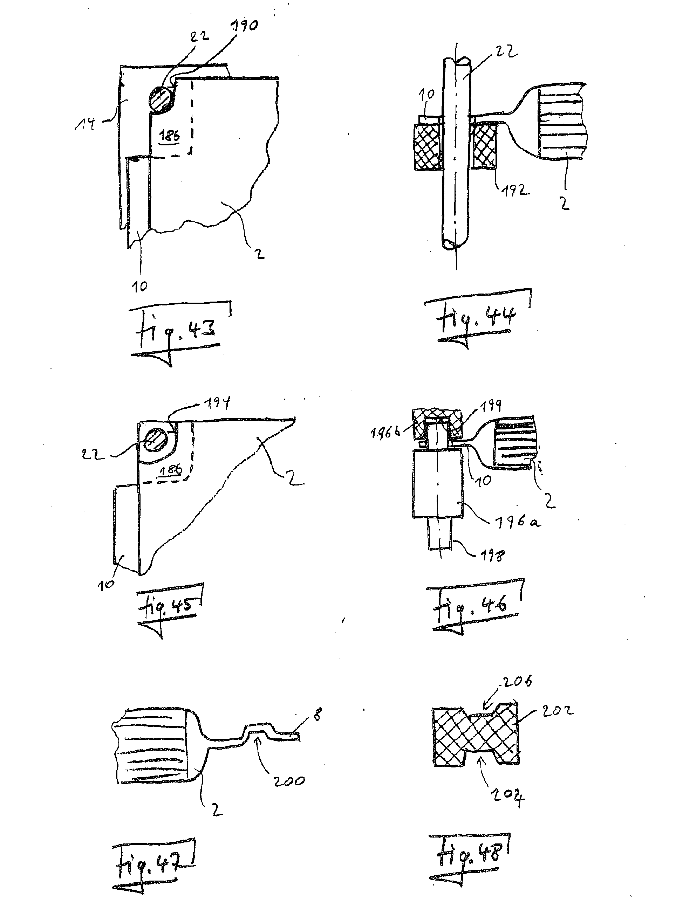

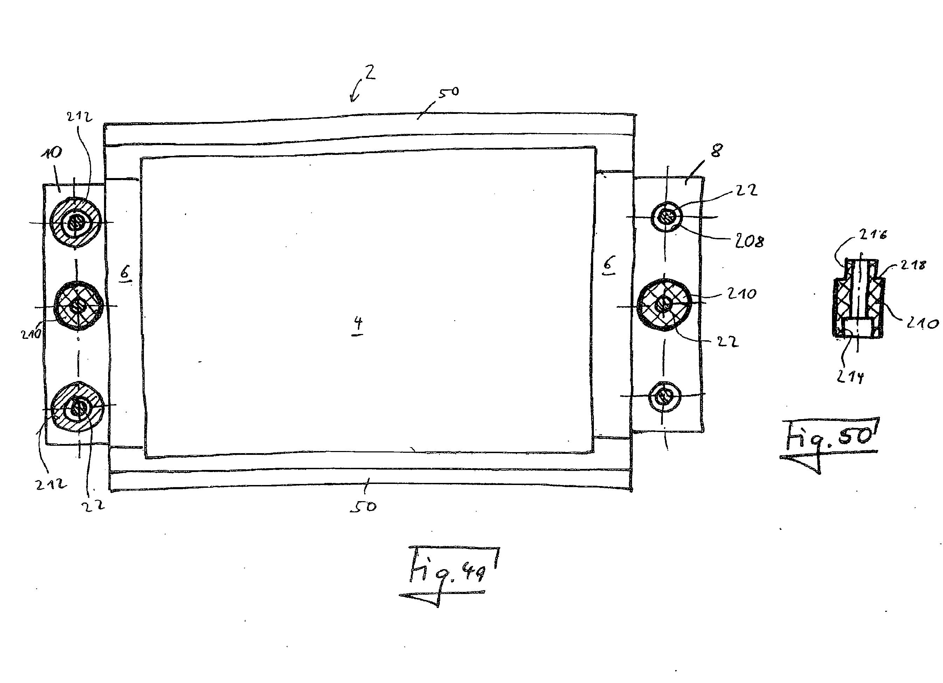

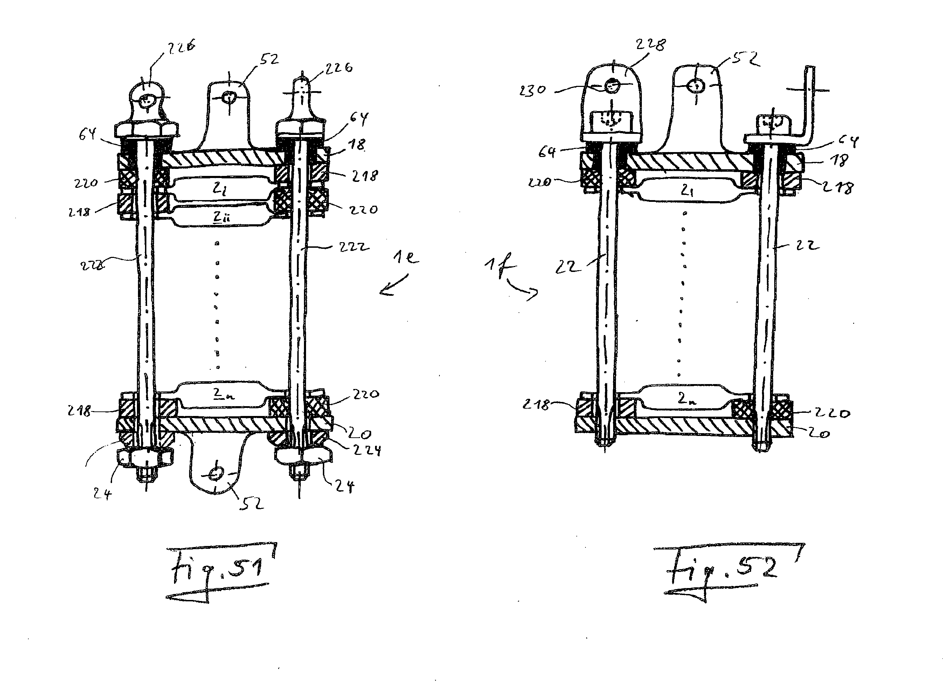

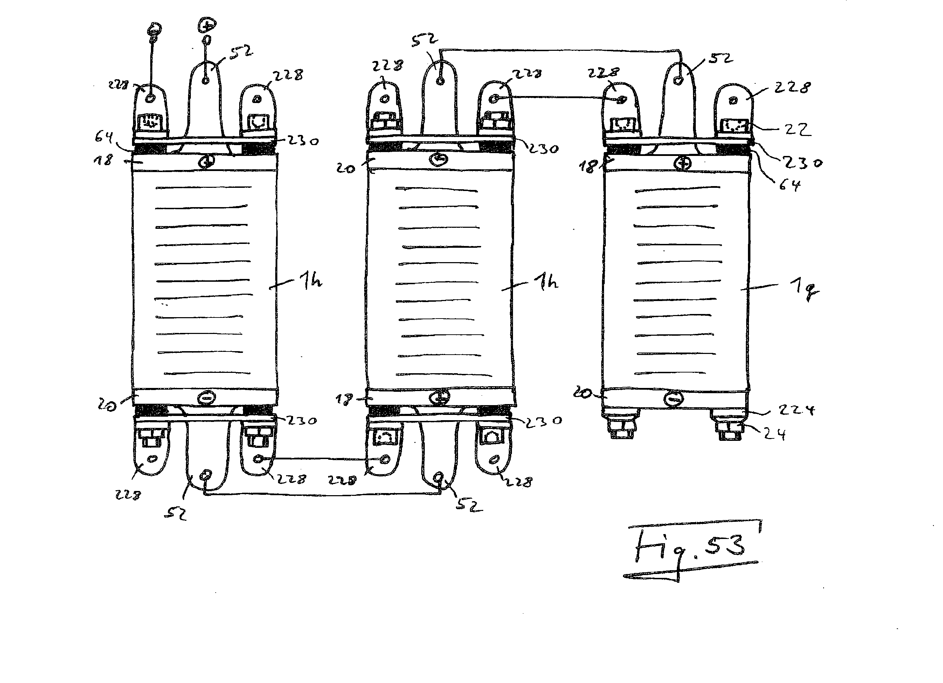

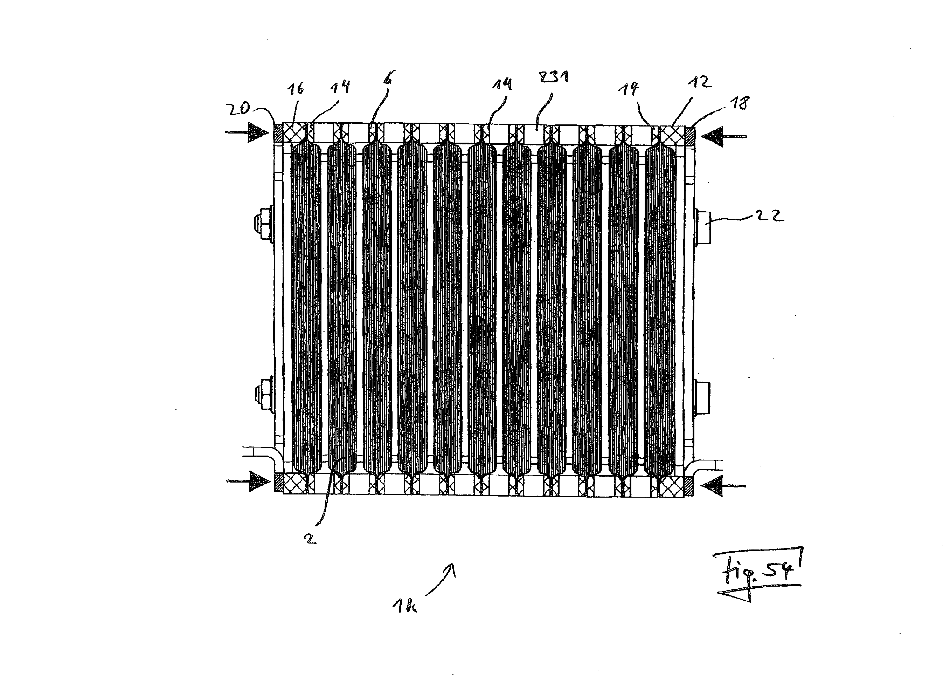

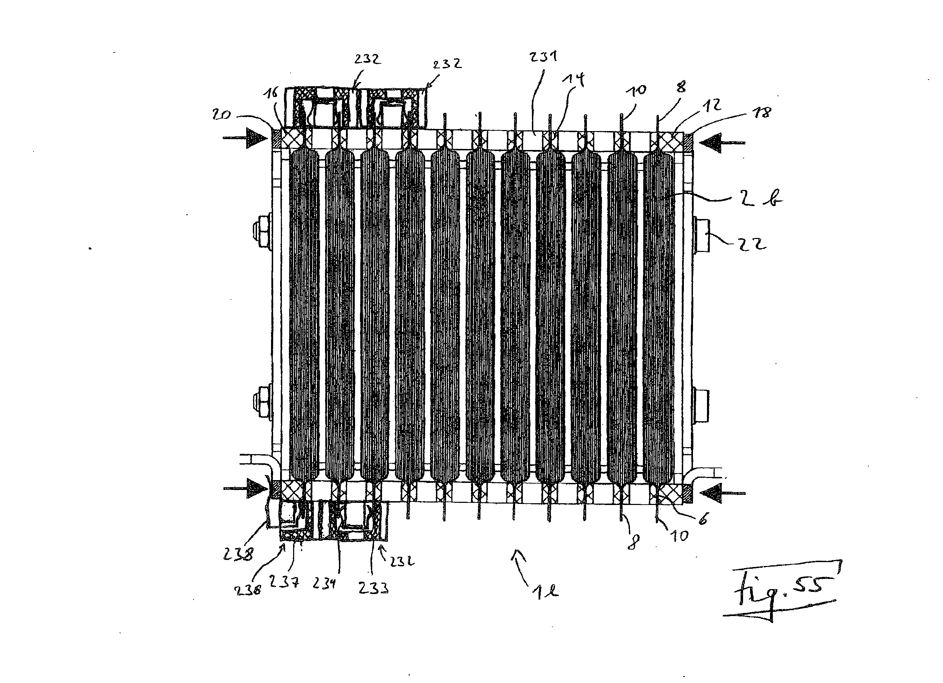

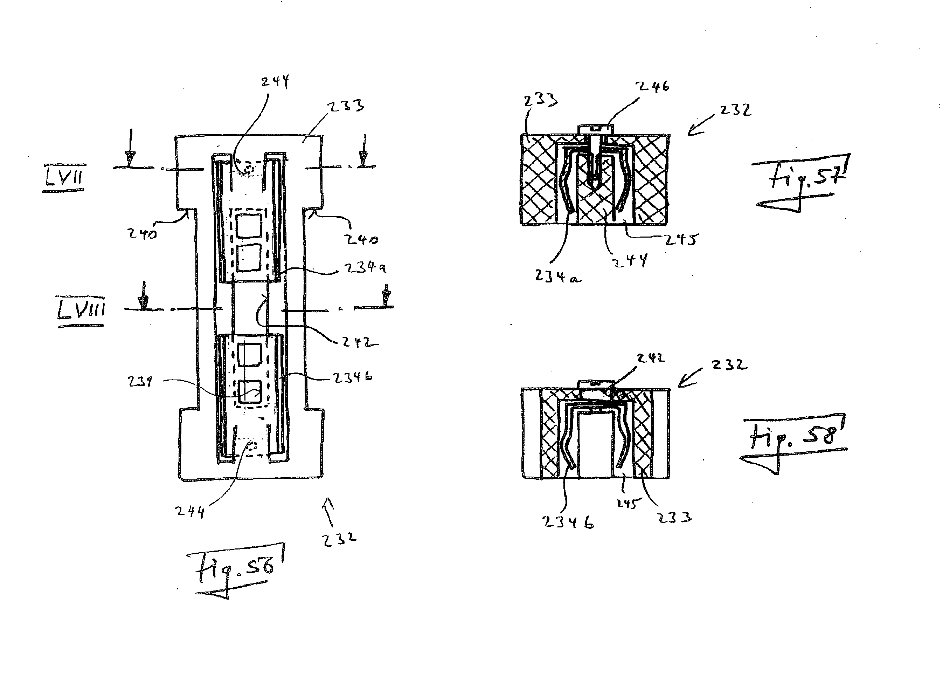

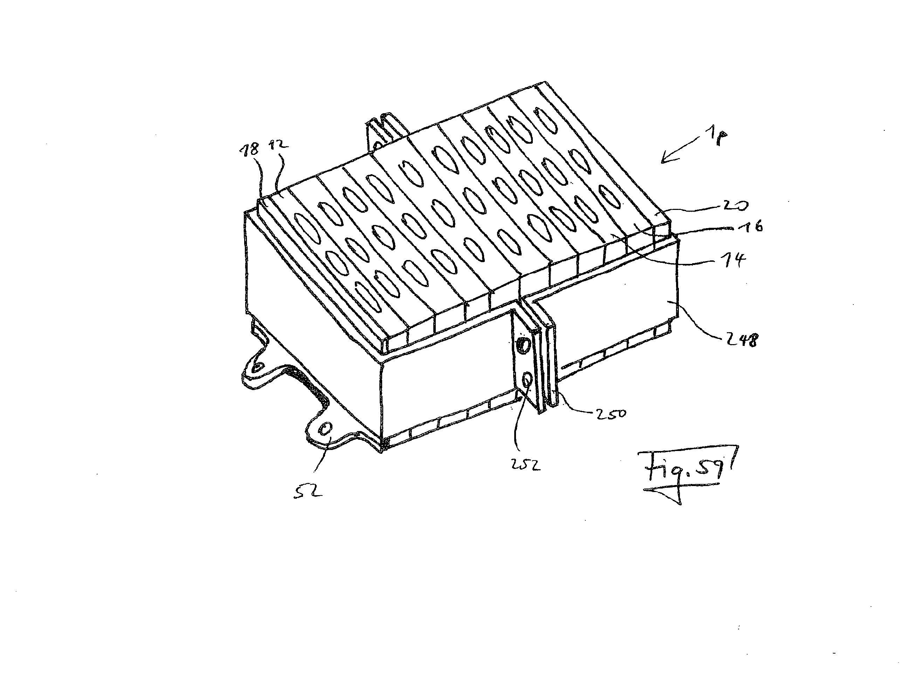

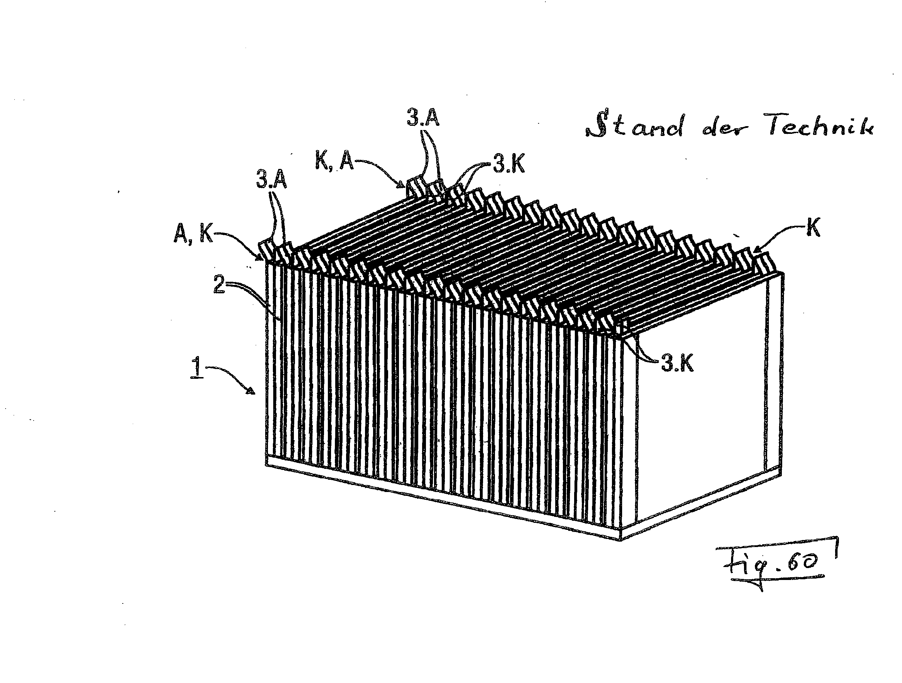

In den Zeichnungen:
zeigt Fig. 1 einen Zellblock gemäß der ersten Ausführungsform in einer perspektivischen Teil-Explosionsansicht ;
zeigt Fig. 2 eine Akkumulatorzelle und eine Rahmenelement davon;
ist Fig. 3 eine Schnittansicht durch einen Zellblock in einer durch zwei Linien E1, E2 definierten Ebene in Blickrichtung eines Pfeils III in Fig. 1;
zeigt Fig. 4 eine Einzelheit IV in Fig. 3 im Bereich der Verschraubung;
ist Fig. 5 eine perspektivische Gesamtansicht mit zusätzlichen Anschlusselementen und einem Steuergerät;
zeigt Fig. 6 ein Ersatzschaltbild des Zellblocks ähnlich dem in Fig. 1 gezeigten;
zeigt Fig. 7 ein Ersatzschaltbild einer zweiten Ausführungsform der vorliegenden Erfindung;
zeigt Fig. 8 eine perspektivische Darstellung der Anordnung von vier Zellblöcken als dritte Ausführungsform der vorliegenden Erfindung;
zeigt Fig. 9 eine Seitenansicht der Anordnung von Fig. 8;
zeigt Fig. 10 eine Reihenschaltung von zwei Zellblöcken als vierte Ausführungsform der vorliegenden Erfindung dargestellt;
zeigt Fig. 11 eine Parallelschaltung von zwei Zellblöcken als fünfte Ausführungsform der vorliegenden Erfindung;
zeigt Fig. 12 eine Anordnung von Zellblöcken als sechste Ausführungsform der vorliegenden Erfindung;
zeigt Fig. 13 eine Einzelheit eines Zellblocks einer siebenten Ausführungsform;
zeigt Fig. 14 einen zusammengebauten Zustand eines Zellblocks einer achten Ausführungsform in perspektivischer Ansicht
zeigt Fig. 15 den Zellblock von Fig. 14 ohne Druckplatten und Verspannung;
zeigt Fig. 16 einen Endrahmen des Zellblocks von Fig. 14 in der stirnseitiger Ansicht;
zeigt Fig. 17 einen Zwischenrahmen 4 in perspektivischer Ansicht;
zeigt Fig. 18 eine perspektivische Darstellung eines einzelnen Zellblocks einer neunten Ausführungsform der vorliegenden Erfindung dieser Ausführungsform;
zeigt Fig. 19 eine Seitenansicht einer Anordnung von vier in Reihe geschalteten Zellblöcken von Fig. 18;
zeigt Fig. 20 eine perspektivische Ansicht einer Akkumulatorzelle einer zehnten Ausführungsform;
zeigt Fig. 21 ist eine Draufsicht, d.h., eine Ansicht auf die obere Schmalseite der Akkumulatorzelle von Fig. 20;
zeigt ist Fig. 22 eine perspektivische Darstellung zweier Akkumulatorzellen in ihrer Anordnung in einem Zellblock mit Kontaktleisten in einer elften Ausführungsform der vorliegenden Erfindung;
zeigt Fig. 23 eine Draufsicht, d.h., eine Ansicht von oben auf die langen Schmalseiten der Akkumulatorzellen von Fig. 22;
zeigt Fig. 24 eine perspektivische Darstellung einer Kontaktleiste von Fig. 22;
zeigt Fig. 25 eine stirnseitige Ansicht eines Zwischenrahmens in dieser Ausführungsform;
zeigt Fig. 26 eine perspektivische Darstellung einer Akkumulatorzelle in ihrer Anordnung in dem Zellblock mit Kontaktierungsriegeln in einer zwölften Ausführungsform der vorliegenden Erfindung;
ist Fig. 27 eine Explosionsansicht der Anordnung nach Fig. 26, wobei zusätzlich ein lsolationsriegel dargestellt ist;
ist Fig. 28 eine Querschnittsansicht eines Halbriegels zur Kontaktierung eines positiven Stromableiters;
ist Fig. 29 eine Querschnittsansicht eines Halbriegels zur Kontaktierung eines negativen Stromableiters;
ist Fig. 30 eine Querschnittsansicht des Isolationsriegels aus Fig. 27;
ist Fig. 31 eine stirnseitige Ansicht eines Zwischenrahmens in der zwölften Ausführungsform;
ist Fig. 32 eine Querschnittsansicht eines Halbriegels zur Kontaktierung eines positiven Stromableiters in einer dreizehnten Ausführungsform der vorliegenden Erfindung;
ist Fig. 33 eine Querschnittsansicht eines Halbriegels zur Kontaktierung eines negativen Stromableiters in der dreizehnten Ausführungsform;
ist Fig. 34 eine Querschnittsansicht eines Isolationsriegels in der dreizehnten Ausführungsform;
zeigt Fig. 35 eine für einen Pluspol kodierte Abstandshalbplatte in einer vierzehnten Ausführungsform der vorliegenden Erfindung im Längsschnitt;
zeigt Fig. 36 eine für einen Minuspol kodierte Abstandshalbplatte in der vierzehnten Ausführungsform im Längsschnitt;
zeigt Fig. 37 eine Kontakthülse in der vierzehnten Ausführungsform im Längsschnitt;
zeigt Fig. 38 eine Doppelzapfenmanschette für Reihenschaltung in der vierzehnten Ausführungsform im Längsschnitt;
zeigt Fig. 39 eine Innenmanschette für Parallelschaltung in der vierzehnten Ausführungsform im Längsschnitt;
zeigt Fig. 40 eine Einzapfenmanschette für einen Übergang von Parallel- auf Reihenschaltung in der vierzehnten Ausführungsform im Längsschnitt;
zeigt Fig. 41 eine Abstandshülse für variable Anwendung in der vierzehnten Ausführungsform im Längsschnitt;
zeigt Fig. 42 eine Akkumulatorzelle einer neunzehnten Ausführungsform in stirnseitiger Ansicht;
zeigt Fig. 43 eine Ecke einer Akkumulatorzelle einer zwanzigsten Ausführungsform in stirnseitiger Ansicht;
zeigt Fig. 44 einen Endbereich einer Akkumulatorzelle einer einundzwanzigsten Ausführungsform im Schnitt in Blickrichtung von oben;
zeigt Fig. 45 eine Ecke einer Akkumulatorzelle einer zweiundzwanzigsten Ausführungsform in stirnseitiger Ansicht;
zeigt Fig. 46 einen Endbereich einer Akkumulatorzelle einer dreiundzwanzigsten Ausführungsform im Schnitt in Blickrichtung von oben;
ist Fig. 47 eine Schnittdarstellung eines Randbereichs einer Akkumulatorzelle in einer vierundzwanzigsten Ausführungsform der vorliegenden Erfindung mit einem Stromableiter in Blickrichtung von oben;
zeigt Fig. 48 zeigt ein Distanzstück der vierundzwanzigsten Ausführungsform im Schnitt;
zeigt Fig. 49 eine stirnseitige Ansicht einer Akkumulatorzelle einer fünfundzwanzigsten Ausführungsform der vorliegenden Erfindung in einer Einbausituation;
zeigt Fig. 50 eine Isolierhülse dieser Ausführungsform im Längsschnitt;
zeigt Fig. 51 einen Zellblock in einer sechsundzwanzigsten Ausführungsform der vorliegenden Erfindung;
zeigt Fig. 52 ist einen Zellblock in einer siebenundzwanzigsten Ausführungsform der vorliegenden Erfindung;
zeigt Fig. 53 mehrere miteinander in Reihe verbundene Zellblöcke in einer achtundzwanzigsten Ausführungsform der vorliegenden Erfindung;
zeigt Fig. 54 einen Zellblock einer neunundzwanzigsten Ausführungsform der vorliegenden Erfindung von oben im Schnitt;
ist Fig. 55 eine geschnittene Ansicht eines Zellblocks einer dreißigsten Ausführungsform der vorliegenden Erfindung von oben;
ist Fig. 56 ist eine vergrößerte Ansicht einer Kontaktierungsklammer aus Fig. 55 vom Zellblock aus gesehen;
ist Fig. 57 eine entlang einer Linie LVII in Fig. 56 geschnittene Ansicht der Kontaktierungsklammer in Pfeilrichtung;
ist Fig. 58 eine entlang einer Linie LVIII in Fig. 56 geschnittene Ansicht der Kontaktierungsklammer in Pfeilrichtung;
zeigt Fig. 59 einen Zellblock einer einunddreißigsten Ausführungsform der vorliegenden Erfindung in perspektivischer Draufsicht; und
zeigen Fign. 60 bis 62 Zellblöcke nach dem Stand der Technik.

Es ist darauf hinzuweisen, dass die Darstellungen in den Figuren schematisch sind und sich auf die Wiedergabe der für das Verständnis der Erfindung wichtigsten Merkmale beschränken. Auch ist darauf hinzuweisen, dass die in den Figuren wiedergegebenen Abmessungen und Größenverhältnisse allein der Deutlichkeit der Darstellung geschuldet sind und in keiner Weise einschränkend oder zwingend zu verstehen sind.

Es folgt eine Beschreibung konkreter Ausführungsformen und möglicher Abwandlungen hiervon. Soweit in verschiedenen Ausführungsformen gleiche Bauteile verwendet werden, sind diese mit gleichen oder entsprechenden Bezugszeichen versehen. Auf die wiederholte Erläuterung bereits im Zusammenhang mit einer Ausführungsform erläuterter Merkmale wird weitgehend verzichtet. Dennoch sind, soweit es nicht ausdrücklich anders angegeben oder ersichtlich technisch unsinnig ist, die Merkmale, Anordnungen und Wirkungen einer Ausführungsform auch auf andere Ausführungsformen zu übertragen.

Eine erste Ausführungsform der vorliegenden Erfindung wird nun anhand der Fign. 1 bis 6 erläutert. Dabei zeigen Fig. 1 einen Zellblock gemäß der ersten Ausführungsform in einer perspektivischen Teil-Explosionsansicht, Fig. 2 eine Akkumulatorzelle und eine Rahmenelement davon, Fig. 3 eine Schnittansicht durch einen Zellblock in einer durch zwei Linien E1, E2 definierten Ebene in Blickrichtung eines Pfeils III in Fig. 1, Fig. 4 eine Einzelheit IV in Fig. 3 im Bereich der Verschraubung, Fig. 5 eine perspektivische Gesamtansicht mit zusätzlichen Anschlusselementen und einem Steuergerät, und Fig. 6 ein Ersatzschaltbild des Zellblocks. (Eine in Fig. 3 gekennzeichnete Einzelheit XIII bezieht sich auf eine andere Ausführungsform.)

Fig. 1 zeigt einen Zellblock 1 gemäß der ersten Ausführungsform in einer perspektivischen Teil-Explosionsansicht, wobei ein die Gesamtanordnung vervollständigendes Gehäuse weggelassen ist. Der Zellblock 1 ist der bestimmende Bestandteil einer elektrochemischen Energiespeichervorrichtung im Sinne der Erfindung.

In dem Zellblock 1 sind eine Anzahl von insgesamt elf Akkumulatorzellen 2 als Stapel angeordnet. Jede Akkumulatorzelle 2 besteht im Wesentlichen aus einem aktiven Teil 4, einer inaktiven Randzone 6 und zwei in der Randzone 6 angeordneten Stromableitern 8, 10. Die Akkumulatorzellen 2 sind elektrochemische Speicherzellen im Sinne der Erfindung, die Stromableiter 8, 10 sind Kontaktabschnitte im Sinne der Erfindung, und die Randzone bildet zusammen mit den Stromableitern 8, 10 einen Randbereich im Sinne der Erfindung.

In dem aktiven Teil 4 findet eine elektrochemische Reaktion zur Speicherung und Abgabe elektrischer Energie (Lade- und Entladereaktion) statt. Der in der Figur nicht näher dargestellte, innere Aufbau des aktiven Teils 4 entspricht einem flachen, laminierten Stapel aus elektrochemisch aktiven Elektrodenfolien zweier Arten (Kathode und Anode), elektrisch leitenden Folien zur Sammlung und Zuleitung oder Ableitung elektrischen Stroms zu und von den elektrochemisch aktiven Bereichen, und Separatorfolien zur Trennung der elektrochemisch aktiven Bereiche der zwei Arten voneinander. Dieser Aufbau ist in der Technik wohlbekannt und soll hier nicht weiter vertieft werden. Als Referenz wird auf eine Speicherzelle verwiesen, die in einer am gleichen Tage wie die vorliegende Anmeldung hinterlegten Anmeldung (interne Bezeichnung No. 105907) beschrieben ist, deren Offenbarungsgehalt insoweit vollumfänglich durch Bezugnahme eingeschlossen sei.

Der aktive Teil 4 der Zelle 2 wird von zwei in der Figur nicht näher bezeichneten Folien sandwichartig umhüllt. Die beiden Folien sind an ihren freien Enden gas- und feuchtigkeitsdicht verschweißt und bilden eine sogenannte Siegelnaht, die den aktiven Teil 4 als umlaufende, inaktive Randzone 6 umgibt. Die Siegelnaht ist an zwei gegenüberliegenden Schmalseiten gefaltet und bildet dort jeweils einen Falz 50, der die Siegelnaht an dieser Stelle stabilisiert und einem Einrei-βen vorbeugt (vgl. Fig. 2).

Zwei Stromableiter 8, 10 ragen an zwei gegenüberliegenden Schmalseiten der Zelle 2 durch die Siegelnaht hindurch aus dem Inneren der Zelle 2 nach außen und erstrecken sich als flächige Gebilde in entgegengesetzten Richtungen. Die Stromableiter 8, 10 stehen mit den elektrochemisch aktiven Kathoden und Anodenbereichen im Inneren des aktiven Bereichs 6 in Verbindung und dienen so als Kathoden- und Anodenanschlüsse der Zelle 2.

Zur Bildung des Zellblocks 1 sind ferner Halterahmen 12, 14, 16 und Druckplatten 18, 20 vorgesehen, deren Ränder von einer Flachseite gesehen jeweils in etwa die gleiche Kontur beschreiben. Es sind in dieser Reihenfolge eine erste Druckplatte 18, ein erster Endrahmen (Halterahmen) 12, eine abwechselnde Abfolge von Akkumulatorzellen 2 und Zwischenrahmen (Halterahmen) 14, wobei die Abfolge mit einer Zelle 2 beginnt und endet, mithin also die Zahl der Zwischenrahmen um Eins geringer ist als die Zahl der Zellen 2, ein zweiter Endrahmen (Halterahmen) 16 und eine zweite Druckplatte 20 angeordnet. Die gesamte, vorstehend beschriebene Anordnung wird durch vier Zylinderschrauben 22 mit Muttern 24 zusammengehalten, die über Scheiben 26 auf die Druckplatten 18, 20 wirken. Die Druckplatten 18, 20 übertragen den durch die Zylinderschrauben 22 ausgeübten Druck auf die Endrahmen 12, 16 und damit auf die Anordnung von Zwischenrahmen 14 und Akkumulatorzellen 2. Dabei wird der Druck im Wesentlichen von den seitlichen Abschnitten der Halterahmen 12, 14, 16 auf die Stromableiter 8, 10 der jeweils dazwischen liegenden Akkumulatorzelle 2 ausgeübt. Dadurch werden die Zellen 2 jeweils zwischen zwei Halterahmen 12, 14 oder 14, 14 oder 14, 16 gehalten. Der erste Endrahmen 12, die Zwischenrahmen 14 und der zweite Endrahmen 16 (Halterahmen) sind Rahmenelemente im Sinne der Erfindung. Die erste und die zweite Druckplatte 18, 20 weisen eine den Endrahmen 12, 16 entsprechende Rahmenform auf. Sie sind Andruckplatten im Sinne der Erfindung und bilden gemeinsam mit den Zylinderschrauben 22 und Muttern 24 sowie den Scheiben 26 eine Spanneinrichtung im Sinne der Erfindung. Dabei sind die Zylinderschrauben 22 Zugstäbe im Sinne der Erfindung.

Die Halterahmen 12, 14, 16 sind aus einem isolierenden Material hergestellt. Sie bilden daher eine wirksame elektrische Trennung zwischen den einzelnen Zellen 2. Die Druckplatten 18, 20 hingegen sind aus einem Leitermaterial, insbesondere Stahl oder Aluminium oder einer Legierung hiervon, hergestellt und dienen gleichzeitig als Potentialsammler und Stromableiter des gesamten Zellblocks 1, wie noch erläutert werden wird.

Die Zylinderschrauben 24 verlaufen durch Durchgangsbohrungen (nicht näher bezeichnet) in den Druckplatten 18, 20, Durchgangsbohrungen 28, 29 in den Halterahmen 12, 14, 16 und Durchgangsbohrungen 30 in den Stromableitern 8, 10 der Zellen 2 hindurch. Die Zylinderschrauben 24 weisen einen geringeren Durchmesser als die Durchgangsbohrungen 28, 29, 30 auf. Aufgrund des hierdurch verwirklichten ringförmigen Abstands zwischen der Außenkontur der Zylinderschrauben 24 und dem inneren Rand der Durchgangsbohrungen 30 wird eine elektrische Isolierung Zylinderschrauben 24 und den Stromableitern 8, 10 verwirklicht, sodass eine ungewollte Verbindung zwischen Stromableitern 8, 10 verschiedener Zellen 2 vermieden wird. Gleiches gilt für eine elektrische Isolation gegenüber den Druckplatten 18, 20, was noch genauer zu erläutern sein wird.

In den Halterahmen 12, 14, 16 sind auf einer Seite Durchgangsbohrungen 28 eines vergleichsweise geringen Durchmessers und auf der anderen Seite Durchgangsbohrungen 29 eines größeren Durchmessers angeordnet. In den größeren Durchgangsbohrungen 29 sind Kontakthülsen 32 aus einem Leitermaterial angeordnet, während die Durchgangsbohrungen 28 auf der anderen Seite frei bleiben. Die Kontakthülsen 32 sind Kontaktverbindungselemente im Sinne der Verbindung und stellen eine elektrische Verbindung zwischen den Stromableitern zweier benachbarter Akkumulatorzellen auf der gleichen Seite des Zellblocks 1 her. Als Leitermaterial haben sich Kupfer, Messing, Bronze oder dergleichen bewährt, es sind jedoch auch andere Materialien denkbar wie etwa Stahl, Aluminium, Neusilber o.a. Zur Verringerung des Übergangswiderstands zwischen Kontakten hat sich eine Versilberung oder Vergoldung der Kontakte bewährt. Dies gilt für alle Kontaktelemente im Rahmen dieser Beschreibung.

Wie in Fig. 3, die in einer durch zwei der Zylinderschrauben 22 verlaufenden Ebene geschnittene Draufsicht des Zellblocks 1 ist, deutlich erkennbar ist, sind die Akkumulatorzellen 2 mit abwechselnder Polrichtung in dem Stapel angeordnet. D.h., auf einer Seite des Zellblocks 1 sind ein Stromableiter 8, der z.B. einen Minus-Pol einer Zelle 2 bildet, und ein Stromableiter 10, der dann einen Plus-Pol einer Zelle 2 bildet, jeweils abwechselnd angeordnet. (In Fig. 3 sind die Stromableiter 8 im Schnitt nur als Umriss dargestellt, während die Stromableiter 10 im Schnitt geschwärzt dargestellt sind.) Des Weiteren sind Kontakthülsen 32 in Halterahmen 12, 14, 16 auf einer Seite angeordnet, während sie in dem benachbarten Halterahmen auf der anderen Seite angeordnet sind. Auf diese Weise ist im Bereich der Zwischenrahmen 14 immer der Plus-Pol einer Zelle 2 mit dem Minus-Pol einer anderen Zelle 2 verbunden. Im Bereich der Endrahmen 12, 16 ist der noch nicht mit einem Stromableiter einer anderen Zelle 2 verbundene Stromableiter über die Kontakthülsen 32 in dem Endrahmen 12, 16 mit der jeweiligen Druckplatte 18, 20 verbunden. Die Druckplatten 18, 20 sind aus einem Leitermaterial wie Stahl oder Aluminium oder einer Legierung hiervon hergestellt und dienen auf diese Weise als Stromableiter oder Pole des gesamten Zellblocks 1, und zwar dient die erste Druckplatte 18 z.B. als Plus-Pol des Zellblocks 1, während die zweite Druckplatte 20 als Minus-Pol des Zellblocks 1 dient.

Fig. 4 zeigt eine Einzelheit IV in Fig. 3 im Bereich einer Verschraubung der zweiten Druckplatte 16 und verdeutlicht die Anordnung und die elektrische Verbindung bzw. Isolierung der Bauteile mit- und voneinander. Es sind die in Fig. 3 rechten Enden der letzten und vorletzten Zelle 2ₙ, 2ₙ₋₁ zusammen mit dem letzten und vorletzten Zwischenrahmen 14ₘ, 14ₘ₋₁ (m = n-1), dem Endrahmen 20, einer Zylinderschraube 22 mit Mutter 24 und Scheibe 26 in diesem Ausschnitt dargestellt.

Wie in der Figur dargestellt, ist der Stromableiter 8 der letzten Zelle 2ₙ über die Kontakthülse 32 in dem zweiten Endrahmen 16 mit der metallischen zweiten Druckplatte 20 elektrisch verbunden. Auf der linken (in der Einzelheit der Fig. 4 nicht dargestellten) Seite ist der Stromableiter 10 der letzten Zelle 2ₙ über die Kontakthülse 32 in dem letzten Zwischenrahmen 14ₘ mit dem Stromableiter 8 der vorletzten Zelle 2ₙ₋₁ verbunden, wie es in Fig. 3 zu sehen ist. Wieder auf der rechten Seite ist der Stromableiter 10 der vorletzten Zelle 2ₙ₋₁ über die Kontakthülse 32 in dem vorletzten Zwischenrahmen 14ₘ₋₁ mit dem Stromableiter (8) der davor angeordneten Zelle (2ₙ₋₂) verbunden (in der Einzelheit der Fig. 4 ist nur noch ein Abschnitt der Kontakthülse 32 am unteren Rand dargestellt). Dies setzt sich wechselweise fort (vgl. Fig. 3), bis die erste Zelle über die Kontakthülse 32 in dem ersten Endrahmen 12 mit der ersten Druckplatte 18 verbunden ist.

Die Durchgangsbohrungen 29 zur Aufnahme der Kontakthülsen 32 weisen einen größeren Durchmesser als die Durchgangsbohrungen 28, in denen keine Kontakthülsen aufgenommen sind. Der Innendurchmesser der Kontakthülsen 32 entspricht in etwa dem Durchmesser der Durchgangsbohrungen 28, in denen keine Kontakthülsen aufgenommen sind, und diese sind größer als der Außendurchmesser der Zylinderschraube 22. Auf diese Weise besteht ein Luftspalt 56 zwischen der Zylinderschraube 22 und stromführenden Teilen 32, 20 (, 18), der für eine elektrische Isolierung der Zylinderschraube 22 sorgt. Der Luftspalt 56 besteht auch zwischen der Zylinderschraube 22 und den an sich nicht stromführenden Halterahmen 14, 16 (, 12), sodass hier ein Spiel bei der Montage besteht, was das Zusammensetzen der Teile vereinfacht. Die Scheibe 26 ist eine Isolierscheibe, welche für eine elektrische Isolation zwischen der Mutter 24 und der zweiten Druckplatte 20 (und auf der anderen Seite zwischen der Zylinderschraube 22 und der ersten Druckplatte 18, obschon in dieser Figur nicht näher dargestellt) sorgt. Die elektrische Isolierung der Zylinderschraube von den Druckplatten 18, 20 verhindert einen Kurzschluss zwischen den als Polen dienenden Druckplatten 18, 20.

In einer Abwandlung kann anstelle des Luftspalts 56 auch eine Isolierung, etwa in Form eines Schrumpfschlauches, vorgesehen sein.

Zurück zur Ausführungsform und zu Fign. 1 und 2 sind in den Stromableitern 8, 10 der Akkumulatorzellen 2 jeweils zwei Passbohrungen 36 angeordnet, die mit Passbohrungen 34 in den Halterahmen 12, 14, 16 fluchten. Jeweils auf der Seite, auf der auch die Kontakthülsen 32 in den Durchgangsbohrungen 29 in den Halterahmen 12, 14, 16 angeordnet sind, sind in den Passbohrungen 24 in einem von gegenüberliegenden Halterahmen 12, 14, 16 Zentrierstifte 38 eingesetzt. Beim Zusammenbau erstrecken sich diese Zentrierstifte 38 durch die Passbohrungen 36 in den Stromableitern 8, 10 einer Zelle 2 und in die Passbohrungen 34 des gegenüberliegenden Halterahmens 12, 14, 16 hinein. Auf diese Weise werden Halterahmen 12, 14, 16 und die dazwischen angeordneten Akkumulatorzellen 2 in radialen Richtungen (als radiale Richtungen werden Richtungen senkrecht zu der Stapelrichtung S verstanden) zueinander fixiert. Die Passbohrungen 34, 36 und die Zentrierstifte 38 bilden eine Zentriereinrichtung im Sinne der Erfindung. Die Zentrierstifte 38 bilden zusammen mit den Passbohrungen 34, 36 eine Zentriereinrichtung im Sinne der Erfindung.

In den Längsseiten der Zwischenrahmen 14 (oben und unten in Fign. 1 und 2) sind jeweils drei sich radial erstreckende Schlitze 40 angeordnet. Die Schlitze 40 verbinden einen Innenraum des Zellblocks 1 mit der umgebenden Atmosphäre. Des Weiteren weisen die Zwischenrahmen 14 jeweils auf den in Stapelrichtung gesehen lateralen Seiten (die Seiten, an denen die Stromableiter 8, 10 zwischen den Rahmenelementen angeordnet sind, beidseits in Dickenrichtung Ausklinkungen 42 auf. Die Endrahmen 12, 16 weisen nur einseitig in Dickenrichtung derartige Ausklinkungen 42 auf, und zwar auf der Seite, die einem Zwischenrahmen 14 zugewandt ist. Die Ausklinkungen 42 eines Rahmenelements, die eine lokale Dickenreduktion mit sich bringen, bilden mit den Ausklinkungen 42 eines gegenüberliegenden Rahmenelements Öffnungen 44, welche den Innenraum des Zellblocks 1 mit der umgebenden Atmosphäre verbinden. Dabei sind die Öffnungen 44 durch die Stromableiter 8, 10 jeweils geteilt. Durch die Schlitze 40 und die Öffnungen 44 hindurch strömt Luft in den Innenraum des Zellblocks 1 hinein und aus diesem heraus und kühlt (oder erwärmt) die Akkumulatorzellen 2 durch Wärmetransport. Wie in Fig. 3 am deutlichsten sichtbar, ist die Dicke der Rahmenelemente 12, 14, 16 so bemessen, dass zwischen den aktiven Teilen 4 der Zellen 2 ein Abstand besteht. So ist zwischen benachbarten Zellen 2 jeweils eine Luftkammer vorhanden, über welche die Zellen 2 Wärme abgeben oder aufnehmen können. (Eine Erwärmung der Zellen 2 ist beim Start, insbesondere bei kühler Witterung, sinnvoll, um die Zellen 2 auf die optimale Betriebstemperatur zu bringen.) Eine nicht näher dargestellte Strömungsregulierungseinrichtung reguliert den Luftdurchsatz insgesamt und/oder für die einzelnen Luftkammern. Abgesehen von der Möglichkeit der Temperaturregelung bewirken die Öffnungen 40 und Ausklinkungen 42 auch eine deutliche Gewichtsreduktion der Rahmenelemente.

Die Endrahmen 12, 16 weisen Verstrebungen 46 auf, die sich zwischen den längeren Seiten erstrecken und in Dickenrichtung mit der den Druckplatten 18, 20 zugewandten Flächen fluchten. Die Breite dieser Verstrebungen 46 definiert einen Öffnungsquerschnitt für die der ersten und letzten Zelle auf der Außenseite zugeführten Luft, stabilisiert die Geometrie der Endrahmen 12, 16, schirmt die erste und letzte Zelle 2 in der Stapelanordnung nach außen ab. Wie in Fig. 5 gesehen, bieten die Verstrebungen 46 außerdem eine Befestigungsmöglichkeit für ein Steuergerät 62, das zur Regulierung und Balancing der Zellen 2 innerhalb des Zellblocks 1 vorgesehen ist.

In Fign. 1, 2 und 5 ist deutlich zu sehen, dass die Rahmenelemente 12, 14, 16 wie auch die Druckplatten 18, 20 eine flache, prismatische Form von im Wesentlichen rechteckigem Querschnitt aufweisen. Da alle diese Elemente den gleichen Querschnitt aufweisen, bildet auch der gesamte, zusammengebaute Zellblock 1 eine prismatische, im Wesentlichen quaderförmige Kontur aus. Der Querschnitt weist an den Ecken Abschrägungen 48 auf, welche die Handhabung erleichtern und unnötige Masse einsparen.

Es sind dort auch Laschen 52 dargestellt, die einstückig mit den Endrahmen 18, 20 ausgebildet sind und durch Wegbiegen von diesen in Stapelrichtung S abragen. Diese Laschen 52 dienen als Polanschlüsse des Zellblocks 1. Die Laschen 52 weisen jeweils eine Bohrung 54 auf, die eine Verbindungsschraube 58 aufnehmen kann. Mittels der Verbindungsschraube 58 sind weitere Verbindungsmittel wie etwa eine Verbindungslasche 60 befestigbar. Auf diese Weise kann der Zellblock 1 mit einem Versorgungsnetz, etwa einem Bordnetz eines Fahrzeugs, verbunden werden. Es kann auch zunächst eine Verbindung mit geeignet ausgebildeten Aufnahmen in einem Gehäuse hergestellt werden, das seinerseits Anschlusspole zur Verbindung mit einem Versorgungsnetz bereithält. Diese Laschen 52 mit Schrauben 58 oder ähnlichen Verbindungsmitteln können auch zur Befestigung des Zellblocks 1 in einem Batteriegehäuse verwendet werden. Es können etwa im Batteriegehäuse befindliche Gewindehülsen eingesetzt werden, welche die Verbindungsschrauben 58 aufnehmen. Auf diese Weise kann auf eine extra Stromschiene verzichtet werden.

Fig. 6 zeigt ein Ersatzschaltbild eine Anordnung von Akkumulatorzellen 2, wie sie vorstehend beschrieben wurde. (Es wurde eine Abwandlung mit nur neun Zellen 2 anstatt elf wie in Fign. 1, 3, 5 dargestellt.)

Die Figur zeigt neun mit wechselnden Polrichtungen angeordnete Zellen 2, die seriell miteinander verbunden sind. Die Verbindung erfolgt gemäß der Ausführungsform über jeweils zwei Kontakthülsen 32 (vgl. Fig. 1, 2), die gemeinsam eine Kontaktverbindungseinrichtung im Sinne der Erfindung bilden. Den Abschluss der Reihenschaltung bilden die Anschlusspole, die gemäß der Ausführungsform durch die Druckplatten 18, 20 bzw. deren Laschen 52 verkörpert werden.

Die Anzahl der Zellen 2 in einem Zellblock ist grundsätzlich beliebig. Da die einzelnen Akkumulatorzellen 2 eine einheitliche Zellspannung aufweisen, ist über die Anzahl der in Reihe geschalteten Zellen 2 die Polspannung einstellbar. Abgesehen von unvermeidlichen Verlusten entspricht die Polspannung Uₚ der Summe der Zellenspannungen Uᵢ, im vorliegenden Fall also 9 × Uᵢ. Die Ladekapazität der Gesamtanordnung entspricht jedoch nur der Ladekapazität der Einzelzelle.

Fig. 7 zeigt ein Ersatzschaltbild einer zweiten Ausführungsform der vorliegenden Erfindung. Die zweite Ausführungsform ist konstruktiv mit der ersten Ausführungsform identisch. Der Unterschied besteht lediglich in der Zusammenschaltung der Zellen 2 untereinander. Und zwar sind hier jeweils drei aufeinanderfolgende Zellen 2 in einer Parallelschaltung zusammengefasst, d.h., die neun Zellen 2 des Zellblocks bilden drei Gruppen von je drei parallel geschalteten Zellen 2. Zu diesem Zweck sind die jeweils drei Zellen einer Gruppe mit gleicher Polrichtung in dem Stapel angeordnet, und die gleichen Pole der Zellen 2 dieser Gruppe sind durch Kontakthülsen 32 untereinander verbunden. Jede Gruppe ist wiederum mit unterschiedlicher Polrichtung zu der nächsten Gruppe in dem Stapel angeordnet, und die letzte Zelle der einen Gruppe ist mit der ersten Zelle der nächsten Gruppe in Reihe geschaltet.

Jede Gruppe parallel geschalteter Zellen 2 weist die Spannung einer Einzelzelle auf, aber mit dreifacher Ladekapazität. Die Gesamtanordnung in Reihe geschalteter Gruppen weist mithin eine Polspannung auf, die der dreifachen Zellenspannung entspricht, also nur 3 × Uᵢ oder ein Drittel der Polspannung in der ersten Ausführungsform. Die Gesamtkapazität ist jedoch dafür drei Mal so hoch wie bei der ersten Ausführungsform.

Durch Variieren und Kombinieren von Parallel- und Reihenschaltungen sind so auf sehr einfache Weise nahezu beliebige Vielfache der Zellenspannung und - kapazität realisierbar.

Weitere Variations- und Kombinationsmöglichkeiten ergeben sich durch Reihen- und/oder Parallelschaltung von ganzen Zellblöcken.

In Fign. 8 und 9 ist eine Reihenschaltung von vier Zellblöcken als dritte Ausführungsform der vorliegenden Erfindung dargestellt. Dabei zeigt Fig. 8 eine perspektivische Darstellung der Anordnung, und Fig. 9 zeigt eine Seitenansicht der Anordnung, jeweils wiederum unter Weglassen eines allfälligen Gehäuses. Die Anordnung ist wiederum bestimmender Bestandteil einer elektrochemischen Energiespeichervorrichtung im Sinne der Erfindung.

Wie in den Figuren dargestellt, sind vier Zellblöcke 1 so hintereinander angeordnet, dass die zweite Druckplatte 20 eines Zellblocks der ersten Druckplatte 18 eines nächsten Zellblocks zugewandt ist. Die Zellblöcke 1 unterscheiden sich von den Zellblöcke 1 der ersten Ausführungsform insoweit, als von der Druckplatte 18 Laschen 52a abragen und von der Druckplatte 20 Laschen 54b abragen, wobei die Laschen 52a, 52b in unterschiedlichen Höhen abragen. Der Höhenunterschied ist so bemessen, dass bei stirnseitigem Zusammenschieben der Zellblöcke 1 die Laschen 52b der zweiten Druckplatte 20 des einen Zellblocks gerade unter die Laschen 52a der ersten Druckplatte 18 des anderen Zellblocks passen. Die Zellblöcke 1 können daher mittels jeweils nur zwei Verbindungsschrauben 58 verbunden werden, die durch die jeweils fluchtenden Bohrungen 54 (nicht sichtbar) der Laschen 52a, 52b gesteckt werden. Es ist daher kein Verbindungsblech und zwischen hintereinander angeordneten Zellblöcken 1 erforderlich, und der Abstand zwischen den Zellblöcken 1 kann minimal gehalten werden. Zur weiteren Verbindung mit einem Versorgungsnetz (nicht näher dargestellt) ist an nach außen weisenden Laschen 52a, 52b des ersten und letzten Zellblocks 1, 1 jeweils ein Verbindungsblech vorgesehen.

Wie in Fig. 9 gezeigt, trägt jeder Zellblock 1 ein Steuergerät 62. Die Zellblöcke 1 sind daher individuell und einzeln steuerbar, und Zellblöcke 1 können ohne Weiteres ausgetauscht werden.

Die Polspannung der Anordnung beträgt das Vierfache der Polspannung eines einzelnen Zellblocks 1.

Eine Reihenschaltung mehrerer Zellblöcke ist auch möglich, indem Zellblöcke nebeneinander angeordnet werden.

In Fig. 10 ist eine Reihenschaltung von zwei Zellblöcken als vierte Ausführungsform der vorliegenden Erfindung dargestellt, wiederum unter Weglassen eines allfälligen Gehäuses. Die Anordnung ist wieder bestimmender Bestandteil einer elektrochemischen Energiespeichervorrichtung im Sinne der Erfindung.

Zwei Zellblöcke 1 sind jeweils wie die Zellblöcke einer der vorherigen Ausführungsformen aufgebaut. Sie sind wechselsinnig in der Weise angeordnet, dass die erste Druckplatte 18 des einen Zellblocks 1, der hier als dessen negativer Pol angenommen wird, neben der zweiten Druckplatte 20 des anderen Zellblocks 1 als dessen positivem Pol zu liegen kommt. Mittels eines Verbindungsblechs 60 ist eine Verbindung zwischen den Laschen 52 einer ersten und einer zweiten Druckplattes 18, 20 auf einer Stirnseite der Zellblöcke 1 hergestellt. Auf der anderen Stirnseite sind die Laschen 52 der jeweiligen Druckplatten 18, 20 über Verbindungsbleche 60 mit einem Versorgungsnetz verbunden und bilden so Minus- und Pluspol der Anordnung. Die Verbindungsbleche 60 sind jeweils mit Hilfe von Verbindungsschrauben 58 (nicht näher dargestellt) mit den jeweiligen Laschen 52 verbunden.

Sollen noch mehr Zellblöcke 1 in dieser Weise verbunden werden, sind sie jeweils mit abwechselnder Polrichtung nebeneinander anzuordnen und auf wechselnden Stirnseiten miteinander zu verbinden. Die nicht untereinander verbundenen Stirnseiten des ersten und letzten Zellblocks bilden jeweils die Pole der Anordnung.

Auf ähnliche Weise ist eine Parallelschaltung mehrerer Zellblöcke möglich, um die Gesamtkapazität der Anordnung zu erhöhen.

In Fig. 11 ist eine Parallelschaltung von zwei Zellblöcken als fünfte Ausführungsform der vorliegenden Erfindung dargestellt, wiederum unter Weglassen eines allfälligen Gehäuses. Die Anordnung ist wieder bestimmender Bestandteil einer elektrochemischen Energiespeichervorrichtung im Sinne der Erfindung.

Zwei Zellblöcke 1 sind jeweils wie die Zellblöcke einer der vorherigen Ausführungsformen aufgebaut. Im Unterschied zu der vierten Ausführungsform sind sie gleichsinnig in der Weise angeordnet, dass jeweilige erste Druckplatten 18, die hier als positive Pole der Zellblöcke 1 angenommen werden, und jeweilige zweite Druckplatten 20 als negative Pole der Zellblöcke 1 nebeneinander zu liegen kommt. Mittels Verbindungsblechen 60 ist jeweils eine Verbindung zwischen den Laschen 52 nebeneinander liegender erster Druckplatten 18 und zwischen den Laschen 52 nebeneinander liegender zweiter Druckplatten 20 der Zellblöcke 1 hergestellt. Die freien Laschen 52 der Druckplatten 18, 20 eines der Zellblöcke sind über Verbindungsbleche 60 mit einem Versorgungsnetz verbunden und bilden so Minus- und Pluspol der Anordnung. Die Verbindungsbleche 60 sind jeweils mit Hilfe von Verbindungsschrauben 58 (nicht näher dargestellt) mit den jeweiligen Laschen 52 verbunden.

Sollen noch mehr Zellblöcke 1 in dieser Weise verbunden werden, ist die gezeigte Anordnung einfach durch Hinzunahme weiterer Blöcke zu erweitern.

Die Anordnungen der dritten, vierten und fünften Ausführungsform können kombiniert werden, um beliebige Spannungs- und Kapazitätswerte zu verwirklichen. Auch der Gedanke der zweiten Ausführungsform kann einbezogen werden.

Eine sechste Ausführungsform der vorliegenden Erfindung ist in Fig. 12 dargestellt. Dabei sind Zellblöcke 1 a, 1 a und ein Zellblock 1 b nebeneinander angeordnet und in der Art der vierten Ausführungsform in Reihe miteinander verschaltet. Die Besonderheit der sechsten Ausführungsform besteht darin, dass der Zellblock 1 b kürzer ist, also eine geringere Anzahl von Akkumulatorzellen 2 (nicht näher dargestellt) aufweist als die Zellblöcke 1a. Auf diese Weise kann nicht nur die Polspannung der Anordnung besonders fein eingestellt werden, sondern es ist möglich, die äußere Geometrie der Anordnung an den zur Verfügung stehenden Einbauraum anzupassen. Die in Fig. 12 gezeigte Anordnung gemäß dieser Ausführungsform bildet, gegebenenfalls zusammen mit einem Gehäuse und weiteren Einbauteilen, eine elektrochemische Energiespeichervorrichtung im Sinne der Erfindung.

Auch hier ist eine Erweiterung und Anpassung möglich, indem der Gedanke der zweiten, dritten, vierten und/oder fünften Ausführungsform zusätzlich angewendet wird.

Die nächsten Ausführungsformen sind Weiterbildungen an einzelnen Gesichtspunkten der ersten und zweiten Ausführungsform.

Fig. 13 zeigt eine Einzelheit eines Zellblocks einer siebenten Ausführungsform. Die Lage im Zellblock wird durch eine Linie XIII in Fig. 3 angedeutet, allerdings unterscheiden sich die in Fig. 13 gezeigten Elemente teilweise von denen in Fig. 3.

In Fig. 13 ist ein Verschraubungsbereich der Zylinderschraube 22 mit der zweiten Druckplatte 20 mit der Mutter 24, Abschnitten letzten drei Akkumulatorzellen 2ₙ, 2ₙ₋₁, 2ₙ₋₂ und der letzten drei Zwischenrahmen 14_{m,} 14ₘ₋₁, 14ₘ₋₂, sowie einigen Kontakthülsen 32 in diesem Ausschnitt dargestellt.

Im Unterschied zur ersten Ausführungsform ist die Mutter nicht über eine Scheibe 24, sondern über eine Isolierbuchse 64 an der Druckplatte 20 angezogen. Die Isolierbuchse 64 weist einen Kragen mit ausreichenden Außendurchmesser, um der Mutter eine geeignete Auflagefläche zur Verfügung zu stellen, auf und erstreckt sich, die Zylinderschraube 22 aufnehmend, durch eine nicht näher bezeichnete Durchgangsbohrung in der Druckplatte 20 hindurch und ein wenig in die Durchgangsbohrung 28 in dem Endrahmen 16 hinein. Wo auf der gegenüberliegenden Seite eine Kontakthülse 32 einen Kontakt zwischen einer Akkumulatorzelle 2 und dem Endrahmen 20 (, 18) herstellt, erstreckt sich die Isolierbuchse 64 ein wenig in den Luftspalt 56 zwischen der Zylinderschraube 22 und der Kontakthülse 32 hinein.

Auf diese Weise wird sowohl eine sichere elektrische Trennung der Zylinderschrauben 22 von den Druckplatten 18, 20 als auch eine Zentrierung der Druckplatten 18, 20 in radialer Richtung erreicht.

Mit Bezug auf Fign. 14 bis 17 wird nun ein Zellblock einer achten Ausführungsform beschrieben, der bestimmender Bestandteil einer elektrochemischen Energiespeichervorrichtung im Sinne der Erfindung ist. Dabei zeigen Fig. 14 einen zusammengebauten Zustand in perspektivischer Ansicht, Fig. 15 desgleichen ohne Druckplatten und Verspannung, Fig. 16 einen Endrahmen in dieser Ausführungsform in der stirnseitiger Ansicht und Fig. 17 einen Zwischenrahmen in dieser Ausführungsform in perspektivischer Ansicht.

In Fig. 14 ist ein fertig montierter Zellblock 1c der vorliegenden Ausführungsform in perspektivischer Ansicht so gezeigt, dass die Stirnseite einer zweiten Druckplatte 20 und die Oberseite der Gesamtkontur prominent sichtbar ist. Im Unterschied zu der ersten Ausführungsform weist die prismatische Kontur keine Abschrägung der Kanten auf. Statt dessen erstreckt sich an der Oberseite des Zellblocks 1 c ein Signalkabel 66 in einem nach oben offenen Kanal 68, der über die gesamte Länge des Zellblocks mit Ausnahme der Druckplatten 20, 18 verläuft. Ein solcher Kanal 68 ist in zwei Kanten der prismatischen Struktur vorhanden. Von der Stirnseite her sind die Kanäle 68 durch je eine Zugangsöffnung 70 zugänglich, die in der zweiten Druckplatte 20 eingearbeitet sind.

Das Signalkabel 66 dient dem Anschluss des Steuergeräts 62, das in dieser Ausführungsform an der zweiten Druckplatte 20 verschraubt ist. In gleicher Weise ist ein zweites Steuergerät 72, von welchem aus ein weiteres Signalkabel (nicht näher dargestellt) in dem anderen der Kanäle 68 geführt ist, an der zweiten Druckplatte 20 verschraubt. Das zweite Steuergerät dient vorzugsweise der Regulierung des Wärmehaushalts und ist z.B. mit Thermoelementen verbunden, die etwa an den Akkumulatorzellen 2 oder an sonst geeigneter Stelle im Innenraum des Zellblocks 1 c angebracht sind.

Fig. 15 zeigt den in Fig. 14 gezeigten Zellblock 1 c noch einmal ohne die Druckplatten 20, 18, sodass die Stirnseite des zweiten Endrahmens 16 mit den Verstrebungen 46 sichtbar ist. Im Unterschied zur ersten Ausführungsform dienen die Streben 46 hier nicht der Befestigung der Steuergeräte.

Fig. 16 zeigt den zweiten Endrahmen 16 in stirnseitiger Aufsicht. Der zweite Endrahmen 16 dieser Ausführungsform unterscheidet sich von dem zweiten Endrahmen 16 der ersten Ausführungsform darin, das an der Oberseite links und rechts je eine Einkerbung 74 von U-förmigem Querschnitt eingearbeitet ist, während die Ecken nur eine Fase 84 anstelle einer deutlicheren Abschrägung aufweisen. Am Grund der Einkerbungen 74 sind Anschlusselemente 76, 78 in dem rechten bzw. linken Kanal 74 zu erkennen. Hierüber sind Einzelleitungen des Signalkabels 66 anzuschließen.

Fig. 17 zeigt einen Zwischenrahmen 14 nach dieser Ausführungsform in perspektivischer Ansicht. Auch der Zwischenrahmen 14 trägt an der Oberseite an entsprechender Stelle Einkerbungen 74. Alle Einkerbungen 74 auf einer Seite aller Zwischenrahmen 14 und der Endrahmen 12a, 16 bilden einen Kanal 68. Der Zwischenrahmen 14 dieser Ausführungsform unterscheidet sich des Weiteren von dem Zwischenrahmen 14 der ersten Ausführungsform durch einen Freigang 80, die unmittelbar unterhalb einer der Einkerbungen 74 ausgebildet ist. Der Freigang 80 ist vorgesehen, um einen Niet oder dergleichen zur Befestigung eines LV-Kontakts aufzunehmen, und ist in der gezeigten Ausführungsform ein kreisförmiges Sackloch, weist also insbesondere eine geringere Tiefe als die Dicke des Zwischenrahmens 14 auf. Der Freigang 80 kann, obschon nicht näher dargestellt, eine Verbindung zu der Einkerbung 74 aufweisen. Eine solche Verbindung kann die Breite des Durchmessers des Freigangs 80 oder eine geringere Breite aufweisen.

In einer Abwandlung kann der Freigang 80 auch als Durchgangsbohrung ausgebildet sein. So bilden alle Freigänge einen Innenkanal unterhalb des von au-βen zugänglichen Kanals 68, in welchem eine innenliegende Steuerleitung oder Steuerelemente untergebracht sein kann/können.

Ein weiterer Unterschied zur ersten Ausführungsform betrifft die Lage der Passbohrungen und Zentrierstifte.

Zum einen weisen die Paare von Passbohrungen auf unterschiedlichen lateralen Seiten des Zwischenrahmens 14 unterschiedliche Abstände voneinander auf. D.h., das erste Paar von Passbohrungen 34a, das sich der einen der lateralen Seiten des Zwischenrahmens 14 befindet, weist einen Abstand X₁ voneinander auf, der größer ist als ein Abstand X₂ des zweiten Paares von Passbohrungen 34b, das sich auf der gegenüberliegenden lateralen Seite befindet. In entsprechender Weise weisen auch die Passbohrungen in den Stromableitern der Akkumulatorzellen 2 unterschiedliche Abstände auf (nicht näher dargestellt). Um auf diese Weise die Einbaulage der Akkumulatorzellen 2 zu kodieren, d.h., eine Verpolungsschutzeinrichtung im Sinne der Erfindung zu verwirklichen, sind z.B. die Passbohrungen auf dem positiven Stromableiter einer Akkumulatorzelle 2 stets mit dem größeren Abstand X₁ angeordnet, während sie auf dem negativen Stromableiter einer Akkumulatorzelle 2 stets mit dem kleineren Abstand X₂ angeordnet sind.

Zur Kodierung der Schaltung sind mehrere Arten von Zwischenrahmen 14 vorzusehen. Hierzu sind zur Orientierung in Fig. 17 die sichtbare Stirnseite des Zwischenrahmens 14 als Vorderseite V und die nicht sichtbare Stirnseite als Rückseite bzw. hintere Seite H gekennzeichnet, und sind die lateralen Seiten mit links (L) und rechts (R) gekennzeichnet.

Bei einer ersten Art von Zwischenrahmen 14 sind die Passbohrungen 34a, 34b in dem Zwischenrahmen 14 als Sackbohrungen und kreuzweise unterschiedlich ausgebildet. D.h., es sind etwa auf der linken Vorderseite V:L und der rechten Rückseite H:R Passbohrungen 34a mit dem größeren Abstand X₁ als Sacklöcher ausgebildet, während auf der linken Rückseite H:L und der rechten Vorderseite V:R Passbohrungen 34b mit dem kleineren Abstand X₂ als Sacklöcher ausgebildet sind. Auf der rechten lateralen Seite R sind dabei die Durchgangsbohrungen 28 des kleineren Durchmessers ausgebildet, und auf der linken lateralen Seite L sind die Durchgangsbohrungen 29 des größeren Durchmessers zur Aufnahme der Kontakthülsen 32 ausgebildet.

Bei einer zweiten Art von Zwischenrahmen (14', in der Figur nicht dargestellt) sind die Passbohrungen 34a, 34b in dem Zwischenrahmen 14 ebenfalls als Sacklöcher kreuzweise unterschiedlich, aber anders herum als bei der ersten Art ausgebildet. D.h., es sind auf der rechten Vorderseite V:R und der linken Rückseite H:L Passbohrungen 34a mit dem größeren Abstand X₁ als Sacklöcher ausgebildet, während auf der rechten Rückseite H:R und der linken Vorderseite V:L Passbohrungen 34b mit dem kleineren Abstand X₂ als Sacklöcher ausgebildet sind. Die Lage der Durchgangsbohrungen 28, 29 und Kontakthülsen 32 ist ebenfalls umgekehrt zu derjenigen bei der ersten Art 14. D.h., Auf der linken Seite L sind die Durchgangsbohrungen 28 des kleineren Durchmessers ausgebildet, und auf der rechten Seite R sind die Durchgangsbohrungen 29 des größeren Durchmessers zur Aufnahme der Kontakthülsen 32 ausgebildet.

Durch abwechselndes Anordnen der Zwischenrahmen der ersten und der zweiten Art wird eine Reihenschaltung zweier Zellen 2 kodiert. Auf zwei einander zugewandten Seiten der Zwischenrahmen liegen immer Passbohrungen gleichen Abstands einander gegenüber, aber es können auf Vorder- und Rückseite eines Zwischenrahmens zwei aufeinanderfolgende Zellen 2 nur mit entgegengesetzter Pollage angeordnet werden, da die auf Vorder- und Rückseite angeordneten Passbohrungen auf jeder lateralen Seite unterschiedlichen Abstand aufweise, d.h., unterschiedliche Pol-Lagen kodieren. Ferner sind die Seiten mit Kontakthülsen in aufeinanderfolgenden Zwischenrahmen immer abwechselnd links und rechts angeordnet. Auf diese Weise wird sichergestellt, dass auf einer lateralen Seite L, R eines Zwischenrahmens immer ein Stromableiter einer ersten Polarität auf der Vorderseite V mit einem Stromableiter der zweiten Polarität auf der Rückseite H verbunden wird, während auf der anderen lateralen Seite R, L keine Verbindung der Stromableiter auf der Vorder- und Rückseite erfolgt. Dies entspricht der Reihenschaltung in Fig. 6.

Bei einer dritten Art von Zwischenrahmen (14", in der Figur nicht dargestellt) sind alle Passbohrungen 34a, 34b durchgehend ausgebildet, wobei etwa auf der linken Seite L die Passbohrungen 34a mit dem größeren Abstand X₁ durchgehend ausgebildet sind, während auf der rechten Seite R die Passbohrungen 34b mit dem kleineren Abstand X₂ durchgehend ausgebildet sind. Ferner sind auf beiden lateralen Seiten L, R die größeren Durchgangsbohrungen 29 mit den Kontakthülsen 32 angeordnet (in der Figur nicht dargestellt). Hierdurch wird eine Parallelschaltung zweier Zellen 2 kodiert, denn es können zwei aufeinanderfolgende Zellen 2 nur mit gleicher Pollage angeordnet werden. D.h., es werden immer ein Stromableiter einer ersten Polarität auf der Rückseite H eines Zwischenrahmens 14' und ein Stromableiter der gleichen Polarität auf der Vorderseite V des nächsten Zwischenrahmens 14' angeordnet.

Die dritte Art von Zwischenrahmen kommt etwa bei einer Anordnung nach der zweiten Ausführungsform gemäß Fig. 7 zwischen den parallel geschalteten Akkumulatorzellen 2ᵢ mit 2ᵢᵢ, 2ᵢᵢ mit 2ᵢᵢᵢ, 2ᵢ, mit 2ᵥ etc. zum Einsatz. Bei Übergang in eine Reihenschaltung zweier Gruppen parallel geschalteter Zellen, etwa 2ᵢᵢᵢ mit 2ᵢ, und 2ᵥᵢ mit 2ᵥᵢᵢ in Fig. 7, kommt ein Zwischenrahmen der ersten oder der zweiten Art zum Einsatz.

In den Endrahmen 12a, 16 sind nur auf der einem Zwischenrahmen zugewandten Seite Passbohrungen 34a, 34b als Sacklöcher ausgebildet. Ihre Lage ergibt sich aus der gewünschten Polrichtung der ersten bzw. letzten Akkumulatorzelle 2.

Zum anderen sind die Passbohrungen 34a, 34b im Bereich der Ausklinkungen 42, also in den Flächen reduzierter Materialstärke ausgebildet, während die Durchgangsbohrungen 28, 29 in Flächen voller Materialstärke ausgebildet sind, welche Druckflächen 86 zum Übertragen des Spanndrucks der Zylinderschrauben 22 auf die Randbereiche 6, insbesondere die Stromableiter 8, 10 der Akkumulatorzellen 2 bilden. Dies erlaubt bei der Montage ein geringfügiges Spiel und im Betrieb ein geringfügiges "Gehen" der Elemente relativ zueinander, da die Zentrierstifte 38 über einen kleinen Weg durch freien Raum verlaufen.

In einer Abwandlung der achten Ausführungsform sind auch bei der dritten Art von Zwischenrahmen die Passbohrungen 34a, 34b als Sacklöcher ausgebildet, wobei die Bohrungstiefe geringer als die Hälfte der Materialstärke ist. Dies vereinfacht die Montage, da die Zentrierstifte 38 beim Einstecken einen Anschlag vorfinden.

In einer weiteren Abwandlung der achten Ausführungsform sind die Passbohrungen 34a, 34b wie die Durchgangsbohrungen 28, 29 in den Druckflächen 86 ausgebildet. Hierdurch kann die Zentrierung präziser verwirklicht werden, erfordert aber auch eine höhere Fertigungsgenauigkeit. Man könnte auch sagen, dass bei dieser Abwandlung die Zentrierstifte 38 gleichzeitig dem Verpolschutz dienen.

In einer weiteren Abwandlung der achten Ausführungsform sind die unteren Ecken der Rahmenelemente 12a, 14, 16, 18, 20 etwa aus Gewichtsgründen mit einer deutlicheren Abschrägung (wie die Abschrägungen 48 der ersten Ausführungsform) anstelle der Fasen 84 versehen.

In Fign. 18 und 19 sind ein Zellblock und mehrere in Reihe verbundener dieser Zellblöcke als neunten Ausführungsform der vorliegenden Erfindung dargestellt. Dabei zeigt Fig. 18 eine perspektivische Darstellung eines einzelnen Zellblocks gemäß dieser Ausführungsform, und Fig. 19 zeigt eine Seitenansicht der Anordnung von vier in Reihe geschalteten Zellblöcken gemäß dieser Ausführungsform, jeweils wiederum unter Weglassen eines allfälligen Gehäuses. Die Anordnung wie auch der einzelne Zellblock ist wiederum bestimmender Bestandteil einer elektrochemischen Energiespeichervorrichtung im Sinne der Erfindung.

Der in Fig. 18 gezeigte Zellblock 1 d weist wie bei der achten Ausführungsform zwei Kanäle 68 an der Oberseite auf. In seinem Aufbau unterscheidet er sich durch eine veränderte Art der Anschlusspole. Und weisen bei dieser Ausführungsform die Druckplatten 18, 20 Laschen 52c auf, die in gleicher Ebene seitlich über die prismatische Kontur des Zellblocks 1d hinausragen. Es ist bei dieser Art der Ausbildung von Verbindungslaschen keine Biegung erforderlich. Vielmehr beschränkt sich die Herstellung der Druckplatten im Wesentlichen auf einen Stanzvorgang.

Die Verbindung mehrerer Zellblocks 1 d dieser Ausführungsform in Reihe ist in Fig. 19 dargestellt. Dort sind vier Zellblocks 1d in Stapelrichtung hintereinander angeordnet. Die erste Druckplatte 18 eines Zellblocks 1d ist mit der zweiten Druckplatte 20 des nächsten Zellblocks 1d über Verbindungsschrauben 58 und eine Verbindungsmutter 88 verschraubt, wobei zur Aufrechterhaltung eines erforderlichen Mindestabstands eine Distanzhülse 90 zwischen der erste Druckplatte 18 des einen Zellblocks 1d und der zweiten Druckplatte 20 des nächsten Zellblocks 1 d angeordnet ist.

Die Druckplatten 18, 20 weisen ferner Einsenkungen 82 zur Aufnahme der Köpfe der Zylinderschrauben 22 bzw. der Scheiben 26 auf. Hierdurch kann der erforderliche Abstand zwischen den Zellblöcken 1d verringert werden.

In Fign. 20 und 21 ist eine Akkumulatorzelle gemäß einer zehnten Ausführungsform gezeigt. Dabei ist Fig. 20 eine perspektivische Ansicht der Akkumulatorzelle, und Fig. 21 ist eine Draufsicht, d.h., eine Ansicht auf die obere Schmalseite der Akkumulatorzelle dieser Ausführungsform.

Die Akkumulatorzelle 2 weist gemäß der Darstellung in Fig. 20 wie in den Ausführungsformen zuvor einen aktiven Teil 4, einen diesen umgebenden Randbereich 6, und zwei seitlich abragende Stromableiter 8, 10 auf. Der durch zwei aufeinandergelegte und miteinander verschweißte Hüllfolien (nicht näher bezeichnet) gebildete Randbereich 6 ist im oberen und unteren Teil zu einem Falz 50 gefaltet. Dort, wo die Stromableiter 8, 10 zwischen den beiden Hüllfolien verläuft, weist der Randbereich 6 jeweils eine Verdickung 92 auf.

Bei dieser Ausführungsform ist der Falz 50 so ausgeführt, dass seine Dicke t gleich der Dicke der Stromableiter 8, 10 ist. D.h., die Dicke t des Falzes 50 ist etwas geringer als die Dicke der Verdickungen 92.

Auf diese Weise üben die Stirnflächen der Rahmenelemente 12, 14, 16 einen gleichmäßigen Druck auf die Stromableiter 8, 10 und die Falze 50 aus und halten die Akkumulatorzelle 2 besonders sicher. Die Übergänge und Verbindungen zwischen Stromableitern 8, 10 und den Hüllfolien im Randbereich 6 wie auch die Verbindungen zwischen den Stromableitern 8, 10 und den stromführenden Folien im Inneren des aktiven Teils 4 werden geringeren mechanischen Belastungen ausgesetzt.

Ferner sind auf einer Stirnseite der Zelle 2 dieser Ausführungsform im Bereich des aktiven Teils 4 zwei elastische Kissen 94 angebracht. Die Kissen 94 sind aus einem elastischen Material wie etwa Schaumstoff, Moosgummi oder dergleichen hergestellt und direkt auf der Außenhülle des aktiven Bereichs 4 befestigt, z.B. aufgeklebt oder aufgespritzt. Dies vereinfacht die Montage und verhindert ein Verrutschen oder Abfallen der Kissen 94 bei der Handhabung oder im Betrieb. Ihre Dicke ist etwas größer als der Abstand zwischen zwei Zellen 2 in einem Zellblock 1, sodass eine zuverlässige und schonende elastische Abstützung in axialer, d.h., Stapelrichtung der Zellen 2 gegeben ist. Auf diese Weise werden Schwingungen der Zellen 2 wirksam abgefedert. Aus Stabilitätsgründen sind die Kissen 94 in Stapelrichtung mit den Verstrebungen 46 in Flucht angeordnet.

Die Kissen 94 sind Federelemente im Sinne der Erfindung. Durch die Verwendung mehrerer Eiastomerwerkstoffe und der Flächen das Federverhalten kann das Federverhalten angepasst werden.

In Fign. 22 bis 25 sind Elemente eines Zellblocks in einer elften Ausführungsform der vorliegenden Erfindung dargestellt. Dabei ist Fig. 22 eine perspektivische Darstellung zweier Akkumulatorzellen in ihrer Anordnung in dem Zellblock mit Kontaktleisten gemäß dieser Ausführungsform, ist Fig. 23 eine Draufsicht, d.h., eine Ansicht von oben auf die langen Schmalseiten der Akkumulatorzellen, ist Fig. 24 eine perspektivische Darstellung einer Kontaktleiste dieser Ausführungsform, und ist Fig. 25 eine stirnseitige Ansicht eines Zwischenrahmens dieser Ausführungsform.

Fig. 22 zeigt zwei aufeinanderfolgende Akkumulatorzellen 2ᵢ und 2ᵢ₊₁, die stellvertretend für eine Vielzahl von Zellen 2 stehen, in ihrer Anordnung in dem Zellblock gemäß dieser Ausführungsform in perspektivischer Darstellung. In Fig. 23 ist diese Anordnung in einer Draufsicht (Pfeil XXIII in Fig. 22) dargestellt.

Auf den flachen Seiten der aktiven Teile 4 der Zellen 2 sind elastische Kissen 95 angebracht. Dies sind kleiner als die elastischen Kissen 94 der zehnten Ausführungsform. Insbesondere weisen sie eine geringere Länge auf, und es sind zwei Kissen 95 übereinander in Richtung der Höhe der Zellen 2 angeordnet. Die Anordnung der Kissen 95 unterscheidet sich weiter von derjenigen der Kissen 94 der zehnten Ausführungsform darin, dass je zwei Kissen 95 sowohl auf der Vorder- als auch auf der Rückseite der Zellen 2 angeordnet sind, aber nur auf der lateralen Hälfte des Stromableiters 8, während auf der Hälfte des Stromableiters 10 keine Kissen angeordnet sind. Die Funktion der Kissen 95 entspricht derjenigen der Kissen 94 der zehnten Ausführungsform. Zusätzlich wird in dieser Ausführungsform die Polrichtung der Zellen 2 kodiert, sodass etwa die Kissen 95 nur auf der Seite des Plus-Pols angeordnet sind. Auf diese Weise wird durch abwechselndes Einbauen derart, dass die Kissen 95 einmal auf der rechten Seite und das nächste Mal auf der linken Seite liegen, die Zellen 2 immer so angeordnet sein, dass die Pole für eine Reihenschaltung richtig orientiert sind. Die Kissen 95 sind daher in dieser Ausführungsform auch eine Verpolungsschutzeinrichtung im Sinne der Erfindung.

Die Kontaktierung der Stromableiter 8, 10 erfolgt in dieser Ausführungsform nicht durch Hülsen, sondern durch riegelförmige Kontaktleisten 96. Diese weisen die Grundform eines Quaders auf, wobei von zwei gegenüberliegende Langseiten Erhebungen abragen, welche Kontakt- und Druckflächen 100 zur Kontaktierung mit den Stromableitern 8, 10 bilden. Zwischen den Druckflächen 100 liegen dementsprechende Vertiefungen oder Ausklinkungen 102. Die Druckflächen 100 gegenüberliegender Erhebungen werden durch Durchgangsbohrungen 98 verbunden. Durch diese Durchgangsbohrungen 98, die mit entsprechenden Durchgangsbohrungen 30 in den Stromableitern 8, 10 fluchten, verlaufen die Zylinderschrauben (22, hier nicht näher dargestellt) zum Verspannen des Zellblocks.

Die Kontaktleisten 96 sind aus einem leitfähigen Material wie etwa Kupfer, Messing, Bronze oder dergleichen hergestellt und sind Kontaktverbindungselemente im Sinne der Erfindung. Gegenüber den Kontakthülsen 32 anderer Ausführungsformen dienen die Druckflächen 100 der Kontaktleisten 96 vollständig als Kontaktflächen. Daher ist der Übergangswiderstand zwischen verbundenen Stromableitern 8, 10 bei dieser Ausführungsform geringer.

Die Vertiefungen 102 bilden wie bei der ersten Ausführungsform seitliche Öffnungen, durch welche Luft zur Temperierung der Zellen 2 im Inneren des Zellblocks strömen kann.

Von einer Langseite der Kontaktleisten 96, die senkrecht zu den Druckflächen 100 steht, ragen mehrere längs verlaufende Rippen 104 ab. Die Rippen 104 weisen in Richtung des Inneren des Zellblocks und dienen als Kühlflächen, die von dem durch die Öffnungen 102 strömenden Kühlfluid umströmt werden. Die Rippen 104 sind auf geeignete Art so ausgebildet, dass ein möglichst guter Wärmeübergang erzeugt wird. Hier sind die gängigen Methoden der Wärmetechnik anwendbar. Beispielsweise sind die Rippen 104 besonders wirksam, wenn sie in Strömungsrichtung (bei erzwungener Konvektion) bzw. in Richtung der Schwerkraft (bei natürlicher Konvektion) angeordnet sind. Ferner sind die Strömungswege so ausgelegt, dass eine möglichst turbulente Strömung entsteht. Auf diese Weise dienen die Kontaktleisten 96 insgesamt Kühlkörper, mit Hilfe derer in den aktiven Teilen 4 der Zellen 2 erzeugte Wärme über die Stromableiter 8, 10 abgeleitet werden kann.

In Fig. 25 ist ein Zwischenrahmen 14 in dieser Ausführungsform in einer stirnseitigen Ansicht dargestellt. Auf der rechten Seite sind Durchgangsbohrungen 28 zur Aufnahme der Zylinderschrauben (22, nicht näher dargestellt) vorgesehen. Ebenso sind zwischen Druckflächen 86 Ausklinkungen 42 vorgesehen, die Öffnungen zum Ein- und/oder Ausströmen des Kühlfluids bilden. In den Flächen der Ausklinkungen 42 sind Zentrierstifte 38 in entsprechenden Passbohrungen 34 angeordnet. Auf der linken Seite ist eine Bucht 106 derart ausgebildet, dass nur noch ein schmaler Steg 108 die Ober- und Unterseite des Zwischenrahmens zusammenhält. Die Bucht 106 ist so bemessen, dass eine Kontaktleiste (96) genau zwischen zwei Passflächen 110 eingesetzt werden kann. Zur Innenseite des Zwischenrahmens 14 hin sind die Passflächen 110 in der Art eines Freischnitts 112 erweitert. Im Bereich des Freischnitts 112 kommen bei eingebauter Kontaktleiste (96) deren Rippen (104) zu liegen, sodass umströmendes Kühlfluid dort auch nach oben und unten abströmen kann. Der Steg 108 weist in bereits beschriebener Art Ausklinkungen 42 derart auf, dass sich mit den Ausklinkungen (102) der Kontaktleiste (96) fluchtende Öffnungen bilden.

Man beachte, dass bei dieser Ausführungsform drei Zylinderschrauben (22) je lateraler Seite vorgesehen sind. D.h., in den Kontaktleisten 96 sind jeweils drei Durchgangsbohrungen 98 in entsprechenden Erhebungen vorgesehen, in den Rahmenelementen 12, 14, 16 sind jeweils drei Durchgangsbohrungen 28 auf derjenigen der lateralen Seiten vorgesehen, die der Bucht 106 zur Aufnahme einer Kontaktleiste 96 gegenüberliegt, bei den Akkumulatorzellen 2 sind in jedem Stromableiter 8, 10 jeweils drei Durchgangsbohrungen 30 vorgesehen, und auch die Druckplatten 18, 20 weisen auf jeder lateralen Seite drei Durchgangsbohrungen auf.

Man beachte auch, dass bei dieser Ausführungsform alle Durchgangsbohrungen 30, 28, 98 den gleichen Durchmesser aufweisen und größere Durchgangsbohrungen (29 in der ersten Ausführungsform) zur Aufnahme von Kontakthülsen nicht erforderlich sind, da die Kontaktleisten 96 bereits den Kontakt zwischen benachbarten Stromableitern 8, 10 herstellen.

Auch bei dieser Ausführungsform ist die Abwandlung denkbar, dass die Passbohrungen 34 und Zentrierstifte 38 im Bereich der Druckflächen 86 anstatt der Ausklinkungen 42 angeordnet sind.

In Fign. 26 bis 31 sind Elemente eines Zellblocks in einer zwölften Ausführungsform der vorliegenden Erfindung dargestellt. Dabei ist Fig. 26 eine perspektivische Darstellung einer Akkumulatorzelle in ihrer Anordnung in dem Zellblock mit Kontaktierungsriegeln gemäß dieser Ausführungsform, ist Fig. 27 eine Explosionsansicht der Anordnung nach Fig. 26, wobei zusätzlich ein Isolationsriegel dargestellt ist, ist Fig. 28 eine Querschnittsansicht eines Halbriegels zur Kontaktierung eines positiven Stromableiters, ist Fig. 29 eine Querschnittsansicht eines Halbriegels zur Kontaktierung eines negativen Stromableiters, ist Fig. 30 eine Querschnittsansicht des Isolationsriegels aus Fig. 27, und ist Fig. 31 eine stirnseitige Ansicht eines Zwischenrahmens dieser Ausführungsform.

Fig. 26 zeigt in perspektivischer Ansicht einer Akkumulatorzelle 2 dieser Ausführungsform mit zwei Kontaktierungsriegeln 114, 122, die auf der gleichen axialen Seite der Stromableiter 8, 10 der Zelle 2 angeordnet sind. Die Kontaktierungsriegel 114, 122 dienen der Kontaktierung von Stromableitern 8, 10 von benachbarten Zellen 2. D.h., die gezeigte Anordnung verwirklicht eine Parallelschaltung mit einer nächsten Zelle 2 (nicht näher dargestellt), die in gleicher Polrichtung wie die dargestellte Zelle 2 im Zellblock angeordnet ist, wie etwa die Zellen 2ᵢᵥ und 2ᵥ in Fig. 7. Dabei kontaktiert der Kontaktierungsriegel 114 die Stromableiter 8 (auf der rechten Seite in der Zeichnung) der benachbarten Zellen miteinander, und der Kontaktierungsriegel 122 kontaktiert die Stromableiter 10 (auf der linken Seite in der Zeichnung) der benachbarten Zellen miteinander. Es sei der Stromableiter 8 als positiv (Plus) angenommen, und der Stromableiter 10 sei als negativ (Minus) angenommen. Daher ist der Kontaktierungsriegel 114 ein Kontaktierungsriegel Plus-auf-Plus, und der Kontaktierungsriegel 122 ist ein Kontaktierungsriegel Minus-auf-Minus. Zur Verwirklichung einer Reihenschaltung sind auch Kontaktierungsriegel Plus-auf-Minus vorgesehen, die später erläutert werden.

Von jedem Kontaktierungsriegel ragen Isolierhülsen 116 und Kodierstifte 118 durch jeweilige Bohrungen in den Stromableitern 8, 10 der Zelle 2 hindurch. Die Anordnung dieser Bauelemente wird aus der Explosionszeichnung der Fig. 27 deutlicher.

Fig. 27 zeigt die Anordnung aus Fig. 26 in einer Explosionsansicht. Zusätzlich sind ein Isolationsriegel 124 auf der anderen Seite des Stromableiters 10 sowie ein Abschnitt einer Zylinderschraube 22 gezeigt, die sich durch eine der Isolierhülsen 116 hindurch erstreckt.

In der Fläche der Stromableiter 8, 10 sind jeweils drei Durchgangsbohrungen 121 angeordnet, durch welche hindurch sich die Isolierhülsen 116 der Kontaktierungsriegel 114, 122 erstrecken. Ferner sind in der Fläche des Stromableiters 8 zwei durchgehende Kodierbohrungen 120a mit einem Abstand X₁ angeordnet, durch welche hindurch sich die Kodierstifte 118 in dem Kodierriegel Plus-auf-Plus 114 erstrecken. In der Fläche des Stromableiters 10 sind zwei durchgehende Kodierbohrungen 120b mit einem Abstand X₂ angeordnet, durch welche hindurch sich die Kodierstifte 118 in dem Kodierriegel Minus-auf-Minus 122 erstrecken. Der Abstand X₁ ist größer als der Abstand X₂. D.h., über den Abstand X₁, X₂ ist die Polarität Plus oder Minus kodiert. Die Kodierstifte 118 und die Kodierbohrungen 120a, 120b verwirklichen eine Verpolungsschutzeinrichtung im Sinne der Erfindung.

Ferner sind in der Fläche der Stromableiter 8, 10 sind jeweils drei Durchgangsbohrungen 121 angeordnet, durch welche hindurch sich die Isolierhülsen 116 der Kontaktierungsriegel 114, 122 erstrecken. Auf der anderen Seite des Stromableiters 10 ist ein Isolationsriegel 124 dargestellt. Dieser weist Durchgangsbohrungen 138 auf, in welche hinein sich die Isolierhülsen 116 des Kontaktierungsriegels 122 im Zusammenbau erstrecken. Der Durchmesser der Durchgangsbohrungen 138 des Isolationsriegels 124 entspricht dem Außendurchmesser der Isolierhülsen 116. Der Innendurchmesser der Isolierhülsen 122 entspricht dem Durchmesser der Zylinderschrauben. Somit verwirklichen die Isolierhülsen 116 mit den Durchgangsbohrungen 121, 140 eine Zentriereinrichtung im Sinne der Erfindung.

Der Aufbau der Kontaktierungsriegel und des Isolationsriegels wird nun anhand der Schnittdarstellungen der Fign. 28 bis 30 genauer erläutert.

Fig. 28 zeigt einen Halbriegel 126, der zur Kontaktierung eines positiven Stromableiters 8 kodiert ist (nachstehend als Halbriegel Plus 126 bezeichnet). Zwei Halbriegel Plus 126, die mit ihren Rückseiten zueinander zusammengesetzt sind, bilden später einen Kontaktierungsriegel Plus-auf-Plus 114. Der Halbriegel Plus 126 besteht im Wesentlichen aus einer Grundplatte (Grundplatte Plus) 128 aus leitfähigem Material wie etwa Kupfer, Messing, Bronze oder einem anderen Metall oder einer anderen Metall-Legierung, in der eine Reihe von Bohrungen eingebracht sind. Und zwar sind drei Durchgangsbohrungen 129 vorgesehen, die der späteren Lage der Zylinderschrauben (22) entsprechen. In den Durchgangsbohrungen 129 ist jeweils eine Isolierhülse 116 angeordnet. Die Länge der Isolierhülsen ist größer als die Dicke der Grundplatte Plus 128 zuzüglich der Dicke eines Stromableiters 8. Ferner sind auf einer Seite (hier als Rückseite bezeichnet) der Grundplatte 128 zwei Passbohrungen 130 als Sacklöcher angeordnet, und zwar in einem oberen und unteren Randbereich außerhalb des Bereichs der Durchgangsbohrungen 129. Der Abstand der Passbohrungen 130 ist in der Figur mit X₃ bezeichnet. In einer der Passbohrungen 131 ist ein Pass-Stift 132 eingesetzt. Auf der anderen Seite (hier als Vorderseite oder Kontaktierungsseite bezeichnet) der Grundplatte 128 sind zwei Sackbohrungen 131 a mit dem Abstand X₁ angeordnet, in welchen jeweils ein Kodierstift 118 eingesetzt ist. So ist dieser Halbriegel 126 als Halbriegel einer Plus-Seite kodiert.

Werden zwei Halbriegel 126 mit ihren Rückseiten zueinander so angeordnet, dass jeweils der Pass-Stift 132 des einen Halbriegels 126 einer freien Passbohrung 131 des anderen Halbriegels gegenüberliegt, können die beiden Halbriegel 126 zu einem Kontaktierungsriegel Plus-auf-Plus 114 zusammengefügt werden.

Fig. 29 zeigt einen Halbriegel 134, der zur Kontaktierung eines negativen Stromableiters 10 kodiert ist (nachstehend als Halbriegel Minus 134 bezeichnet). Zwei Halbriegel Minus 134, die mit ihren Rückseiten zueinander zusammengesetzt sind, bilden später einen Kontaktierungsriegel Minus-auf-Minus 122. Der Halbriegel Minus 134 besteht im Wesentlichen aus einer Grundplatte (Grundplatte Minus) 136 aus leitfähigem Material, die sich von der Grundplatte Plus 128 des Halbriegels Plus 126 nur darin unterscheidet, dass anstelle der Sackbohrungen 131a mit dem Abstand X₁ zwei Sackbohrungen 131b mit dem Abstand X₂ eingebracht sind. So ist dieser Halbriegel 134 als Halbriegel einer Minus-Seite kodiert. Zu den sonstigen Einzelheiten, Bohrungen und Bestückung gelten die Ausführungen zu dem Halbriegel Plus 126.

Werden zwei Halbriegel 134 mit ihren Rückseiten zueinander so angeordnet, dass jeweils der Pass-Stift 132 des einen Halbriegels 134 einem freien Passbohrung 131 des anderen Halbriegels gegenüberliegt, können die beiden Halbriegel 134 zu einem Kontaktierungsriegel Minus-auf-Minus 122 zusammengefügt werden.

Werden ein Halbriegel Plus 126 und ein Halbriegel Minus 134 mit ihren Rückseiten zueinander so angeordnet, dass der Pass-Stift 132 des Halbriegels 126 dem freien Passbohrung 131 des anderen Halbriegels 134 gegenüberliegt und umgekehrt, und werden die Halbriegel so zusammengefügt, wird Kontaktierungsriegel Plus-auf-Minus (nicht näher dargestellt) gebildet, der in einer Reihenschaltung eingesetzt wird.

In einer Parallelschaltung mehrerer Zellen 2 werden die Kontaktierungsriegel 114, 122 so angeordnet, dass auf einen Kontaktierungsriegel 114, 122 mit Isolierhülsen 116 und Kodierstiften 118 ein Kontaktierungsriegel 114, 122 ohne Isolierhülsen und Kodierstifte folgt, u.s.w. In einer Abwandlung kann in jedem Kontaktierungsriegel 114, 122 auch jeweils ein Halbriegel 126, 132 mit Isolierhülsen 116 und Kodierstiften 118 versehen sein und der andere Halbriegel 126, 132 nicht. Auf diese Weise wird sichergestellt, dass stets ein vorspringendes Element (Isolierhülse 116, Kodierstift 118) auf eine entsprechende Bohrung 129, 131 trifft.

Beim Übergang von einer Parallelschaltung in eine Reihenschaltung, und in einer Reihenschaltung ohnehin, ist es erforderlich, auf einer Seite einen positiven Pol (Stromableiter 8) einer Zelle 2 mit einem negativen Pol (Stromableiter 10) einer benachbarten Zelle 2 zu verbinden, und die beiden anderen Pole dieser benachbarten Zellen voneinander zu isolieren. Zu diesem Zweck wird der Isolationsriegel 124 verwendet, der in Fig. 30 im Schnitt dargestellt ist.

Der Isolationsriegel 124 besteht im Wesentlichen aus einer Platte 137 aus isolierendem Material, wie etwa Kunststoff, Hartgummi, Keramik oder dergleichen und ist doppelt so dick wie die Halbriegel 126, 134. Drei Durchgangsbohrungen 138 sind mit Abständen angeordnet, die der Lage der Zylinderschrauben (22) entsprechen. Auf einer Seite der Platte 137 sind zwei Kodierbohrungen 140a mit dem Abstand X₁ angeordnet, und auf der anderen Seite sind zwei Kodierbohrungen 140b mit dem Abstand X₂ angeordnet.

Der Durchmesser der Durchgangsbohrungen 138 entspricht dem Außendurchmesser der Isolierhülsen 116, der Durchmesser der Kodierbohrungen 140a, 140b dem Durchmesser der Kodierstifte 18. So reichen im Zusammenbau die Isolierhülsen 116 und Kodierstifte 18, die in den jeweils nächsten Kontaktierungsriegeln angeordnet sind, durch entsprechende Bohrungen 121, 120a, 120b der Stromableiter 8, 10 einer Akkumulatorzelle 2 hindurch und in die Durchgangsbohrungen 138 und Kodierbohrungen 140a, 140b des Isolationsriegels hinein. Auf diese Weise ist die relative Lage der Elemente im Zellblock radial zentriert und verpolungssicher montierbar. Da die Zylinderschrauben stets in Isolierhülsen 116 geführt werden, sind sie zuverlässig gegen die Stromableiter 8, 10, die Kontaktierungsriegel 114, 122 und die Druckplatten 118, 120 isoliert.

In Fig. 31 ist ein Zwischenrahmen 14 in dieser Ausführungsform in einer stirnseitigen Ansicht dargestellt. Dieser ist besonders einfach und symmetrisch aufgebaut. In dem eigentlichen Rahmengerüst sind in den lateralen Stegen längliche Ausnehmungen 142 vorgesehen, deren Kontur der Außenkontur der Kontaktierungs- und Isolationsriegel entspricht. Eine Freifläche 144 geringerer Materialdicke trägt der etwas größeren Dicke des Randbereichs 6 um die Stromableiter 8, 10 der Akkumulatorzellen 2 herum Rechnung, sodass Spanndruck im Wesentlichen nur auf die Stromableiter 8, 10 über die Kontaktierungs- und Isolationsriegel ausgeübt wird.

Man beachte, dass bei dieser Ausführungsform nur eine Art von Zwischenrahmen 14 erforderlich ist, der symmetrisch und von besonders einfacher Geometrie ist. Daher ist der Fertigungsaufwand gering, sind weniger verschiedene Einzelteile zu bevorraten, und es ist bei der Montage nicht auf die richtige Einbaulage zu achten, da die Kontaktierung allein über die Kontaktierungs- und Isolationsriegel erfolgt.

Für die Montage sind bezüglich der Kontaktierung der Zellen 2 lediglich vormontierte Halbriegel-Plus 126, vormontierte Halbriegel-Minus 134 und Isolationsriegel 124, jeweils mit Isolationshülsen 116 und Kodierstiften 118 vormontiert, bereitzuhalten. Die Halbriegel können verwechslungssicher zu Kontaktierungsriegeln Plus-auf-Minus zusammengesetzt und polrichtig montiert werden. Falls zusätzlich zu Reihenschaltungen auch Parallelschaltungen von Akkumulatorzellen 2 innerhalb eines Zellstapels verwirklicht werden sollen, sind die Halbriegel 126, 134 zusätzlich mit Isolationshülsen 116 und Kodierstiften 118 und ohne diese vorzuhalten. Auch in diesem Fall zeigen sich Verwechslungen von Teilen oder falsche Einbaulagen bei der Montage bzw. machen derartige Fehler unmöglich. Selbstverständlich können auch Grundplatten 128, 136, Isolationshülsen 116, Kodierstifte 118 und Pass-Stifte 132 einzeln bereitgehalten und erst bei der Montage der Zellblocks montiert werden, was die größtmögliche Flexibilität bietet.

Die Isolationshülsen 116 sind in den Durchgangsbohrungen 129 der Halbriegel 126, 134 vergleichsweise leichtgängig eingeschoben. So ist bei der Montage nur geringer Kraftaufwand erforderlich, und eine Demontage ist möglich. Die Pass-Stifte 132 sitzen fest in ihren Passbohrungen und halten die Halbriegel 126, 134 zuverlässig zusammen. Die Kodierstifte 118 sitzen ebenfalls fest in ihren Sackbohrungen 131 a, 131 b. Um ein Klemmen in gegenüberliegenden Halbriegeln zu vermeiden, weisen die Kodierstifte an einem Ende ein deutliches Untermaß oder gar einen geringeren Durchmesser als an dem anderen Ende auf. Da die Zentrierung der Bauteile in radialer Richtung bereits durch die Isolationshülsen 116 verwirklicht wird, müssen die Kodierstifte 118 diese Aufgabe nicht mehr erfüllen. Sie sollen daher lediglich bei in den vormontierten Kontaktierungsriegeln einen festen Sitz in den Sackbohrungen aufweisen, sodass sie nicht herausfallen können; ein lockeres Spiel in den gegenüberliegenden Bohrungen im fertig montierten Zustand des Zellstapels beeinträchtigt die Kodierfunktion nicht.

In einer dreizehnten Ausführungsform werden die gleichen Rahmen 14 verwendet wie in der zwölften Ausführungsform unter Bezugnahme auf Fig. 31 beschrieben. Es werden wiederum Kontaktierungs- und Isolationsriegel zur Verschaltung der Akkumulatorzellen eingesetzt, und diese weisen stirnseitig die gleichen Außenkonturen wie in der zwölften Ausführungsform auf. In Einzelheiten weisen die Kontaktierungs- und Isolationsriegel aber Unterschiede bezüglich der zwölften Ausführungsform auf. Die Einzelteile der dreizehnten Ausführungsform sind in Fign. 32 bis 34 veranschaulicht. Dabei ist Fig. 32 eine Querschnittsansicht eines Halbriegels zur Kontaktierung eines positiven Stromableiters, ist Fig. 33 eine Querschnittsansicht eines Halbriegels zur Kontaktierung eines negativen Stromableiters, und ist Fig. 34 eine Querschnittsansicht eines Isolationsriegels.

Fig. 32 zeigt einen Halbriegel (Halbriegel Plus) 126 dieser Ausführungsform, der zur Kontaktierung eines positiven Stromableiters 8 kodiert ist. Der Halbriegel Plus 126 dieser Ausführungsform besteht im Wesentlichen aus einer Grundplatte (Grundplatte Plus) 128 aus leitfähigem Material, in welcher wie in der vorherigen Ausführungsform drei Durchgangsbohrungen 129, die der späteren Lage der Zylinderschrauben (22) entsprechen, und auf einer Rückseite zwei Passbohrungen 130 als Sacklöcher vorgesehen, in deren oberer ein Pass-Stift 132 angeordnet ist, während die untere frei bleibt. Nur in der oberen Durchgangsbohrung 129 ist eine Isolierhülse 116 angeordnet, die auf der Vorderseite über die Oberfläche der Grundplatte 128 hinausragt. Auf der Vorderseite der Grundplatte 128 sind ferner eine Passbohrung 131a und eine Kodierbohrung 146a jeweils als Sacklöcher mit dem Abstand X₁ angeordnet, wobei die Passbohrung 131a die obere der beiden Bohrungen ist. In die Passbohrung 131 a ist ein Kodierstift 118 eingesetzt.

Fig. 33 zeigt einen Halbriegel (Halbriegel Minus) 134 dieser Ausführungsform, der zur Kontaktierung eines negativen Stromableiters 10 kodiert ist. Der Halbriegel Minus 134 besteht im Wesentlichen aus einer Grundplatte (Grundplatte Minus) 136 aus leitfähigem Material, die sich von der Grundplatte Plus 128 des Halbriegels Plus 126 nur darin unterscheidet, dass anstelle der Passbohrung 131 a und der Kodierbohrung 146a mit dem Abstand X₁ eine Passbohrung 131 b und eine Kodierbohrung 146b als Sacklöcher mit dem Abstand X₂ eingebracht sind, wobei die Passbohrung 131 b die obere der beiden Bohrungen ist. Zu den sonstigen Einzelheiten, Bohrungen und Bestückung gelten die Ausführungen zu dem Halbriegel Plus 126. Insbesondere ist auch bei dem Halbriegel Minus 134 nur in der oberen Durchgangsbohrung 129 eine überstehende Isolierhülse 116 angeordnet, und ist in der Passbohrung 131b ein Kodierstift 118 angeordnet.

Werden zwei Halbriegel Plus 126 mit ihren Rückseiten zueinander so angeordnet, dass jeweils der Pass-Stift 132 des einen Halbriegels 126 einer freien Passbohrung 131 des anderen Halbriegels gegenüberliegt, können die beiden Halbriegel 126 zu einem Kontaktierungsriegel Plus-auf-Plus zusammengefügt werden. Werden dagegen zwei Halbriegel Minus 134 mit ihren Rückseiten zueinander so angeordnet, dass jeweils der Pass-Stift 132 des einen Halbriegels 134 einem freien Passbohrung 131 des anderen Halbriegels gegenüberliegt, können die beiden Halbriegel 134 zu einem Kontaktierungsriegel Minus-auf-Minus zusammengefügt werden. Kontaktierungsriegel Plus-auf-Plus und Minus-auf-Minus werden bei einer Parallelschaltung von Akkumulatorzellen 2 eingesetzt.

Werden ein Halbriegel Plus 126 und ein Halbriegel Minus 134 mit ihren Rückseiten zueinander so angeordnet, dass der Pass-Stift 132 des Halbriegels 126 dem freien Passbohrung 131 des anderen Halbriegels 134 gegenüberliegt und umgekehrt, und werden die Halbriegel so zusammengefügt, wird ein Kontaktierungsriegel Plus-auf-Minus gebildet, der in einer Reihenschaltung sowie beim Übergang zwischen einer Parallel- und einer Reihenschaltung eingesetzt wird. Fig. 34 zeigt einen Isolationsriegel 148 dieser Ausführungsform. Der Isolationsriegel 148 besteht im Wesentlichen aus einem quaderförmigen Grundkörper 150 aus isolierendem Material und ist doppelt so dick wie die Halbriegel 126, 134. Auf der Vorderseite sind oben und zwei im Querschnitt kreisrunde Erhebungen 152 ausgebildet. Gleichermaßen sind auf der Rückseite mittig und unten zwei solche Erhebungen 152 ausgebildet. D.h., dass in Höhenrichtung mittig zwei Erhebungen 152 einander gegenüberliegen. Die Erhebungen 152 sind mit Abständen angeordnet, die der Lage der Zylinderschrauben (22) entsprechen, und an diesen Stellen ist jeweils eine Durchgangsbohrung 154 in den Grundkörper 150 und die Erhebungen 152 eingebracht. Gegenüber den einseitigen Erhebungen oben und unten sind Einsenkungen 156 konzentrisch mit den jeweiligen Durchgangsbohrungen 154 in die Oberfläche des Grundkörpers 150 eingebracht.

Auf der Vorderseite des Grundkörpers 150 sind - wie bei dem Halbriegel Plus 126 dieser Ausführungsform - ferner eine Passbohrung 131 a und eine Kodierbohrung 146a jeweils als Sacklöcher mit dem Abstand x₁ angeordnet, wobei die Passbohrung 131a die obere der beiden Bohrungen ist. Des Weiteren sind auf der Rückseite des Grundkörpers 150 eine Passbohrung 131 b und eine Kodierbohrung 146b als Sacklöcher mit dem Abstand x₂ eingebracht, wobei die Passbohrung 131 b die untere der beiden Bohrungen ist. Die Lage der Bohrungen 131 b und 146b entspricht also der Situation bei dem Halbriegel 134 dieser Ausführungsform, wenn man ihn gegenüber der Darstellung in Fig. 33 auf den Kopf stellt.

Der Durchmesser der Durchgangsbohrungen 129 der Halbriegel 126, 134 entspricht dem Außendurchmesser der Isolierhülsen 116, und der Außendurchmesser der Erhebungen 152 des Isolationsriegels 150 entspricht dem Durchmesser der Durchgangsbohrungen 129 der Halbriegel 126, 134. Der Durchmesser der Durchgangsbohrung 154 des Isolationsriegels 150 entspricht ebenso wie der Innendurchmesser der Isolationshülsen 116 dem Durchmesser der Zylinderschrauben (22). Der Durchmesser der Kodierbohrungen 146a, 146b ist größer als der Durchmesser der Kodierstifte 18.

Durch die spezielle, asymmetrische Anordnung der vorspringenden Bauelemente ist, gleichgültig, ob die Halbriegel 126, 134 zu Kontaktierungsriegeln Plus-auf-Plus, Minus-auf-Minus oder Plus-auf-Minus zusammengesetzt werden, und gleichgültig, ob eine Reihen- oder eine Parallelschaltung oder ein Übergang zwischen einer Parallel- und einer Reihenschaltung zu verwirklichen ist, bei richtigem Zusammenbau die Isolierhülsen 116, Erhebungen 152 und Kodierstifte 18 einerseits durch die entsprechenden Bohrungen 121, 120a, 120b der Stromableiter 8, 10 einer Akkumulatorzelle hindurch und andererseits stets in eine freie Durchgangsbohrung 130 eines Kontaktierungsriegels oder in eine Einsenkung 156 eines Isolationsriegels 148 bzw. in eine freie Kodierbohrungen 146a, 146b eines Kontaktierungs- oder Isolationsriegels hineinragen. Auf diese Weise ist die relative Lage der Elemente im Zellblock radial zentriert und verpolungssicher montierbar, und die Zylinderschrauben sind zuverlässig gegen die Stromableiter 8, 10, die Kontaktierungsriegel 114, 122 und die Druckplatten 118, 120 isoliert.

Für die Montage sind daher bezüglich der Kontaktierung der Zellen 2 lediglich mit Isolationshülsen 116 und Kodierstiften 118 vormontierte Halbriegel-Plus 126, Halbriegel-Minus 134 und Isolationsriegel 148 bereitzuhalten. Die Halbriegel können unabhängig von der gewünschten Art der Verschaltung verwechslungssicher zu Kontaktierungsriegeln zusammengesetzt und polrichtig montiert werden.

Eine vierzehnte Ausführungsform betrifft eine modulare Auslegung der Kontakierungselemente unter Verwendung des Zwischenrahmens 14 der zwölften Ausführungsform, wie in Fig. 31 gezeigt, und ist in Fign. 35 bis 41 dargestellt. Dabei zeigen jeweils im Längsschnitt Fig. 35 eine für einen Pluspol kodierte Abstandshalbplatte-Plus, Fig. 36 eine für einen Minuspol kodierte Abstandshalbplatte-Minus, Fig. 37 eine Kontakthülse, Fig. 38 eine Doppelzapfenmanschette für Reihenschaltung, Fig. 39 eine Innenmanschette für Parallelschaltung, Fig. 40 eine Einzapfenmanschette für einen Übergang von Parallel- auf Reihenschaltung, und Fig. 41 eine Abstandshülse für variable Anwendung der vierzehnten Ausführungsform.

Eine Abstandshalbplatte-Plus 158 und eine Abstandshalbplatte-Minus 160 sind Platten von gleicher äußerer Kontur aus einem elektrisch isolierenden Material. Wie in Fign. 35 und 36 gezeigt, sind in jeder der Abstandshalbplatten 158, 160 drei Durchgangsbohrungen 162, die der späteren Lage der Zylinderschrauben (22) entsprechen, und auf einer Rückseite zwei Passbohrungen 130 als Sacklöcher vorgesehen, in deren oberer ein Pass-Stift 132 angeordnet ist, während die untere frei bleibt. Auf der Vorderseite der Abstandshalbplatte-Plus 158 sind ferner eine Passbohrung 131a und eine Kodierbohrung 146a jeweils als Sacklöcher mit dem Abstand x₁ angeordnet, wobei die Passbohrung 131 a die obere der beiden Bohrungen ist, in welche ein Kodierstift 118 eingesetzt ist. Dagegen sind auf der Vorderseite der Abstandshalbplatte-Minus 160 eine Passbohrung 131 b und eine Kodierbohrung 146b jeweils als Sacklöcher mit dem kleineren Abstand x₂ angeordnet, wobei die Passbohrung 131 b die obere der beiden Bohrungen ist, in welche ein Kodierstift 118 eingesetzt ist.

Die Abstandshalbplatten 158, 160 können analog den beiden vorherigen Ausführungsformen so zu Abstandsriegeln zusammengesetzt werden, dass sie für Plus-auf-Plus, Minus-auf-Minus oder Plus-auf-Minus kodiert sind.

Fig. 37 zeigt im Längsschnitt eine Kontaktierungshülse 164, die zur Kontaktierung der Stromableiter zweier Akkumulatorzellen 2 in die Durchgangsbohrungen 162 eines Abstandsriegels eingesetzt werden. Die Kontaktierungshülse 164 ist im Wesentlichen ein Hohlzylinder 166 aus einem leitfähigen Material. Die Länge der Kontaktierungshülse 164 (des Hohlzylinders 166) entspricht der Dicke zweier Abstandshalbplatten, also der Dicke eines Abstandsriegels. Der Außendurchmesser der Kontaktierungshülse 164 entspricht dem Durchmesser der Durchgangsbohrungen 162 der Abstandshalbplatten 158, 160. Der Innendurchmesser der Kontaktierungshülse 164 ist reichlich größer als der Durchmesser einer Zylinderschraube (22) zum Verspannen des Zellstapels. Die Kontaktierungshülse 164 weist zwei endseitige Einsenkungen 168 auf.

Fig. 38 zeigt im Längsschnitt eine Hülse mit zwei endseitigen Zapfen (Doppelzapfenmanschette) 170. Die Doppelzapfenmanschette 170 besteht im Wesentlichen aus einem Hohlzylinder 172 aus einem elektrisch isolierenden Material. An beiden Endseiten sind Abdrehungen 174 vorgesehen. Der Außendurchmesser der Doppelzapfenmanschette 170 (des Hohlzylinders 172) entspricht dem Durchmesser der Durchgangsbohrungen 162 der Abstandshalbplatten 158, 160. Der Innendurchmesser der Doppelzapfenmanschette 170 entspricht dem Durchmesser einer Zylinderschraube (22). Der Außendurchmesser der Abdrehungen 174 entspricht dem Innendurchmesser der Einsenkungen 166 der Kontaktierungshülse 164. Die Länge der Abdrehungen 174 ist etwas geringer als die Tiefe der Einsenkungen 166 zuzüglich der Dicke eines Stromableiters 8, 10 einer Akkumulatorzelle 2. Die verbleibende Länge des Hohlzylinders 172 zwischen den Abdrehungen 174 entspricht der Dicke zweier Abstandshalbplatten, also der Dicke eines Abstandsriegels.

Fig. 39 zeigt im Längsschnitt eine Innenmanschette 176. Die Innenmanschette ist eine Hülse aus elektrisch isolierendem Material. Der Außendurchmesser der Innenmanschette 176 entspricht dem Innendurchmesser der Einsenkungen 166 der Kontaktierungshülse 164. Die Länge der Innenmanschette 176 ist etwas geringer als die doppelte Tiefe der Einsenkungen 166 zuzüglich der Dicke eines Stromableiters 8, 10 einer Akkumulatorzelle 2.

Die vorstehend im Zusammenhang mit dieser Ausführungsform beschriebenen Elemente sind grundsätzlich ausreichend, um die Verschaltung der Akkumulatorzellen 2 in einem Zellblock zu verwirklichen.

Für eine Reihenschaltung werden Abstandshalbplatten 158, 160 zu Abstandsriegeln Plus-auf-Minus zusammengesetzt. In einen Abstandsriegel werden Kontaktierungshülsen 164 in die Durchgangslöcher 162 eingesetzt, in dem anderen Abstandsriegel Doppelzapfenmanschetten 170. So werden die Abstandsriegel in die Ausnehmungen 142 des Zwischenrahmens 14 (Fig. 31) eingesetzt, wobei auf einer Stirnseite des Zwischenrahmens auf einer lateralen Seite (etwa links) ein Kodierstift 118 und eine Kodierbohrung 146a mit dem größeren Abstand x₁ zur Kodierung einer Plus-Seite und auf der anderen lateralen Seite (dann also rechts) ein Kodierstift 118 und eine Kodierbohrung 146b mit dem kleineren Abstand x₂ zur Kodierung einer Minus-Seite zu sehen sind. Bei dem nächsten Zwischenrahmen muss dann auf der einen lateralen Seite (links) ein Kodierstift 118 und eine Kodierbohrung 146b mit dem kleineren Abstand x₂ zur Kodierung einer Minus-Seite und auf der anderen lateralen Seite (rechts) ein Kodierstift 118 und eine Kodierbohrung 146a mit dem kleineren Abstand x₁ zur Kodierung einer Minus-Seite zu sehen sein. Wenn nun eine Akkumulatorzelle 2 mit der einzig passenden Orientierung der Kodierbohrungen 121 a, 121 b in den Stromableitern 8, 10 auf die Kodierstifte 118 eines Zwischenrahmens 14 gesetzt wird, kann nur der richtige Zwischenrahmen 14 in richtiger Polrichtung aufgesetzt werden. Dies setzt sich fort, bis alle Zellen 2 verbaut sind. Für den Anschluss einer Druckplatte 18, 20 über die Endrahmen 12, 16 mit einer Kontaktierungshülse 164 werden die Innenmanschetten 176 benötigt, die in einer Durchgangsbohrung der Druckplatte 18, 20 mit einem Durchmesser, der dem Außendurchmesser der Innenmanschette 176 entspricht, auf derjenigen lateralen Seite, auf der die Kontaktierung mit einem Pol der Zelle 2 erfolgen soll, eingesetzt sind. Auf der anderen lateralen Seite bleibt es bei den Doppelzapfenmanschetten 170, die mit einer Abdrehung 174, die den gleichen Außendurchmesser wie die Innenmanschetten 176 aufweisen, in die Durchgangsbohrungen der Druckplatte 18, 20 reichen. Die Zylinderschrauben werden in den Doppelzapfenmanschetten 170 und den Innenmanschetten 176 geführt und von stromführenden Bauelementen isoliert; die radiale Zentrierung der Bauelemente erfolgt analog zu den vorherigen Ausführungsformen über die gleichen Bauteile.

Bei einer Parallelschaltung kommen nur die Kontaktierungshülsen 164 und Innenmanschetten 176 zu Einsatz. Dabei wird jeweils eine Innenmanschette 176 in eine Einsenkung 166 einer Kontaktierungshülse 164 gesteckt, diese in die aus zwei gleichen Abstandshalbplatten 158 oder 160 zusammengesetzten Abstandsriegel eingesetzt und die Bauelemente in der so vorgegebenen Polrichtung montiert.

Fig. 40 zeigt im Längsschnitt eine Hülse mit einem endseitigen Zapfen (Einzapfenmanschette) 178. Die Einzapfenmanschette 178 besteht im Wesentlichen aus einem Hohlzylinder 180 aus einem elektrisch isolierenden Material. An einer Endseite ist eine Abdrehung 174 vorgesehen. An der anderen Endseite ist eine Einsenkung 168 vorgesehen. Der Außendurchmesser der Einzapfenmanschette 178 (des Hohlzylinders 180) entspricht dem Durchmesser der Durchgangsbohrungen 162 der Abstandshalbplatten 158, 160. Der Innendurchmesser der Einzapfenmanschette 178 entspricht dem Durchmesser einer Zylinderschraube (22). Der Außendurchmesser der Abdrehungen 174 entspricht dem Innendurchmesser der Einsenkungen 166 der Kontaktierungshülse 164 und der Einzapfenmanschette 178 selbst. Die Länge der Abdrehungen 174 ist etwas geringer als die Tiefe der Einsenkungen 166 zuzüglich der Dicke eines Stromableiters 8, 10 einer Akkumulatorzelle 2. Die verbleibende Länge des Hohlzylinders 172 ab der Abdrehung 174 entspricht der Dicke zweier Abstandshalbplatten, also der Dicke eines Abstandsriegels.

Bei einer gemischten Parallel- und Reihenschaltung von Akkumulatorzellen, wie sie etwa in Fig. 7 gezeigt ist, kann am Übergang zwischen einer Parallelschaltung und einer Reihenschaltung je nachdem, ob dort eine Innenmanschette hervorragt oder nicht, zwischen den zu isolierenden Stromableitern eine Doppelzapfenmanschette 170 oder eine Einzapfenmanschette 178 eingesetzt werden. Gegebenenfalls muss an dieser Übergangsstelle in die Kontaktierungshülse 164, welche die Verbindung zwischen zwei Gruppen von parallel geschalteten Gruppen von Zellen 2 herstellt, beidseits eine Innenmanschette 176 einsetzt werden.

Fig. 41 zeigt eine Isolierhülse 182 im Längsschnitt. Diese weist die gleiche Geometrie wie die Kontaktierungshülse 164 auf als hohlzylindrischer Grundkörper 184 mit gleichen Einsenkungen 168, ist aber aus einem elektrisch isolierenden Material hergestellt.

Die Isolierhülse 182 kann durch Einstecken einer oder zweien der Innenmanschetten 176 in die Einsenkungen 168 eine Doppelzapfenmanschette 170 oder eine Einzapfenmanschette 178 ersetzen.

Die vorstehend beschriebenen Bauteile dieser Ausführungsform werden zur Montage als Baukasten zur Verfügung gestellt. Aufgrund der kleinen und kompakten Abmessungen der Hülsen und Manschetten sind diese leicht als Schüttgut handhabbar.

In einer fünfzehnten Ausführungsform der vorliegenden Erfindung, die zeichnerisch nicht näher dargestellt ist, gibt es Innenmanschetten 176 in zwei Ausführungen mit unterschiedlichen Außendurchmessern, weisen die Kontaktierungshülse 164 und die Isolierhülse 182 zwei Einsenkungen unterschiedlichen Durchmessers entsprechend den Außendurchmessern der Innenmanschetten auf und weist die Doppelzapfenmanschette 170 zwei Abdrehungen unterschiedlichen Innendurchmessern der Einsenkungen der Kontaktierungshülse 164 und der Isolierhülse 182 auf. Gegebenenfalls sind auch zwei Ausführungen von Einzapfenmanschetten 178 vorgesehen, wobei die eine Ausführung eine Abdrehung mit größerem Außendurchmesser und eine Einsenkung mit kleinerem Durchmesser aufweist und die andere Ausführung eine Abdrehung mit kleineren Außendurchmesser und eine Einsenkung mit größerem Durchmesser aufweist, wobei die Durchmesser der Abdrehungen und Einsenkungen den unterschiedlichen Durchmessern der Einsenkungen der Kontaktierungshülse bzw. den unterschiedlichen Außendurchmessern der zwei Ausführungen von Innenmanschetten angepasst sind.

Bei dieser Ausführungsform sind keine Kodierstifte und Kodierbohrungen vorgesehen. Dafür weisen die Durchgangsbohrungen in den Stromableitern 8 der Zellen 2 unterschiedliche Durchmesser entsprechend den unterschiedlichen Außendurchmessern der Innenmanschetten 176 auf. Somit bilden die Kontaktierungshülsen 164 Kontaktverbindungselemente im Sinne der vorliegenden Erfindung, und die Manschetten bilden sowohl eine Zentriereinrichtung als auch eine Verpolungsschutzeinrichtung im Sinne der Erfindung.

Auch bei dieser Ausführungsform gilt, dass die Isolierhülsen 182 und die Innenmanschetten 176 in den zwei Ausführungen bei geeigneter Zusammensetzung sowohl die Doppelzapfenmanschetten 170 als auch die Einzapfenmanschetten 178 ersetzen können.

Nachdem die Kodierung der Polrichtung über die unterschiedlichen Außendurchmesser der Innenmanschetten 176 und ggf. der Abdrehungen der Doppel- und Einzapfenmanschetten 170, 178 erfolgt, sind bei dieser Ausführungsform keine Abstandshalbplatten vorgesehen, sondern einteilige Abstandsriegel, die in die symmetrischen Ausnehmungen 142 der Rahmenelemente (vgl. Fig. 31) eingesetzt werden.

Bei einer sechzehnten Ausführungsform werden die Hülsen und Manschetten der fünfzehnten Ausführungsform verwendet. Es sind aber keine Abstandsriegel vorgesehen. Vielmehr weisen die Rahmenelemente anstelle von Ausnehmungen zur Aufnahme der Abstandsriegel auf beiden lateralen Seiten drei Durchgangsbohrungen auf. Alle Durchgangsbohrungen weisen den gleichen Durchmessen auf, der dem Außendurchmesser der Kontaktierungshülse 164 und der Isolierhülse 182 entspricht.

Bei dieser Ausführungsform ist die Anzahl unterschiedlicher Bauteile noch einmal reduziert, und die Montage weiter vereinfacht.

Bei einer siebzehnten Ausführungsform der vorliegenden Erfindung wird auf die Verwendung von Rahmenelementen ganz verzichtet. Vielmehr werden die Akkumulatorzellen 2 zwischen zwei Druckplatten auf Zylinderschrauben gefädelt, wobei jeweils Isolierungs- und Kontaktierungsriegel nach der zwölften oder dreizehnten Ausführungsform oder Abstandsriegel mit Hülsen und Manschetten nach der vierzehnten oder fünfzehnten Ausführungsform zwischen den Stromableitern 8, 10 der Zellen 2 angeordnet sind. Über die Riegel wird der Abstand zwischen den Zellen 2 definiert und der erforderliche Halte- und Kontaktierungsdruck übertragen.

Bei einer achtzehnten Ausführungsform wird auch auf die Verwendung von Riegeln verzichtet. Vielmehr werden lediglich die Hülsen und Manschetten der fünfzehnten Ausführungsform zur Übertragung des Halte- und Kontaktierungsdrucks, zur Definition des Abstands zwischen Zellen 2, zur Kontaktierung bzw. Isolation von Stromableitern 8, 10, als Verpolungsschutz und zur radialen Zentrierung verwendet.

Der Verzicht auf Zwischenrahmen bei der siebzehnten und achtzehnten Ausführungsform erlaubt eine Verringerung des Gesamtgewichts eines Zellblocks, was durch Verzicht auf Abstandsriegel bei der achtzehnten Ausführungsform noch weiter getrieben wird. Die Stabilität der Anordnung wird allein über die Druckplatten 18, 20 und die Zylinderschrauben 22 sowie die Druckflächen der Abstandsriegel (158+160, 2x158 oder 2x160) (siebzehnte Ausführungsform) bzw. der Kontakthülsen 164 und Isolationshülsen 182 und/oder Ein- und Doppelzapfenmanschetten 178, 170 (achtzehnte Ausführungsform), die sich über die Druckflächen der Stromableiter 8, 10 der Zellen 2 abstützen, gewährleistet.

Die freiliegenden Akkumulatorzellen 2 sind bei der siebzehnten und achtzehnten Ausführungsform besonders wirksam temperierbar. Ein Gehäuse, das sich zwischen den Druckplatten 18, 20 erstreckt, kann vorgesehen sein, um dem Zellblock eine individuelle Atmosphäre zu vermitteln und die Randbereiche der Zellen 2 vor Beschädigungen zu schützen. Es können aber auch mehrere Zellblöcke ohne individuelle Gehäuse in einem seinerseits umschlossenen Einbauraum eingesetzt sein, wobei beim Einbau auf einen Schutz der Randbereiche der Zellen 2 zu achten ist.

Die folgenden Ausführungsformen beziehen sich auf die Festlegung der radialen Lage der Akkumulatorzellen 2 in dem Zellblock.

In Fig. 42 ist eine Akkumulatorzelle einer neunzehnten Ausführungsform in stirnseitiger Ansicht dargestellt. Wie in Fig. 42 gezeigt, erstrecken sich die Stromableiter 8, 10 in den Randbereich 6 (Siegelnaht) einer Akkumulatorzelle 2 dieser Ausführungsform hinein. Oben und unten jenseits des Bereichs der Stromableiter 8, 10 ist ein Totbereich 186 ausgebildet, in welchem keine aktiven oder stromführenden Bestandteile der Zelle 2 liegen. In diesen Totbereichen sind Durchgangslöcher 188 ausgebildet. In den Durchgangslöchern 188 verlaufen die Zylinderschrauben (22) oder andere geeignete Zentrierungselemente.

In Fig. 43 ist eine Ecke einer Akkumulatorzelle 2 einer zwanzigsten Ausführungsform in stirnseitiger Ansicht dargestellt. Im Totbereich 186 dieser Zelle 2 ist eine Ausklinkung 190 ausgearbeitet. Mit der Ausklinkung 190 stützt sich die Zelle 2 gegen die Zylinderschraube 22 ab.

In Fig. 44 ist ein Endbereich einer Akkumulatorzelle 2 einer einundzwanzigsten Ausführungsform im Schnitt in Blickrichtung von oben dargestellt. Zwischen Stromableitern der Zellen 2 verläuft die Zylinderschraube 22 durch ein Distanzstück 192.

In Fig. 45 ist eine Ecke einer Akkumulatorzelle 2 einer zweiundzwanzigsten Ausführungsform in stirnseitiger Ansicht dargestellt. Im Totbereich 186 dieser Zelle 2 ist eine Ausklinkung 194 ausgearbeitet. Die Ausklinkung 194 ist größer als die Ausklinkung 190 der zwanzigsten Ausführungsform. Daher wird hier nur eine grobe Ausrichtung der Zelle 2 beim Einbau verwirklicht. Es ist aber Luft zwischen der Ausklinkung 194 und der Zylinderschraube 22 vorhanden, sodass der Totbereich 186 im Betrieb Kräftefrei gehalten wird.

In Fig. 46 ist ein Endbereich einer Akkumulatorzelle 2 einer dreiundzwanzigsten Ausführungsform im Schnitt in Blickrichtung von oben dargestellt. Zwischen Stromableitern der Zellen 2 ist ein Distanzstück 196a mit zwei Zapfen 198 angeordnet. Die Zapfen 198 reichen auf der anderen Seite eines Stromableiters in eine Gegenbohrung 199 eines Distanzstücks 196b. Es können auch Distanzstücke mit einem Zapfen 198 und einer Bohrung 199 vorgesehen sein. Die Zapfen 198 können unterschiedliche Durchmesser zur Kodierung der Pollage aufweisen. Die Zapfen 198 und Bohrungen 199 können auch direkt an den Halterahmen 12, 14, 16 ausgebildet sein.

Eine vierundzwanzigste Ausführungsform der Erfindung wird anhand der Fign. 47 und 48 beschrieben. Dabei ist Fig. 47 eine Schnittdarstellung eines Randbereichs einer Akkumulatorzelle mit einem Stromableiter in Blickrichtung von oben, und Fig. 48 zeigt ein Distanzstück im Schnitt. Wie in Fig. 47 gezeigt, weist der Stromableiter 8 eine Prägung 200 auf. Zwischen Stromableitern der Zellen 2 ist ein Distanzstück 202 angeordnet. Wie in Fig. 48 dargestellt, weist das Distanzstück 202 zwei eingesunkene Reliefstrukturen 204, 206 auf. Die Reliefstrukturen 204, 206 entsprechen ihrer Form der erhabenen Seite der Prägung 200 auf dem Stromableiter 8. Ersichtlich ist das Distanzstück 202 zur Kodierung einer Einbaulage derart vorgesehen, dass die erhabenen Teile der Prägungen 200 benachbarter Stromableiter zueinander weisen. Obschon in der Figur nicht dargestellt, sind auch Distanzstücke mit erhabenen Reliefstrukturen vorgesehen, die an den zurückweichenden Teil der Prägungen 200 angepasst sind. Diese Distanzstücke kodieren eine Einbaulage derart, dass die zurückweichenden Teile der Prägungen 200 benachbarter Stromableiter zueinander weisen. Ferner sind Distanzstücke mit einer versunkenen und einer erhabenen Reliefstruktur vorgesehen. Die Prägungen 200 können auf den Stromableitern 8, 10 unterschiedliche Form, Größe oder Tiefe aufweisen, um die Polarität zu kodieren. Im Zusammenbau legen die Prägungen und Reliefstrukturen die relative Lage der Bauteile in radialer Richtung fest. Sie wirken also sowohl als Zentriereinrichtung als auch als Verpolungsschutzeinrichtung im Sinne der Erfindung.

In einer nicht näher dargestellten Abwandlung der vierundzwanzigsten Ausführungsform ist eine Prägung in einem Abschnitt des Randbereichs ausgebildet, der frei von Stromableitern ist, also im Bereich der freien Siegelnaht der Zelle.

Eine fünfundzwanzigste Ausführungsform der Erfindung wird anhand der Fign. 49 und 50 beschrieben. Dabei zeigt Fig. 49 eine stirnseitige Ansicht einer Akkumulatorzelle 2 dieser Ausführungsform in einer Einbausituation. Dabei sind hinter der Zelle 2 liegende Teile weggelassen. Ein vor der Zelle 2 liegender Halterahmen wurde ebenfalls weggelassen, durch diesen Rahmen hindurch verlaufende Teile im Querschnitt dargestellt. Fig. 50 zeigt eine Isolierhülse dieser Ausführungsform im Längsschnitt.

Gemäß der Darstellung in Fig. 49 weist eine Akkumulatorzelle 2 in bereits beschriebener Weise einen aktiven Teil 4, einen Randteil 6 mit Falzen 50 und zwei Stromableitern 8, 10 auf. In den Stromableitern 8, 10 sind jeweils drei Durchgangsbohrungen 208 ausgebildet; alle Durchgangsbohrungen 208 weisen den gleichen Durchmesser auf. Konzentrisch mit den Durchgangsbohrungen 208 verlaufen sechs Zylinderschrauben 22 zum Verspannen des Zellblocks. Zwischen dem Stromableiter 8 und einem Stromableiter einer vor der gezeigten Zelle 2 angeordneten Zelle ist konzentrisch mit der mittleren Durchgangsbohrung 208 (in der Darstellung nicht sichtbar) eine Isolierhülse 210 angeordnet. Zwischen dem Stromableiter 10 und einem Stromableiter der vor der gezeigten Zelle 2 angeordneten Zelle ist konzentrisch mit der oberen und unteren Durchgangsbohrung 208 (in der Darstellung nicht sichtbar) je eine Kontaktierungshülse 212 angeordnet. Ferner ist auch zwischen dem Stromableiter 10 und dem Stromableiter der vor der gezeigten Zelle 2 angeordneten Zelle eine Isolierhülse 210 konzentrisch mit der mittleren Durchgangsbohrung 208 (in der Darstellung nicht sichtbar) angeordnet.

Die Kontaktierungshülsen 212 sind aus einem elektrisch leitfähigen Material hergestellt und weisen einen durchgehenden hohlzylindrischen Querschnitt auf. Sie sind in Durchgangsbohrungen entsprechenden Durchmessers in einem Halterahmen oder einem Abstandsriegel eingesetzt und sitzen mit ihren Stirnflächen jeweils auf einem Stromableiter auf. Der Innendurchmesser der Kontaktierungshülsen 212 ist größer als der Durchmesser der Zylinderschrauben 22.

Die Isolierhülsen 210 sind aus einem elektrisch isolierenden Material hergestellt. Sie weisen gemäß der Darstellung in Fig. 50 eine hohlzylindrische Grundform mit einer stirnseitigen Einsenkung 214 und einer Abdrehung (Zapfen) 216 an der anderen Stirnseite auf. Der Außendurchmesser der Isolierhülsen 210 entspricht dem Außendurchmesser der Kontaktierungshülsen 212, und sie sind ebenfalls in Durchgangsbohrungen entsprechenden Durchmessers in einem Halterahmen oder einem Abstandsriegel eingesetzt. Mit der Stirnseite, an welcher sich die Einsenkung 214 befindet, und mit der Stirnseite eines durch die Abdrehung 216 gebildeten Kragens 218 sitzen die Isolierhülsen 210 jeweils auf einem Stromableiter auf. Die Abdrehung 216 reicht durch die mittlere Durchgangsbohrung 208 auf dem Stromableiter 8, 10 hindurch und sitzt in der Einsenkung 214 einer nächsten Isolierhülse. Der Außendurchmesser der Abdrehung 216 entspricht dem Durchmesser der Durchgangsbohrungen 208. Der Innendurchmesser der Isolierhülse 210 entspricht dem Durchmesser der Zylinderschrauben 22. Die beiden Druckplatten 18, 20 (hier nicht dargestellt) des Zellblocks sind mit Durchgangsbohrungen versehen, deren Durchmesser dem Außendurchmesser der Abdrehungen 216 entspricht.

Durch die Isolierhülsen 210 ist eine radiale Zentrierung der Halterahmen 12, 14, 16 und der Akkumulatorzellen 2 zueinander und mit den Druckplatten 18, 20 gegeben. (In einem der Endrahmen ist anstelle der Isolierhülse 210 eine abgewandelte Isolierhülse mit zwei Zapfen angeordnet; alternativ sind auf der Seite einer der Druckplatten 18, 20 hohlzylindrische Innenmanschetten dargestellt, deren Innendurchmesser dem der Isolierhülsen entspricht, deren Außendurchmesser dem der Einsenkungen 214 entspricht, und die auf der Seite der einen Druckplatte 18, 20 in die Einsenkungen 214 der Isolierhülsen 210 eingesetzt wird). Ferner ist eine Zentrierung aller Bauelemente und eine elektrische Isolierung gegenüber den beiden mittleren Zylinderschrauben 22 gegeben.

Über die Kontaktierungshülsen 212 ist die Verschaltung der Akkumulatorzellen 2 verwirklicht. Hier handelt es sich bei abwechselnder Anordnung auf der linken und der rechten Seite in aufeinanderfolgenden Halterahmen um eine Reihenschaltung. Auf der jeweils anderen lateralen Seite eines Halterahmens sind die äußeren Durchgangsbohrungen um die Zylinderschrauben 22 herum freigelassen. Soweit die vier äußeren Zylinderschrauben 22 nämlich durch geeignete Mittel (vgl. die Isolierhülse 64 in Fig. 13 gegenüber den Druckplatten 18, 20 zentriert und isoliert sind, ist auch stets ein hinreichender Ringspalt zwischen den Kontaktierungshülsen 210 und den Zylinderschrauben 22 gegeben. Zur Erhöhung des Anpressdrucks und als Gegenlager für den Andruck der Kontaktierungshülsen 212 kann es aber sinnvoll sein, auch in den Durchgangsbohrungen gegenüber den Kontaktierungshülsen 212 Isolierhülsen 210 wie in den mittleren Durchgangsbohrungen anzuordnen.

In den bisher beschriebenen Ausführungsformen war stets Wert darauf gelegt, dass die Zylinderschrauben 22, welche den Zellblock zusammenhalten, stromlos bzw. potentialfrei sind, während die Druckplatten die Pole (+) und (-) des Zellblocks bildeten.

In Fig. 51 ist ein Zellblock in einer sechsundzwanzigsten Ausführungsform der Erfindung gezeigt, bei welchem die Spannschrauben als Anschlusspol verwendet werden.

Fig. 51 zeigt einen Zellblock 1 e dieser Ausführungsform in einer geschnittenen Draufsicht. Die Schnittebene liegt dabei in der Ebene zweier Spannschrauben. Der Zellblock 1 e weist eine Vielzahl von Akkumulatorzellen 2 auf, die mit wechselnder Polrichtung angeordnet und mit Hilfe von Zellkontaktierungselementen 218 und Zellisolationselementen 220 in einer Reihenschaltung verbunden sind. Durch ein erstes bzw. letztes Zellkontaktierungselement 218 ist die erste bzw. letzte Zelle mit einer ersten Druckplatte 18 bzw. einer zweiten Druckplatte 20 elektrisch verbunden. Die Druckplatten 18, 20 sind aus einem elektrisch leitfähigen Material hergestellt und weisen Laschen 52 zum Anschluss an ein Versorgungsnetz oder zum Verbinden mit weiteren Zellblöcken auf.

Die Anordnung wird durch mehrere Spannschrauben zusammengehalten, die in dieser Ausführungsform als Ösenschrauben 222 ausgebildet sind. Als Ösenschraube wird hier eine Sechskantschraube mit langem Schaft bezeichnet, an deren Kopf eine Öse 226 angebracht (angeschweißt) ist. Die Ösenschrauben 222 sind gegenüber der ersten Druckplatte 18 mittels Isolierbuchsen 64 isoliert und zentriert. Auf der Seite der zweiten Druckplatte 20 sind die Ösenschrauben 222 mit Hilfe von Muttern 24 festgezogen. Zwischen den Muttern 24 und der zweiten Druckplatte 20 sind Kontaktscheiben 224 angeordnet. Die Kontaktscheiben 224 sind aus einem elektrisch leitenden Material hergestellt, das an den Verbindungsstellen mit der Fläche der zweiten Druckplatte 20 und den Muttern 24 einen geringen Übergangswiderstand aufweist. Es können einfache Stahlschrauben sein, aber auch Kupfer- oder Messingscheiben, die beim Anziehen zu Fließen beginnen und so eine gute Verbindung herstellen.

Auf diese Weise befinden sich die Ösenschrauben 222 in elektrischem Kontakt mit der zweiten Druckplatte 20, sind aber gegenüber der ersten Druckplatte 18 und allen stromführenden Teilen im Inneren des Zellblocks 1e, insbesondere gegenüber den Stromableitern der Zellen 2 und den Zellkontaktierungselementen 218, isoliert. Auf der Seite der ersten Druckplatte 18 liegt daher die Lasche 52 auf dem Potential der ersten Druckplatte 18, während die Ösen 226 der Ösenschrauben 222 auf dem Potential der zweiten Druckplatte 20 liegen. Es sind somit beide Pole auf der gleichen Stirnseite des Zellblocks 1e zugänglich.

Über die Lasche 52 der zweiten Druckplatte 20 können weitere Zellblöcke in Reihe oder parallel angeschlossen werden, wie es bereits beschrieben wurde. Auf diese Weise ist es möglich, über die Laschen 52 einer ersten Druckplatte 18 eines ersten Zellblocks und einer zweiten Druckplatte 20 eines letzten Zellblocks in der Schaltung eine Gesamtspannung abzunehmen, während über die Lasche 52 und die Ösen 226 der Ösenschrauben 222 auf der Seite der ersten Druckplatte 18 des ersten Zellblocks eine Teilspannung abgenommen werden kann.

Es versteht sich, dass nicht alle Spannschrauben auf das Potential der zweiten Druckplatte 20 gelegt werden müssen. Es genügt, wenn eine oder zwei der Spannschrauben als Ösenschraube 222 ausgebildet und mit der zweiten Druckplatte 20 verbunden sind, während die anderen Spannschrauben in bereits beschriebener Weise gegen beide Druckplatten 18, 20 isoliert sind.

Ein Potentialausgleich auf der Seite der isolierten Schraubenenden wird erreicht, wenn die Schraubenenden dort verbunden werden, etwa durch ein Verbindungsblech, das unter den Schraubenköpfen mit verschraubt wird, oder dergleichen.

In Fig. 52 ist ein Zellblock in einer siebenundzwanzigsten Ausführungsform der Erfindung gezeigt, bei welchem die Spannschrauben ebenfalls als Anschlusspol verwendet werden.

Fig. 52 zeigt einen Zellblock 1f dieser Ausführungsform in einer geschnittenen Draufsicht. Die Schnittebene liegt dabei in der Ebene zweier Spannschrauben. Der grundsätzliche Aufbau des Zellblock 1f entspricht bis auf die Art der Verschraubung demjenigen des Zellblocks 1e der sechsundzwanzigsten Ausführungsform.

Die Spannschrauben sind in dieser Ausführungsform einfache Zylinderschrauben, die in Innengewinde in der zweiten Druckplatte 20 geschraubt sind und auf diese Weise einen zuverlässigen elektrischen Kontakt mit dieser aufweisen. Auf der Kopfseite sind die Zylinderschrauben 22 über Isolierbuchsen 64 gegenüber der ersten Druckplatte 18 isoliert und zentriert. Ferner sind Lochwinkel 228 zwischen den Schraubenköpfen und den Isolierbuchsen 64 mitverschraubt. Die Lochwinkel sind abgewinkelte Bleche aus elektrisch leitfähigem Material, die in einem Schenkel eine Durchgangsbohrung zur Aufnahme eines Schraubenschafts und in dem anderen Schenkel eine Durchgangsbohrung zur Aufnahme eines Anschlussbolzens (nicht näher dargestellt) aufweist.

Auf diese Weise befinden sich die Ösenschrauben 222 in elektrischem Kontakt mit der zweiten Druckplatte 20, sind aber gegenüber der ersten Druckplatte 18 und allen stromführenden Teilen im Inneren des Zellblocks 1f, insbesondere gegenüber den Stromableitern der Zellen 2 und den Zellkontaktierungselementen 218, isoliert. Auf der Seite der ersten Druckplatte 18 liegt daher die Lasche 52 auf dem Potential der ersten Druckplatte 18, während die Lochwinkel 228 auf dem Potential der zweiten Druckplatte 20 liegen. Es sind somit beide Pole auf der gleichen Stirnseite des Zellblocks 1f zugänglich.

In dieser Ausführungsform weist die zweite Druckplatte 20 keine Lasche auf, um eine möglichst geringe Baulänge zu verwirklichen. Zur Verschaltung mit weiteren Zellblöcken können die Druckplatten 18, 20 aber auf einer oder beiden lateralen Seiten abragende Laschen aufweisen (in Fig. 18 ist im Zusammenhang mit der neunten Ausführungsform jeweils eine seitlich abragende Lasche 52c gezeigt).

In einer achtundzwanzigsten Ausführungsform, die in Fig. 53 dargestellt ist, sind mehrere Zellblöcke miteinander in Reihe verbunden. Es sei für die nachstehende Erläuterung definiert, dass die erste Druckplatte 18 jedes Zellblocks stets einen Plus-Pol des Zellblocks darstellt und die zweite Druckplatte 20 jedes Zellblocks stets einen Minus-Pol des Zellblocks darstellt.

Ein erster Zellblock 1 g dieser Ausführungsform ist grundsätzlich so aufgebaut, wie es in Fig. 51 oder 52 gezeigt ist. Bei dieser Ausführungsform werden auf der isolierten Seite Zylinderschrauben 22 und Lochwinkel 228 wie in Fig. 52 und auf der kontaktierten Seite Muttern 24 und Kontaktscheiben 224 wie in Fig. 51 verwendet. Es sind also die Schrauben 22 mit dem Minus-Pol des Zellblocks verbunden, während sie von dem Plus-Pol elektrisch getrennt sind. Es werde weiter davon ausgegangen, dass nur ein Paar von Schrauben 22, vorzugsweise das oberste, kontaktierend montiert ist, während ein anderes Schraubenpaar bzw. andere Schraubenpaare gegenüber allen Polen isoliert sind.

Beliebig viele weitere Zellblöcke 1 h sind anders als der erste Zellblock 1 g aufgebaut. Und zwar sind alle Schrauben gegenüber allen Polen (d.h., allen Druckplatten 18, 20) des jeweiligen Zellblocks 1 h isoliert (also über Isolierbuchsen 64 verschraubt). Bei einem Schraubenpaar ist jeweils unter den Schraubenköpfen und unter den Muttern ein Lochwinkel 228 mit verschraubt, und diese Schrauben sind zwecks Potentialausgleichs über geeignete Mittel, hier etwa Potentialausgleichsplatten 230, miteinander verbunden.

Zur Verwirklichung einer Reihenschaltung sind, wie es in Fign. 8 und 9 beispielhaft gezeigt ist, Plus-Pole und Minus-Pole der Zellblöcke 1 g, 1 h, 1 h in Reihe miteinander verbunden. Ferner werden die Lochwinkel auf der positiven Seite jeweils mit den Lochwinkeln auf der negativen Seite miteinander verbunden. Auf diese Weise wird das Potential des Minus-Pols des ersten Zellblocks 1 g über Schraubenpaare dieses und aller weiterer Zellblöcke 1 h bis auf die Plus-Seite des letzten Zellblocks 1 h geführt. So liegen auf der gleichen Stirnseite des letzten Zellblocks 1 h sowohl der Plus-Pol (über die Lasche 52 der ersten Druckplatte 18 dieses Zellblocks) als auch der Minus-Pol (über die Lochwinkel 228) der Gesamtanordnung an und können direkt nebeneinander abgegriffen werden.

In einer Abwandlung der achtundzwanzigsten Ausführungsform können auf analoge Weise auch Zwischenpotentiale als Vielfache der Klemmenspannung eines Zellblocks abgegriffen werden. So könnte etwa ein weiteres Schraubenpaar des mittleren Zellblocks 1 h mit der zweiten Druckplatte 20 dieses Zellblocks verbunden sei und das dort anliegende Potential bis auf die Seite der ersten Druckplatte 18 des letzten (in der Zeichnung linken) Zellblocks geführt werden. Ferner könnte das an der zweiten Druckplatte 20 des letzten (linken) Zellblocks 1 h über ein drittes Schraubenpaar von der zweiten Druckplatte 20 dieses Zellblocks auf die Seite von dessen erster Druckplatte 18 geführt werden. Auf diese Weise könnten auf der Seite der ersten Druckplatte 18 des letzten Zellblocks die Klemmenspannung des letzten Zellblocks, die addierten Klemmenspannungen des letzten und vorletzten, und die addierten Klemmenspannungen des ersten bis letzten Zellblocks abgegriffen werden.

In einer weiteren Abwandlung der achtundzwanzigsten Ausführungsform wird immer nur eine Schraube eines Zellblocks zur Transportierung eines Potentials verwendet.

Es ist darauf hinzuweisen, dass bei den Zellblöcken 1 g, 1 h der achtundzwanzigsten Ausführungsform auf einige der Lochwinkel 228 verzichtet werden könnte. Wenn jedoch alle stromführenden Schrauben Lochwinkel 228 tragen, trägt dies zu höherer Modularität und Flexibilität bei der Anschlusslage bei und vermeidet ein Ummontieren, wenn einmal anders angeschlossen werden soll, wenn also z.B. die Zellblöcke nicht nebeneinander, sondern hintereinander angeordnet werden sollen. Zur Schutz können die nicht verwendeten Lochwinkel Isolierkappen tragen.

In Fig. 54 ist ein Zellblock einer neunundzwanzigsten Ausführungsform von oben im Schnitt dargestellt.

Bei einem Zellblock 1 k nach dieser Ausführungsform verlaufen die Zylinderschrauben 22 oberhalb und unterhalb der Akkumulatorzellen 2a. Die Zellen 2a weisen einen als umlaufende Siegelnaht ausgebildeten, dünnen Randbereich 6 auf. An diesem Randbereich (Siegelnaht) 6 werden die Zellen 2a durch Rahmenelemente 12, 14, 16 gehalten. Insbesondere weist die Siegelnaht umlaufend eine im Wesentlichen konstante, wohldefinierte und bekannte Stärke auf.

Auf dem ersten Endrahmen 12 und dem letzten Endrahmen 16 liegt jeweils ein Druckrahmen 18, 20 auf, der über die Zylinderschrauben 22 beaufschlagt ist. Die Zwischenrahmen 14 weisen nicht nur an der Ober- und Unterseite (nicht näher dargestellt) Öffnungen 40, sondern auch an den lateralen Seiten Öffnungen 231 auf, die der Durchströmung mit einem Kühlmittel (i.A. Luft) dienen.

Die Zellen 2a können bis auf den dünnen Randbereich ansonsten wie beim Stand der Technik ausgeführt und kontaktiert sein (vgl. etwa Fig. 60). Sofern die Zellen 2a in den Randbereich integrierte Stromableiter aufweisen, kann eine innere Kontaktierung über Kontakthülsen oder dergleichen erfolgen, wie es im Rahmen dieser Anmeldung beschrieben wurde. Eine Kontaktierung solcher Stromableiter kann auch von außen über gegebenenfalls in den Rahmenelementen ausgebildete Ausklinkungen wie die Ausklinkungen 42 in Fig. 1 und geeignete Kontaktierungsmittel erfolgen.

Eine dreißigste Ausführungsform der Erfindung wird nun unter Bezugnahme auf Fign. 55 bis 58 beschrieben. Dabei ist Fig. 55 eine geschnittene Ansicht eines Zellblocks dieser Ausführungsform von oben, ist Fig. 56 ist eine vergrößerte Ansicht einer Kontaktierungsklammer vom Zellblock aus gesehen, ist Fig. 57 eine entlang einer Linie LVII in Fig. 56 geschnittene Ansicht der Kontaktierungsklammer in Pfeilrichtung, und ist Fig. 58 eine entlang einer Linie LVIII in Fig. 56 geschnittene Ansicht der Kontaktierungsklammer in Pfeilrichtung.

Der Zellblock 1l nach dieser Ausführungsform ist im Wesentlichen aufgebaut wie der Zellblock 1 k der neunundzwanzigsten Ausführungsform. Wiederum verlaufen die Zylinderschrauben 22 oberhalb und unterhalb der Akkumulatorzellen 2b. Die Zellen 2b weisen eine umlaufende Siegelnaht 50 auf und werden an dieser Siegelnaht 50 durch Rahmenelemente 12, 14, 16 gehalten. Auf dem ersten Endrahmen 12 und dem letzten Endrahmen 16 liegt jeweils ein Druckrahmen 18, 20 auf, der über die Zylinderschrauben 22 beaufschlagt ist.

Die Zellen 2b weisen wie die Zellen 2 seitlich gegenüberliegend abragende Stromableiter 8, 10 auf, die über die Kontur der durch die Rahmenelemente 12, 14, 16 und Druckrahmen 18, 20 definierten Kontur hinausragen. Insbesondere ragen die Stromableiter 8, 10 der Zellen 2b seitlich zwischen zwei Rahmenelementen 12, 14, 16 heraus. Die Zellen 2b sind in üblicher Weise mit wechselsinniger Polarität in Stapelrichtung gestapelt. D.h., an einer Seite des Zellblocks 1l ragen abwechselnd Stromableiter 8 einer ersten Polarität (z.B. Plus) und Stromableiter 10 einer zweiten Polarität (z.B. Minus) heraus.

Zur Verwirklichung einer Reihenschaltung werden nun immer zwei aufeinander folgende Stromableiter 8, 10 mit Hilfe einer Kontaktierungsklammer 232 verbunden. Die Kontaktierungsklammern 232 weisen jeweils einen Isolierkörper 233 und zwei Kontaktfedern 234 auf (von denen im Schnitt nur eine sichtbar ist). In Fig. 55 sind nur drei Kontaktierungsklammern 232 dargestellt; tatsächlich setzt sich aber die Anordnung der Kontaktierungsklammern 232 über die gesamte Länge des Zellblocks 1l fort.

Die erste und letzte der Zellen 2b sind über eine Endkontaktierungsklammer 236 mit der erste bzw. zweiten Druckplatte 18, 20 verbunden (in der Figur ist nur die Endkontaktierungsklammer 236 für die zweite Druckplatte 20 dargestellt). Die Endkontaktierungsklammern 236 weisen jeweils einen Isolierkörper 237 und zwei Kontaktfedern 238 auf (von denen im Schnitt nur eine sichtbar ist).

In Fign. 56 bis 58 ist eine der Kontaktierungsklammern 232 in den Einzelheiten dargestellt. Wie bereits erläutert weist die Kontaktierungsklammer 232 einen Isolierkörper 233 auf. Der Isolierkörper 233 ist ein langgestreckter Körper mit U-förmigem Querschnitt, der an den Stirnseiten geschlossen ist. Die Flanken des U-förmigen Querschnitts weisen eine größere Materialdicke als die Grundseite desselben auf. An den Flanken des Isolierkörpers 233 ist außen jeweils eine Ausklinkung 240 ausgebildet, wobei das Material stirnseitig belassen ist. In der Grundseite des U-förmigen Querschnitts ist eine durchgehende Öffnung 242 ausgebildet. Die Öffnung 242 und zwei aneinandergelegte Ausklinkungen 240 entsprechen in montierten Zustand den in den Zwischenrahmen 14 ausgebildeten Öffnungen 231.

An den Stirnseiten ist nach der Innenseite hin jeweils ein Vorsprung 244 ausgebildet. Die Vorsprünge 244 bilden mit dem U-Profil einen ebenfalls im Querschnitt U-förmigen Aufnahmeschlitz 245. In dem oberen und unteren Aufnahmeschlitz 245 ist jeweils eine obere bzw. untere Kontaktfeder 234a, 234b aufgenommen, die jeweils mittels einer Schraube 246 an dem jeweiligen Vorsprung 244 gesichert sind. Die Kontaktfedern 234a, 234b weisen jeweils einen U-förmigen Querschnitt mit geschwungenen Flanken auf. Die Kontaktfedern 234a, 234b sind jeweils ein wenig kürzer als die halbe Innenlänge der U-Profile abzüglich der Länge eines der Vorsprünge 244; so lassen sich die Kontaktfedern 234a, 234b zur Herstellung der Kontaktierungsklammer 232 leicht montieren. Dort, wo die Kontaktfedern 234a, 234b im eingebauten Zustand die Öffnung 242 im Isolierkörper 233 verdecken, sind Fenster 239 in die Kontaktfedern 234a, 234b eingearbeitet.

Wie in Fig. 55 gezeigt, sind die Kontaktierungsklammern 232 von außen auf jeweils zwei aufeinanderfolgende Stromableiter 8, 10 aufgesteckt. Dabei stützen sich die Stromableiter 8, 10 an den Flanken des U-Profils der Kontaktierungsklammer 232 ab und drücken die Kontaktfedern 234 zur Mittelebene der Kontaktierungsklammer 232 hin weg. Dabei bilden die Vorsprünge 244 oben und unten ein Widerlager. Hierdurch wird ein sicherer Kontakt hergestellt. (Abstände in der Zeichnung zwischen Stromableitern 8, 10 und den Kontaktfedern 234 einerseits und/oder den Flanken der Profile der Isolierkörper 233 andererseits dienen nur der deutlichen Darstellung.)

Die Endkontaktierungsklammern 236 unterscheiden sich von den Kontaktierungsklammern 232 darin, dass die Form ihres Isolierkörpers 237 in etwa einem in der Länge halbierten Isolierkörper 233 einer Kontaktierungsklammer 232 entspricht. Die Kontaktfedern 238 ragen also über den Isolierkörper 237 hinaus und sind einseitig so verlängert und in der Breite so ausgelegt, dass sie einen sicheren federnden Kontakt mit der jeweiligen Druckplatte 18, 20 herstellen.

Die Kontaktfedern 238 können auch mit Klemmschrauben an den Druckplatten 18, 20 angeklemmt sein.

In einer Abwandlung dieser Ausführungsform könnten Kontaktierungsklammer vorgesehen sein, die eine Mehrzahl von Kontaktabschnitten miteinander verbinden, um eine Parallelschaltung zu verwirklichen. Diese Kontaktierungsklammern, d.h., deren U-Profile sind entsprechend breiter, und es sind jeweils so viele Paare von Vorsprüngen 244 (und gegebenenfalls Öffnungen 242) ausgebildet, wie Verbindungen zwischen Zellen 2b herzustellen sind. In jedem durch die Vorsprünge 244 ausgebildeten Aufnahmeschlitz 245 ist eine Kontaktfeder aufgenommen und gesichert. D.h., die Kontaktierungsklammern werden jeweils so auf die Stromableiter 8, 10 aufgesetzt, dass diese von Schenkeln zweier nebeneinander angeordneter Kontaktfedern 234 paarweise umfasst werden. Zur Verwirklichung der beispielhaften Schaltung von Fig. 7 sind z.B. zwei Kontaktierungsklammern mit je fünf Kontaktfederpaaren 234 und zwei Endkontaktierungsklammern mit je einem zur Hälfte frei liegenden Kontaktfederpaar 238 zur Kontaktierung mit einer Druckplatte 18, 20 und zwei Kontaktfederpaaren 234 zur Kontaktierung zwischen Zellen vorgesehen.

In Fig. 59 ist ein Zellblock einer einunddreißigsten Ausführungsform der Erfindung in perspektivischer Draufsicht gezeigt.

Ein Zellblock 1 p dieser Ausführungsform weist eine Mehrzahl von Akkumulatorzellen (nicht sichtbar), die zwischen Rahmenelementen gehalten und über Kontaktierungselemente in geeigneter Weise verschaltet sind, wie es in dieser Anmeldung beschrieben wurde. Im Unterschied zu vorherigen Ausführungsformen sind hier keine Zugschrauben vorhanden. Vielmehr wird der gesamte Stapel von einer Manschette zusammengehalten, die aus zwei Halbmanschetten 248 gebildet wird. Die Halbmanschetten sind jeweils U-förmig gebogene Bleche oder in sonstiger Weise in U-Form gebrachte Flachkörper mit rechtwinklig nach außen abragenden Flanschabschnitten 250. In den Flanschabschnitten 250 der beiden Halbmanschetten 248 sind gegenüberliegend fluchtende Durchgangsbohrungen 252 ausgebildet. Mit den Durchgangsbohrungen 252 sind die Halbmanschetten 248 miteinander verschraubt (nicht näher dargestellt). Die Flanschabschnitte der beiden Halbmanschetten 248 weisen im fest verschraubten Zustand einen vorgegebenen Mindestabstand voneinander auf. Dadurch ist gewährleistet, dass der Zellstapel durch den Druck der Manschette fest verspannt wird.

Es versteht sich, dass bei dieser Ausführungsform keine Kontaktierungs- oder Isolationselemente verwendet werden können, die irgendwelcher Schrauben als Halterung oder Zentrierung bedürfen. In den vorherigen Ausführungsformen etwa als Hülsen beschriebene Kontaktverbindungselemente können als Vollkörper ausgeführt sein und somit eine größere Kontaktfläche aufweisen. Isolationsprobleme mit langen, den ganzen Stapel durchlaufenden Zylinderschrauben können nicht auftreten.

Die Halbmanschetten 248 sind gegenüber Druckplatten isoliert, um einen Kurzschluss zu vermeiden. Die Halbmanschetten 248, insbesondere die Übergänge zu den Flanschabschnitten 250, sind ferner ausreichend steif ausgebildet, um dem Zug der Verbindungsmittel zu widerstehen.

In einer Abwandlung dieser Ausführungsform bilden die Halbmanschetten 248 selbst die Pole. D.h., die erste und letzte Zelle sind jeweils direkt mit einem der Halbmanschetten 248 kontaktiert. Zur Vermeidung eines Kurzschlusses sind die Verschraubungselemente an den Flanschabschnitten auf geeignete Weise isoliert; die Rahmenelemente bestehen ohnehin aus einem elektrisch isolierenden Material. Separate Druckplatten entfallen. Zum Anschluss an ein Versorgungsnetz oder mit weiteren Zellblöcken 1 p können die Flanschabschnitte 250 oder die Stirnseiten der Halbmanschetten 248 ihrerseits Laschen aufweisen.

Vorstehend wurde die Erfindung anhand bevorzugter Ausführungsformen beschrieben. Es versteht sich, dass die konkreten Ausführungsformen die beanspruchte Erfindung zwar illustrieren und exemplifizieren, aber nicht einschränken. Es versteht sich auch, dass die Merkmale verschiedener Ausführungsformen kombiniert und/oder ausgetauscht werden können, um die jeweiligen Vorteile auszunutzen.

In den vorstehenden Ausführungsbeispielen wurden Elektroenergie-Speichervorrichtungen vom Typ eines Lithium-lonen-Sekundärspeichers (Akkumulators) beschrieben. Die Erfindung ist jedoch auf jeden Typ Form von Elektroenergie-Speichervorrichtungen anwendbar. Sie kann auf Primärspeicher (Batterien) wie auf Sekundärspeicher angewendet werden. Ebenso ist die Art der elektrochemischen Reaktion zur Speicherung und Abgabe elektrischer Energie nicht auf Lithium-Metalloxidreaktionen beschränkt, sondern können die einzelnen Speicherzellen auf jeder elektrochemischen Reaktion beruhen.

Vorstehend wurden einige Ausführungsformen beschrieben, bei denen vier oder sechs Zylinderschrauben als Spannelemente verwendet werden. Es ist jedoch dort, wo sechs Zylinderschrauben beschrieben wurden, auch möglich, vier Zylinderschrauben zu verwenden, und meist auch umgekehrt.

Mit den Zylinderschrauben können zur Kompensation der thermischen Ausdehnung anstelle der Scheiben 25 oder zusätzlich dazu Tellerfedern oder Tellerfederpakete eingesetzt werden.

Das in den Ausführungsformen beschriebene Kühlfluid kann Luft, Wasser (insbesondere deionisiertes Wasser), Öl oder ein anderer geeigneter Wärmeträger sein. Es kann in einem geeignet ausgebildeten und ausgelegten Kühlkreislauf strömen und zur Temperierung der Zellblöcke bzw. der einzelnen Zellen verwendet werden. Es ist denkbar, einen Phasenübergang, etwa eine Verdampfung, des Wärmeträgermediums auszunutzen. Alternativ können Feststoffe wie etwa Metallplatten als Wärmeträger eingesetzt werden.

Nachstehend sind noch einmal einige wesentlichen Merkmale der Erfindung zusammengefasst. Dies dient der Übersicht.

Eine Elektroenergie-Speichervorrichtung weist eine Mehrzahl von Speicherzellen flacher Form auf, wobei mehrere Speicherzellen in einer Stapelrichtung zu einem Zellblock gestapelt sind und durch eine Spannvorrichtung zwischen zwei Andruckplatten zusammengehalten werden, und wobei die Speicherzellen innerhalb des Zellblocks parallel und/oder in Reihe miteinander verschaltet sind. Jede Speicherzelle wird in ihrem Randbereich zwischen zwei Rahmenelementen gehalten.

Nach einem anderen Gesichtspunkt weist jede Speicherzelle in ihrem Randbereich Stromableiter auf und erfolgt eine elektrische Kontaktierung zwischen Stromableitern aufeinanderfolgender Speicherzellen mittels Kraftschluss über die Spannvorrichtung. Bei diesem Gesichtspunkt können die Rahmenelemente durch Stützelemente ersetzt sein, die aber höhere Festigkeit besitzen.

Die Rahmenelemente sind aus elektrisch isolierendem Material wie etwa Kunststoff hergestellt, und in diese sind elektrische Kontaktelemente zur Verschaltung der Zellen integriert. (Alle Merkmale gelten analog für Stützelemente, die zur höheren Festigkeit z.B. aus Keramik oder Glas hergestellt sind.)

Die Spannelemente (wie Zuganker etc.) werden gleichzeitig zur mechanischen und zur elektrischen Verbindung eines Zellblocks aus Pouchzellen und Rahmen verwendet.

Ableiter, die daran anschließenden Kontaktelemente und/oder die daran anschließenden Isolations- oder Halteelemente (d.h. auch die Rahmen selbst) sind mit einer geometrischen Codierung versehen, die eine Verpolung der Zellen ausschließt.

An den Ableitern sind Kühlkörper befestigt, welche die Wärmeübergangsfläche zum Kühlfluid vergrößern.

Die Zelle ist seitlich (radial) durch den Rahmenelemente ausgerichtet und fixiert. Die Rahmen und/oder Zellen können optional zusätzlich mit Schaum etc. beschichtet sein.

Die Toträume, die dadurch entstehen, dass die Ableiter nicht die gesamte Länge einer Seitenkante der rechteckigen Zelle benötigen, werden für die bauraumneutrale Anordnung von Befestigungselementen verwendet. Diese greifen in der Regel in Aussparungen oder Ausklinkungen der Verpackung der Zelle.

Die Rahmenelemente sind so ausgeführt, dass diese bei Aneinanderreihung einen oder mehrere wenigstens teilweise geschlossene (Kabel)-kanäle bilden.

Die Zellblöcke innerhalb einer oder verschiedenen Batterien sind jeweils aus Standardelementen (Rahmen, Endplatten, Kontaktelementen, ...) aufgebaut, deren Anzahl abhängig ist von den Eigenschaften (Spannung, Kapazität) der zu verbauenden Zellen.

Die mit den Einzelzellen direkt elektrisch verbundene Elektronik (Zellspannungs- und Temperaturüberwachung, Balancing, ...) ist zellblockfest angeordnet.

Die Zellblöcke sind an ihren elektrischen Polen im Gehäuse befestigt, bzw. untereinander elektrisch verbunden.

### Liste der Bezugszeichen:

- 1: Zellblock
- 1a,b,c,d,e,f,g,h,k,l,p: Zellblock (bestimmte Ausführungsformen)
- 2: Akkumulatorzelle
- 2a,b,c: Akkumulatorzelle (bestimmte Ausführungsformen)
- 4: aktiver Teil
- 6: Randbereich (Siegelnaht)
- 8, 10: Stromableiter
- 12, 16: Endrahmen
- 14: Zwischenrahmen
- 18, 20: Druckplatte
- 22: Zylinderschraube
- 24: Mutter
- 26: Isolierscheibe
- 28: kleines Durchgangsbohrung in 12-16
- 29: großes Durchgangsbohrung in 12-16
- 30: Durchgangsbohrung in 8, 10
- 32: Kontakthülse
- 34: Passbohrung in 12-16
- 34a,b: Passbohrung in 14
- 36: Passbohrung in 8, 10
- 38: Zentrierstift
- 40: Schlitz in 14
- 42: Ausklinkung in 12-16
- 44: Öffnung
- 46: Verstrebung
- 48: Abschrägung
- 50: Falz von 6
- 52: Lasche
- 52a,b: Laschen (dritte Ausführungsform)
- 52c: Lasche (neunte Ausführungsform)
- 54: Bohrung in 52
- 56: Luftspalt
- 58: Verbindungsschraube
- 60: Verbindungsblech
- 62: Steuergerät
- 64: Isolierbuchse
- 66: Signalkabel
- 68: Kanal
- 70: Zugangsöffnung
- 72: zweites Steuergerät
- 74: Einkerbung in 14, 16
- 76, 78: Anschlusselement
- 80: Bohrung für Innenleitung
- 82: Einsenkung
- 84: Fase
- 86: Druckfläche
- 88: Verbindungsmutter
- 90: Distanzhülse
- 92: Verdickung
- 94: elastisches Kissen
- 96: Kontaktleiste
- 98: Durchgangsbohrung in 96
- 100: Druckfläche an 96
- 102: Ausklinkung
- 104: Rippe
- 106: Bucht
- 108: Steg
- 110: Passfläche
- 112: Freischnitt
- 114: Kontaktierungsriegel Plus-auf-Plus
- 116: Isolierhülse
- 118: Kodierstift
- 120a,b: Kodierbohrung in 8, 10
- 121: Durchgangsbohrung in 8, 10
- 122: Kontaktierungsriegel Minus-auf-Minus
- 124: Isolationsriegel
- 126: Halbriegel Plus
- 128: Grundplatte Plus
- 129: Durchgangsbohrung in 128, 136
- 130: Passbohrung
- 131a: Sackbohrung in 128, 150
- 131b: Sackbohrung in 128, 150
- 132: Pass-Stift
- 134: Halbriegel Minus
- 136: Grundplatte Minus
- 137: Platte
- 138: Durchgangsbohrung in 124
- 140: Kodierbohrung in 124
- 142: Ausnehmung
- 144: Freifläche
- 146a: Kodierbohrung in 128, 150
- 146b: Kodierbohrung in 136, 150
- 148: Isolations- und Zentrierriegel
- 150: Grundkörper
- 152: Erhebung
- 154: Durchgangsbohrung in 150
- 156: Einsenkung
- 158: Abstandshalbplatte-Plus
- 160: Abstandshalbplatte-Minus
- 162: Durchgangsbohrung
- 164: Kontakthülse
- 166: Hohlzylinder
- 168: Einsenkung
- 170: Doppelzapfenmanschette
- 172: Hohlzylinder
- 174: Abdrehung
- 176: Innenmanschette
- 178: Einzapfenmanschette
- 180: Hohlzylinder
- 182: Isolierhülse
- 184: Hohlzylinder
- 186: Totbereich
- 188: Durchgangsbohrung
- 190: Ausklinkung
- 192: Distanzstück
- 194: Ausklinkung
- 196a,b: Distanzstück
- 198: Zapfen
- 199: Gegenbohrung
- 200: Prägung
- 202: Distanzstück
- 204, 206: Reliefstruktur
- 208: Durchgangsbohrung
- 210: Isolierhülse
- 212: Kontaktierungshülse
- 214: Einsenkung
- 216: Abdrehung (Zapfen)
- 218: Zellkontaktierungselement
- 220: Zellisolationselement
- 222: Ösenschraube
- 224: Kontaktscheibe
- 226: Öse
- 228: Lochwinkel
- 230: Durchgangsbohrung
- 231: laterale Öffnung
- 232: Kontaktierungsklammer
- 233: Isolierkörper
- 234: Kontaktfeder
- 236: Endkontaktierungsklammer
- 237: Isolierkörper
- 238: Kontaktfeder
- 239: Fenster
- 240: Ausklinkung
- 242: Öffnung
- 244: Vorsprung
- 245: Aufnahmeschlitz
- 246: Schraube
- 248: Halbmanschette
- 250: Spannlasche
- 252: Durchgangsbohrung

- m: Anzahl der Zwischenrahmen 14 in einem Zellblock
- n: Anzahl der Zellen 2 in einem Zellblock
- t: Falzdicke
- x1,x2: Abstand der Passbohrungen 34a, 34b, der Kodierbohrungen 120a,120b, 140 und Kodierstifte 118

- H: Rückseite (hintere Seite)
- L: linke laterale Seite
- R: rechte laterale Seite
- S: Stapelrichtung
- V: Vorderseite

Es wird ausdrücklich darauf hingewiesen, dass die vorstehende Bezugszeichenliste integraler Bestandteil der Beschreibung ist.

## Patentansprüche

1. Elektroenergie-Speichervorrichtung, welche eine Mehrzahl von Speicherzellen (2) flacher Form aufweist, wobei mehrere Speicherzellen (2) in einer Stapelrichtung zu einem Zellblock (1) gestapelt sind und durch eine Spannvorrichtung zwischen zwei Andruckplatten (18, 20) zusammengehalten werden, und wobei die Speicherzellen (2) innerhalb des Zellblocks (1) parallel und/oder in Reihe miteinander verschaltet sind und wobei jede Speicherzelle (2) in ihrem Randbereich (6) zwischen zwei Rahmenelementen (12, 14, 16) gehalten wird, wobei die Elektroenergie-Speichervorrichtung eine Zentriereinrichtung (34, 36, 38, 116, 121, 140), welche die relative Lage der Speicherzellen (2) und der Rahmenelemente (12, 14, 16) quer zur Stapelrichtung (S) festlegt, und eine Verpolungsschutzeinrichtung (95, 118, 120a, 120b, 138, 140a, 140b), welche eine Einbaurichtung der Speicherzellen (2) kodiert, aufweist, **dadurch gekennzeichnet, dass** die Verpolungsschutzeinrichtung (95, 118, 120a, 120b, 138, 140a, 140b) derart verwirklich ist, dass die Zentriereinrichtung (34, 36, 38, 116, 121, 140) unsymmetrisch ausgebildet ist.

2. Elektroenergie-Speichervorrichtung gemäß Anspruch 1, **dadurch gekennzeichnet, dass** die Zentriereinrichtung (34, 36, 38, 116, 121, 140) in Stirnflächen der Rahmenelemente (12, 14, 16) angeordnete Vorsprünge umfasst, die in passende Vertiefungen im Randbereich der Speicherzellen (2) eingreifen.

3. Elektroenergie-Speichervorrichtung gemäß Anspruch 2, **dadurch gekennzeichnet, dass** die Vorsprünge vorzugsweise Stifte, Noppen, Nasen oder dergleichen sind und die Vertiefungen in den Kontaktbereichen oder in den nicht leitenden Abschnitten der Randbereiche angeordnet sind.

4. Elektroenergie-Speichervorrichtung gemäß Anspruch 2 oder 3, **dadurch gekennzeichnet, dass** die Vertiefungen Durchgangsbohrungen oder Ausstanzungen sind.

5. Elektroenergie-Speichervorrichtung gemäß Anspruch 1, **dadurch gekennzeichnet, dass** die Zentriereinrichtung (34, 36, 38, 116, 121, 140) Prägung im Randbereich der Speicherzellen (2) umfasst, die in ein passendes Relief der Rahmenelemente (12, 14, 16) greifen.

6. Elektroenergie-Speichervorrichtung gemäß Anspruch 1, **dadurch gekennzeichnet, dass** die Zentriereinrichtung (34, 36, 38, 116, 121, 140) derart verwirklicht ist, dass Zugstäbe (22) auf Passung durch Bohrungen im Randbereich der Speicherzellen (2) mit Ausnahme der Kontaktbereiche verlaufen.

7. Elektroenergie-Speichervorrichtung gemäß Anspruch 1, **dadurch gekennzeichnet, dass** die Zentriereinrichtung (34, 36, 38, 116, 121, 140) derart verwirklicht ist, dass sich die Speicherzellen (2) quer zur Stapelrichtung (S) gegen die Rahmenelemente (12, 14, 16) abstützen.

8. Elektroenergie-Speichervorrichtung gemäß Anspruch 1, **dadurch gekennzeichnet, dass** jede Speicherzelle (2) einen aktiven Teil (4) aufweist, in welchem eine zur Aufnahme und Abgabe elektrischer Energie mittels einer elektrochemischen Reaktion ausgelegte und angepasste Struktur angeordnet ist, und der Randbereich (6) den aktiven Teil (4) umgibt, wobei der aktive Teil (4) eine größere Dicke als der Randbereich (6) aufweist, und dass die Zentriereinrichtung (34, 36, 38, 116, 121, 140) derart verwirklicht ist, dass sich die Speicherzellen (2) mit dem dickeren aktiven Abschnitt quer zur Stapelrichtung (S) gegen die Rahmenelemente (12, 14, 16) abstützen.

9. Elektroenergie-Speichervorrichtung gemäß Anspruch 7 oder 8, **dadurch gekennzeichnet, dass** als Zentriereinrichtung (34, 36, 38, 116, 121, 140) zwischen den Rahmenelementen (12, 14, 16) und den Speicherzellen (2) ein elastisches Element, insbesondere Schaumstoff, zwischengeschaltet ist, welches vorzugsweise direkt auf die Rahmenelemente (12, 14, 16) gespritzt ist.

10. Elektroenergie-Speichervorrichtung gemäß einem der Ansprüche 1 bis 9, **dadurch gekennzeichnet, dass** die Vorsprünge und Vertiefungen bzw. die Prägungen und Gegenreliefs auf der Seite eines Kontaktabschnitts (8, 10) in größerem Abstand angeordnet oder in anderer Form oder Größe ausgebildet sind als auf der Seite des anderen Kontaktabschnitts (8, 10).

11. Elektroenergie-Speichervorrichtung gemäß einem der Ansprüche 1 bis 10, **dadurch gekennzeichnet, dass** in einem freien Raum zwischen benachbarten Speicherzellen (2) Federelemente angeordnet sind, welche die Speicherzellen (2) in Stapelrichtung (S) elastisch gegeneinander abstützen, und dass die Federelemente an den Speicherzellen (2) auf einer der Flachseiten fest angebracht sind und dass die Verpolungsschutzeinrichtung (95, 118, 120a, 120b, 138, 140a, 140b) derart verwirklicht ist, dass die Federelemente auf beiden Flachseiten der Speicherzellen (2) und je nach gewünschter Polrichtung mehrerer Speicherzellen (2) zueinander auf der ein und dem selben Kontaktabschnitt (8, 10) zugeordneten Hälfte der Flachseiten oder auf unterschiedlichen Kontaktabschnitten (8, 10) zugeordneten Hälften der Flachseiten angeordnet sind.
